# EUROPEAN PATENT SPECIFICATION

(11) **EP 3 120 187 B1**
(45) Date of publication and mention of the grant of the patent: **20.10.2021**
(21) Application number: 15764835.3
(22) Date of filing: 19.03.2015
(51) Int. Cl.: G02F 1/1335, F21V 8/00, G02B 30/27

(54) **DIRECTIONAL BACKLIGHT**
DIREKTIONALE RÜCKBELEUCHTUNG
RÉTROÉCLAIRAGE DIRECTIONNEL

(30) Priority: 21.03.2014 US 201461968935 P
(43) Date of publication of application: 25.01.2017
(60) Divisional application: 21194285.9
(73) Proprietor: RealD Spark, LLC, Beverly Hills, CA 90212 (US)
(72) Inventor: WOODGATE, Graham J., Beverly Hills, California 90210 (US); HARROLD, Jonathan, Beverly Hills, California 90210 (US); ROBINSON, Michael G., Beverly Hills, California 90210 (US)
(74) Representative: J A Kemp LLP
(86) International application number: PCT/US2015/021583
(87) International publication number: WO 2015/143227

(56) References cited:
- JP-A- 2013 015 619
- US-A1- 2009 040 426
- US-A1- 2012 062 991
- US-A1- 2012 127 573
- US-A1- 2013 050 452
- US-A1- 2013 307 946
- US-A1- 2013 328 866
- None

## Description

This disclosure generally relates to illumination of light modulation devices, and more specifically relates to light guides for providing large area illumination from localized light sources for use in 2D, 3D, and/or autostereoscopic display devices.

Spatially multiplexed autostereoscopic displays typically align a parallax component such as a lenticular screen or parallax barrier with an array of images arranged as at least first and second sets of pixels on a spatial light modulator, for example an LCD. The parallax component directs light from each of the sets of pixels into different respective directions to provide first and second viewing windows in front of the display. An observer with an eye placed in the first viewing window can see a first image with light from the first set of pixels; and with an eye placed in the second viewing window can see a second image, with light from the second set of pixels.

Such displays have reduced spatial resolution compared to the native resolution of the spatial light modulator and further, the structure of the viewing windows is determined by the pixel aperture shape and parallax component imaging function. Gaps between the pixels, for example for electrodes, typically produce non-uniform viewing windows. Undesirably such displays exhibit image flicker as an observer moves laterally with respect to the display and so limit the viewing freedom of the display. Such flicker can be reduced by defocusing the optical elements; however such defocusing results in increased levels of image cross talk and increases visual strain for an observer. Such flicker can be reduced by adjusting the shape of the pixel aperture, however such changes can reduce display brightness and can include addressing electronics in the spatial light modulator.

As an alternative to spatially multiplexed displays, temporally multiplexed displays may comprise directional backlights such as described in US-2012/127573, on which the two part form of claim 1 is based. Such temporally multiplexed displays can undesirably provide cross talk due to scatter from components arranged to achieve high spatial and angular uniformity from the waveguide components in the backlight. Further fast switching spatial light modulators are required, increasing cost and complexity. Temporal cross talk in fast switching spatial light modulators can further degrade image cross talk. In 2D operation, such directional backlights may also achieve high efficiency of illumination and high luminance in comparison to conventional wide angle backlights. It may be desirable to reduce the cross talk of autostereoscopic displays using directional backlights while maintaining advantages of high efficiency and brightness in 2D modes of operation.

US-2013/0050452 discloses a directional display device using a polarization-sensitive beam deflection sub-system to deflect light into left and right eye viewing positions, which may be used in conjunction with either a parallax barrier or a directional backlight of a similar type to that described in US-2012/127573.

According to a first aspect of the present invention, there is provided a directional display device comprising: a directional backlight comprising a waveguide comprising first and second, opposed guide surfaces for guiding input light along the waveguide, and an array of light sources arranged to generate the input light at different input positions in a lateral direction across the waveguide, wherein the second guide surface is arranged to deflect light guided through the waveguide out of the waveguide through the first guide surface as output light, and the waveguide is arranged to direct the output light into optical windows in output directions that are distributed in a lateral direction in dependence on the input position of the input light; a transmissive spatial light modulator comprising an array of pixels arranged to receive the output light from the waveguide and to modulate it to display an image; and, in series with the spatial light modulator, a parallax element arranged to direct light from pixels of the spatial light modulator into viewing windows.

By way of comparison with parallax barrier displays, directional backlights can offer high resolution and reduced thickness. However, it has been appreciated that in order to achieve desirable characteristics for display use, substantial reductions in image cross talk can be achieved by combining the optical window output of a directional backlight with the viewing windows of a spatially multiplexed display comprising a transmissive spatial light modulator and a parallax element. Such a display achieves increased comfort for autostereoscopic display use and reduced ghosting between images of a dual view display system.

High image contrast and visibility can be achieved for use in high illuminance environments such as outdoors. For a required display luminance, reduced display power consumption can be provided in comparison to non-directional backlights for autostereoscopic and 2D wide angle modes of operation. High spatial and angular uniformity can be achieved in wide angle and directional modes of operation.

The parallax element may be a parallax barrier or may be a lenticular array. The lenticular array may be a liquid crystal lenticular array. The parallax element may be controllable to select the position of the viewing windows. The parallax element is a liquid crystal barrier element array. The parallax element may be a parallax barrier comprising an array of barrier elements that are controllable to block or transmit light, and thereby to select the position of the viewing windows. The parallax element may be a graded index liquid crystal lenticular array. A directional display device comprising a liquid crystal lenticular array may further comprise a polarization switching element arranged to switch at least part of the liquid crystal lenticular array between transmitting and lensing modes of operation.

The optical quality of the viewing windows for a directional backlight display can be provided for off-axis viewing positions, and switchable 2D-3D operation may be obtained.

The optical windows provided by the directional backlight and the viewing windows provided by the parallax element may extend at an acute non-zero angle relative to each other. Said acute non-zero angle may be an angle that in a range from 25 to 65 degrees, from 30 to 60 degrees, from 35 to 55 degrees, or from 40 to 50 degrees.

A display that can provide efficient autostereoscopic operation in landscape and portrait orientations may be achieved.

The parallax element and the spatial light modulator may cooperate to produce viewing windows having a lateral window luminance distribution that is non-uniform, and the directional backlight may be arranged to produce optical windows having a lateral window luminance distribution that is non-uniform and compensates for the non-uniformity of the lateral window luminance distribution of the viewing windows.

The directional backlight may further comprise a transmission element disposed over the light sources and having a transmittance that varies in a lateral direction to provide the non-uniform lateral window luminance distribution of the optical windows produced by the directional backlight.

Display flicker for an observer moving with respect to the display may be reduced, while achieving desirable levels of image cross talk.

The first guide surface may be arranged to guide light by total internal reflection and the second guide surface may comprise a plurality of light extraction features oriented to direct light guided through the waveguide in directions allowing exit through the first guide surface as the output light and intermediate regions between the light extraction features that are arranged to guide light through the waveguide. The second guide surface may have a stepped shape comprising facets, that are said light extraction features, and the intermediate regions. The directional backlight may further comprise a rear reflector comprising a linear array of reflective facets arranged to reflect light from the light sources that is transmitted through the plurality of facets of the waveguide, back through the waveguide to exit through the first guide surface into said optical windows. The light extraction features may have positive optical power in the lateral direction.

The first guide surface may be arranged to guide light by total internal reflection and the second guide surface may be substantially planar and inclined at an angle to direct light in directions that break that total internal reflection for outputting light through the first guide surface, and the display device may further comprise a deflection element extending across the first guide surface of the waveguide for deflecting light towards the normal to the first guide surface. The waveguide may further comprise a reflective end for reflecting input light back through the waveguide, the second guide surface being arranged to deflect light as output light through the first guide surface after reflection from the reflective end. The reflective end may have positive optical power in the lateral direction.

According to a second aspect of the present invention, there is provided a directional display apparatus comprising: a directional display device according to the first aspect of the present invention; and a control system arranged to control the light sources to direct light into optical windows for viewing by an observer. The control system may be further arranged to control the spatial light modulator. The directional display apparatus may be an autostereoscopic directional display apparatus wherein: the parallax element may be arranged to direct light from first and second sets of spatially multiplexed pixels into left and right eye viewing windows for viewing by left and right eyes of the observer; the control system may be arranged to control the spatial light modulator to display left and right eye images on the first and second sets of spatially multiplexed pixels; and the control system may be arranged to control the light sources to direct light into an optical window for viewing by both the left and right eyes of the observer.

Advantageously the directional backlight can provide illumination to the spatial light modulator and parallax element such that the respective optical and viewing windows may be arranged to cooperate, achieving improved cross talk characteristics. Pseudoscopic zones may be reduced or eliminated, and cross talk reduced.

The parallax element may be controllable to select the position of the viewing windows, and the control system may be further arranged to control the parallax element to direct light into the left and right viewing windows.

Advantageously autostereoscopic images may be provided to a moving observer from a wider range of viewing positions than may be provided by a temporally multiplexed display comprising a directional backlight alone.

The parallax element may be controllable to select the position of the viewing windows; the control system may be arranged to control the parallax element to direct light, in a temporally multiplexed manner, (a) from first and second sets of spatially multiplexed pixels into left and right eye viewing windows for viewing by left and right eyes of the observer, and (b) from the first and second sets of pixels into reversed right and left eye viewing windows for viewing by right and left eyes of the observer, the control system may be arranged to control the spatial light modulator to display, in a temporally multiplexed manner in synchronization with the control of the parallax element, (a) left and right eye images on the first and second sets of spatially multiplexed pixels, respectively, when light therefrom is directed into the left and right eye viewing windows, and (b) right and left eye images on the first and second sets of spatially multiplexed pixels, respectively, when light therefrom is directed into the reversed right and left eye viewing windows; and the control system may be arranged to control the light sources to direct light into an optical window for viewing by both eyes of the observer.

Advantageously autostereoscopic image resolution may be increased and pseudoscopic zones may be reduced or eliminated.

The parallax element may be arranged to direct light from first and second sets of spatially multiplexed pixels into left and right eye viewing windows for viewing by left and right eyes of the observer; the control system may be arranged to control the light sources to direct light, in a temporally multiplexed manner, into left and right eye optical windows for viewing by the left and right eyes of the observer; and the control system may be arranged to control the spatial light modulator to display, in a temporally multiplexed manner in synchronization with the control of the light sources, (a) a left eye image and a blank image on the first and second sets of pixels, respectively, when the light sources direct light into the left eye optical window, and (b) a blank image and a right eye image on the first and second sets of pixels, respectively, when the light sources direct light into the right eye optical window.

Advantageously cross talk from a temporally multiplexed display may be further reduced.

The parallax element may be controllable to select the position of the viewing windows, and the control system may be further arranged to control the parallax element to direct light into the left and right viewing windows.

The parallax element may be controllable to select the position of the viewing windows; wherein the control system may be arranged to control the parallax element to direct light, in a temporally multiplexed manner, (i) from first and second sets of spatially multiplexed pixels into left and right eye viewing windows, respectively, for viewing by left and right eyes of the observer, and (ii) from the first and second sets of spatially multiplexed pixels into right and left eye viewing windows, respectively, for viewing by right and left eyes of the observer; the control system may be arranged to control the light sources (i) while the parallax element directs light from the first set of pixels into the left eye viewing window and from the second set of pixels into the right eye viewing window, to direct light, in a temporally multiplexed manner, into left and right eye optical windows for viewing by the left and right eyes of the observer, and (ii) also while the parallax element directs light from the first set of pixels into the right eye viewing window and from the second set of pixels into the left eye viewing window, to direct light, in a temporally multiplexed manner, into left and right eye optical windows for viewing by the left and right eyes of the observer; and the control system may be arranged to control the spatial light modulator (i) while the parallax element directs light from the first set of pixels into the left eye viewing window and from the second set of pixels into the right eye viewing window, to display, in a temporally multiplexed manner in synchronization with the control of the light sources, (a) a left eye image and a blank image on the first and second sets of pixels, respectively, when the light sources direct light into the left eye optical window, and (b) a blank image and a right eye image on the first and second sets of pixels, respectively, when the light sources direct light into the right eye optical window, and (ii) while the parallax element directs light from the first set of pixels into the right eye viewing window and from the second set of pixels into the left eye viewing window, to display, in a temporally multiplexed manner in synchronization with the control of the light sources, (a) a blank eye image and a left image on the first and second sets of pixels, respectively, when the light sources direct light into the left eye optical window, and (b) a right image and a blank eye image on the first and second sets of pixels, respectively, when the light sources direct light into the right eye optical window.

Advantageously cross talk is reduced and autostereoscopic image resolution may be the same as the spatial light modulator.

The parallax element may be controllable to select the position of the viewing windows; the control system may be arranged to control the parallax element to direct light, in a temporally multiplexed manner, (i) from a first set of pixels, that is spatially multiplexed with a second set of pixels, into a left eye viewing window for viewing by a left eye of an observer, and (ii) from the first set of pixels into a right eye viewing window for viewing by a right eye of the observer; the control system may be arranged to control the light sources, in a temporally multiplexed manner in synchronization with the control of the parallax element, (i) into a left eye optical window for viewing by the left eye of the observer when the parallax element directs light from the first set of pixels into the left eye viewing window, and (ii) into a right eye optical window for viewing by the right eye of the observer when the parallax element directs light from the first set of pixels into the right eye viewing window; and the control system may be arranged to control the spatial light modulator to display, in a temporally multiplexed manner in synchronization with the control of the parallax element, (i) a left eye image and a blank image on the first and second sets of pixels, respectively, when the parallax element directs light from the first set of pixels into the left eye viewing window, and (ii) a right eye image and a blank image on the first and second sets of pixels, respectively, when the parallax element directs light from the first set of pixels into the right eye viewing window.

Advantageously cross talk arising from panel switching characteristics may be further reduced.

The parallax element may be controllable to select the position of the viewing windows, the control system may be arranged to control the parallax element to direct light, in a temporally multiplexed manner, (a) from all the pixels into a left eye viewing window for viewing by the left eye of the observer, and (b) from all the pixels into a right eye viewing window for viewing by the right eye of the observer; the control system may be arranged to control the light sources to direct light, in a temporally multiplexed manner in synchronization with the control of the parallax element, into left and right eye optical windows for viewing by the left and right eyes of the observer; and the control system may be arranged to control the spatial light modulator to display, in a temporally multiplexed manner in synchronization with the control of the parallax element and the light sources, (a) a left eye image on all the pixels when the parallax element directs light into the left eye viewing window, and (b) a right eye image on all the pixels when the parallax element directs light into the right eye optical window.

Advantageously the resolution of the autostereoscopic image may be the same as the spatial light modulator, the cross talk is reduced and the temporally multiplexed spatial light modulator can be arranged to operate at twice the autostereoscopic image frame rate.

Thus control of the backlight, parallax element and spatial light modulator can be provided to switch between various desirable autostereoscopic display characteristics to match an observer's display usage.

The directional display apparatus may further comprise a sensor system arranged to detect the position of the head of the observer, the control system being arranged to control the light sources in accordance with the detected position of the head of the observer.

The directional display apparatus may further comprise a sensor system arranged to detect the position of the head of the observer, the control system being arranged to control the light sources and the parallax element in accordance with the detected position of the head of the observer.

Embodiments herein may provide an autostereoscopic display with large area and thin structure. Further, as will be described, the waveguides of the present disclosure may achieve thin optical components with large back working distances. Such components can be used in directional backlights, to provide directional displays including autostereoscopic displays. Further, embodiments may provide a controlled illuminator for the purposes of an efficient autostereoscopic display, and efficient 2D display, a high brightness 2D display or 2D displays achieving a privacy function.

Embodiments of the present disclosure may be used in a variety of optical systems. The embodiment may include or work with a variety of projectors, projection systems, optical components, displays, microdisplays, computer systems, processors, self-contained projector systems, visual and/or audiovisual systems and electrical and/or optical devices. Aspects of the present disclosure may be used with practically any apparatus related to optical and electrical devices, optical systems, presentation systems or any apparatus that may contain any type of optical system. Accordingly, embodiments of the present disclosure may be employed in optical systems, devices used in visual and/or optical presentations, visual peripherals and so on and in a number of computing environments.

Before proceeding to the disclosed embodiments in detail, it should be understood that the disclosure is not limited in its application or creation to the details of the particular arrangements shown, because the disclosure is capable of other embodiments. Moreover, aspects of the disclosure may be set forth in different combinations and arrangements to define embodiments unique in their own right. Also, the terminology used herein is for the purpose of description and not of limitation.

Directional backlights offer control over the illumination emanating from substantially the entire output surface controlled typically through modulation of independent LED light sources arranged at the input aperture side of an optical waveguide. Controlling the emitted light directional distribution can achieve single person viewing for a security function, where the display can primarily or only be seen by a single viewer from a limited range of angles; high electrical efficiency, where illumination may be provided over a small angular directional distribution; alternating left and right eye viewing for time sequential stereoscopic and autostereoscopic display; and low cost.

These and other advantages and features of the present disclosure will become apparent to those of ordinary skill in the art upon reading this disclosure in its entirety.

Embodiments are illustrated by way of example in the accompanying FIGURES, in which like reference numbers indicate similar parts, and in which:
**FIGURE 1A** is a schematic diagram illustrating a front view of light propagation in one embodiment of a directional display device, in accordance with the present disclosure;
**FIGURE 1B** is a schematic diagram illustrating a side view of light propagation in one embodiment of the directional display device of FIGURE 1A, in accordance with the present disclosure;
**FIGURE 2A** is a schematic diagram illustrating in a top view of light propagation in another embodiment of a directional display device, in accordance with the present disclosure;
**FIGURE 2B** is a schematic diagram illustrating light propagation in a front view of the directional display device of FIGURE 2A, in accordance with the present disclosure;
**FIGURE 2C** is a schematic diagram illustrating light propagation in a side view of the directional display device of FIGURE 2A, in accordance with the present disclosure;
**FIGURE 3** is a schematic diagram illustrating in a side view of a directional display device, in accordance with the present disclosure;
**FIGURE 4A** is schematic diagram illustrating in a front view, generation of a viewing window in a directional display device and including curved light extraction features, in accordance with the present disclosure;
**FIGURE 4B** is a schematic diagram illustrating in a front view, generation of a first and a second viewing window in a directional display device and including curved light extraction features, in accordance with the present disclosure;
**FIGURE 5** is a schematic diagram illustrating generation of a first viewing window in a directional display device including linear light extraction features, in accordance with the present disclosure;
**FIGURE 6A** is a schematic diagram illustrating one embodiment of the generation of a first viewing window in a time multiplexed directional display device, in accordance with the present disclosure;
**FIGURE 6B** is a schematic diagram illustrating another embodiment of the generation of a second viewing window in a time multiplexed directional display device in a second time slot, in accordance with the present disclosure;
**FIGURE 6C** is a schematic diagram illustrating another embodiment of the generation of a first and a second viewing window in a time multiplexed directional display device, in accordance with the present disclosure;
**FIGURE 7** is a schematic diagram illustrating an observer tracking autostereoscopic directional display device, in accordance with the present disclosure;
**FIGURE 8** is a schematic diagram illustrating a multi-viewer directional display device, in accordance with the present disclosure;
**FIGURE 9** is a schematic diagram illustrating a privacy directional display device, in accordance with the present disclosure;
**FIGURE 10** is a schematic diagram illustrating in side view, the structure of a directional display device, in accordance with the present disclosure;
**FIGURE 11A** is a schematic diagram illustrating in side view, the structure of a directional display device comprising a stepped waveguide, in accordance with the present disclosure;
**FIGURE 11B** is a schematic diagram illustrating in side view, the structure of a directional display device comprising a wedge waveguide, in accordance with the present disclosure;
**FIGURE 12A** is a schematic diagram illustrating in perspective view, the structure of a directional display device comprising an imaging waveguide arranged with a spatial light modulator, in accordance with the present disclosure;
**FIGURE 12B** is a schematic diagram illustrating in perspective view, the structure of a directional display device comprising an imaging waveguide arranged with a spatial light modulator and aligned rear parallax element, in accordance with the present disclosure;
**FIGURE 13A** is a schematic diagram illustrating in top view, the structure of part of a directional display device comprising a spatial light modulator and aligned rear parallax element, in accordance with the present disclosure;
**FIGURE 13B** is a schematic diagram illustrating in front view, the alignment of polarization directions in the optical stack of FIGURE 13A, in accordance with the present disclosure;
**FIGURE 14** is a schematic diagram illustrating in top view, the structure of part of a directional display device comprising a spatial light modulator and aligned rear parallax element further comprising in-cell polarizers, in accordance with the present disclosure;
**FIGURES 15A-15B** are schematic diagrams illustrating in top view, the structure of part of a directional display device comprising a spatial light modulator and aligned rear parallax element further comprising in-cell polarizers, in accordance with the present disclosure;
**FIGURES 16A-16B** are schematic diagrams illustrating in front view, the structures of parallax barriers comprising slot regions, in accordance with the present disclosure;
**FIGURES 17A-17E** are schematic diagrams illustrating in front view, the structures of parallax barriers comprising slot regions, in accordance with the present disclosure;
**FIGURE 18** is a schematic diagram illustrating in perspective view, the structure of a directional display device comprising an imaging waveguide arranged with a spatial light modulator and aligned front parallax element, in accordance with the present disclosure;
**FIGURE 19A** is a schematic diagram illustrating in front view, the structure of a parallax barrier comprising slot regions that are grey scale addressed, in accordance with the present disclosure;
**FIGURES 19B-19C** are schematic diagrams illustrating in front view, the structure of parallax barriers comprising slot regions that are arranged with an increased lateral extent in the lateral direction, in accordance with the present disclosure;
**FIGURE 20** is a schematic diagram illustrating in top view, the structure of a switchable parallax barrier comprising gap switching slot regions, in accordance with the present disclosure;
**FIGURE 21** is a schematic diagram illustrating in top view, the structure of a switchable parallax barrier comprising fringe field switching slot regions, in accordance with the present disclosure;
**FIGURE 22** is a schematic diagram illustrating in perspective front view, the arrangement of optical windows in portrait mode of the switchable autostereoscopic display of FIGURE 12B, in accordance with the present disclosure;
**FIGURES 23A-23C** are schematic diagrams illustrating in perspective front views, the arrangement of optical windows in landscape mode of the switchable autostereoscopic display of FIGURE 12B, in accordance with the present disclosure;
**FIGURES 24A-24B** are schematic diagrams illustrating in top views, arrangements of 2D viewing windows of the switchable display of FIGURE 12B with the parallax element fully transmitting, in accordance with the present disclosure;
**FIGURE 24C** is a schematic graph illustrating a viewing window profile for the arrangement of FIGURE 24A, in accordance with the present disclosure;
**FIGURE 25A** is a schematic diagram illustrating in front view, the arrangement of a spatial light modulator and aligned parallax barrier for two view spatial multiplexing, in accordance with the present disclosure;
**FIGURE 25B** is a schematic diagram illustrating in front view, the arrangement of a spatial light modulator and aligned parallax barrier for four view spatial multiplexing, in accordance with the present disclosure;
**FIGURE 25C** is a schematic diagram illustrating in top view, the angular output of a spatial light modulator and aligned parallax barrier for two view spatial multiplexing, in accordance with the present disclosure;
**FIGURE 25D** is a schematic graph illustrating, the variation of optical window luminance against position in the window plane for the arrangement of FIGURE 25A, in accordance with the present disclosure;
**FIGURE 26A** is a schematic diagram illustrating in top view, the combined angular output of directional illumination and a spatial light modulator and aligned parallax barrier for two view spatial multiplexing, in accordance with the present disclosure;
**FIGURE 26B** is a schematic graph illustrating the variation of optical window luminance against position in the window plane for the arrangement of FIGURE 26A, in accordance with the present disclosure;
**FIGURE 27A** is a schematic diagram illustrating in top views, the combined angular output of directional illumination and a spatial light modulator and aligned parallax barrier for two view spatial multiplexing and temporal view multiplexing, in accordance with the present disclosure;
**FIGURE 27B** is a schematic diagram illustrating in front views, the arrangements of a spatial light modulator and aligned parallax barrier for two view spatial multiplexing and temporal view multiplexing, in accordance with the present disclosure;
**FIGURES 27C-27E** are schematic diagrams illustrating in top views, the arrangements of a spatial light modulator and aligned parallax barrier for multiple observers, in accordance with the present disclosure;
**FIGURE 28** is a schematic diagram illustrating in top view, the combined angular output of directional illumination and a spatial light modulator and aligned parallax barrier for two view spatial multiplexing with observer tracking, in accordance with the present disclosure;
**FIGURE 29A** is a schematic diagram illustrating in front view, the arrangement of a spatial light modulator and aligned parallax barrier for two view spatial multiplexing with observer tracking, in accordance with the present disclosure;
**FIGURE 29B** is a schematic diagram illustrating in front view, the arrangement of a spatial light modulator and aligned parallax barrier for four view spatial multiplexing, in accordance with the present disclosure;
**FIGURE 30** is a schematic graph illustrating the variation of optical window luminance against position in the window plane for the arrangement of FIGURE 29A, in accordance with the present disclosure;
**FIGURE 31** is a schematic graph illustrating the variation of total viewing window luminance against position in the window plane for an arrangement with reduced slit width, in accordance with the present disclosure;
**FIGURE 32** is a schematic graph illustrating the variation of total viewing window luminance against position in the window plane for the arrangement of FIGURE 29A further comprising compensation luminance distribution, in accordance with the present disclosure;
**FIGURES 33A-33B** are schematic diagrams illustrating in side and front views an LED array comprising a compensating feature, in accordance with the present disclosure;
**FIGURE 34** is a schematic graph illustrating the variation of compensating feature transmission against position across the LED array of FIGURE 33A, in accordance with the present disclosure;
**FIGURE 35** is a schematic graph illustrating the variation of luminance against position in the window plane for the arrangement of FIGURES 33A-33B, in accordance with the present disclosure;
**FIGURE 36** is a schematic graph illustrating in side view the addressing of an LED array in order to achieve a viewing window luminance distribution compensating feature, in accordance with the present disclosure;
**FIGURE 37A** is a schematic diagram illustrating in top view, the temporally multiplexed angular output of directional illumination from a directional backlight, in accordance with the present disclosure;
**FIGURE 37B** is a schematic diagram illustrating in top view, the temporally multiplexed angular output of directional illumination from a directional backlight in cooperation with the temporally multiplexed output of a parallax element and aligned spatial light modulator, in accordance with the present disclosure;
**FIGURE 37C** are schematic diagrams illustrating in front view, the arrangement of a spatial light modulator and aligned parallax barrier for two view spatial multiplexing comprising black pixel columns and temporal multiplexing, in accordance with the present disclosure;
**FIGURE 37D** are schematic diagrams illustrating in front view, the arrangement of a spatial light modulator and aligned parallax barrier for two view spatial multiplexing comprising fixed position black pixel columns and temporal multiplexing parallax elements further arranged to provide increased display resolution with low cross talk, in accordance with the present disclosure;
**FIGURE 37E** are schematic diagrams illustrating in front view, the arrangement of a spatial light modulator and aligned parallax barrier for two view spatial multiplexing comprising black pixel columns and temporal multiplexing further arranged to provide increased display resolution with low cross talk, in accordance with the present disclosure;
**FIGURES 38A-38C** are schematic graphs illustrating the variation of total viewing window luminance against position in the window plane for the arrangement of FIGURE 37B, in accordance with the present disclosure;
**FIGURES 39A-39C** are schematic graphs illustrating the variation of total viewing window luminance against position in the window plane for the arrangement of FIGURE 37B with observer tracking, in accordance with the present disclosure;
**FIGURE 40A** are schematic diagrams illustrating in front view, the arrangement of a spatial light modulator and aligned parallax barrier for two view spatial multiplexing and temporal multiplexing wherein black regions between the pixel columns are provided by black mask between the pixel columns, in accordance with the present disclosure;
**FIGURE 40B** are schematic diagrams illustrating in front view, the arrangement of a spatial light modulator and aligned parallax barrier for two view spatial multiplexing and temporal multiplexing wherein black regions between the pixel columns are provided by black mask between the pixel columns that is the same width as the pixel aperture width, in accordance with the present disclosure;
**FIGURE 41A** is a schematic diagram illustrating in front view, the addressing of pixel columns in a time multiplexed spatial light modulator for use in the present temporally and spatially multiplexed embodiments, in accordance with the present disclosure;
**FIGURE 41B** is a schematic diagram illustrating in front view, the addressing of a parallax element in a time multiplexed spatial light modulator for use in the present temporally and spatially multiplexed embodiments, in accordance with the present disclosure;
**FIGURE 42A** is a schematic diagram illustrating in front view, the addressing of parallax barrier slots in a time multiplexed spatial light modulator for use in the present spatially multiplexed embodiments, in accordance with the present disclosure;
**FIGURE 42B** are schematic diagrams illustrating in front view, the addressing of parallax barrier for use in the present spatially multiplexed embodiments, in accordance with the present disclosure;
**FIGURES 43A-43C** are schematic timing diagrams of illumination pulses for switching of the light emitting elements in the directional backlight, in accordance with the present disclosure;
**FIGURE 44** is a schematic diagram illustrating in front view, the arrangement of an inclined parallax element in alignment with a spatial light modulator in multi-view spatially multiplexed embodiments, in accordance with the present disclosure;
**FIGURE 45** is a schematic diagram illustrating in front view, the image appearance of the arrangement of FIGURE 44, in accordance with the present disclosure;
**FIGURES 46A-46B** are schematic diagrams illustrating in front view, the alignment of optical windows from the arrangement of FIGURE 44 with the alignment of optical windows from a directional backlight, in accordance with the present disclosure;
**FIGURE 47** is a schematic diagram illustrating in front view, the alignment of optical windows from the arrangement of FIGURE 44 with the alignment of optical windows from a directional backlight further comprising time multiplexed viewing windows, in accordance with the present disclosure;
**FIGURE 48** is a schematic diagram illustrating in perspective view, the structure of a directional display device comprising an imaging waveguide arranged with a spatial light modulator and aligned front lenticular array, in accordance with the present disclosure;
**FIGURE 49** is a schematic diagram illustrating in perspective front view, the operation of a switchable lenticular array, in accordance with the present disclosure;
**FIGURES 50-53** are schematic diagrams illustrating in side view, arrangements of switchable graded index lenticular arrays, in accordance with the present disclosure;
**FIGURES 54-55** are schematic diagrams illustrating in perspective front view, the operation of a switchable autostereoscopic display arranged to achieve landscape and portrait modes of autostereoscopic operation, in accordance with the present disclosure;
**FIGURE 56** is a schematic diagram illustrating in perspective view, the structure of a directional display device comprising an imaging waveguide arranged with a spatial light modulator and two switchable parallax barrier arrays, in accordance with the present disclosure;
**FIGURE 57** is a schematic diagram illustrating in top view, the structure of a spatial light modulator and two aligned switchable parallax barrier arrays, in accordance with the present disclosure;
**FIGURES 58A-58B** are schematic diagrams illustrating in front view, optical window arrays in landscape orientation from a parallax element and aligned spatial light modulator with 45 degree window orientation, and aligned optical windows from a directional backlight, in accordance with the present disclosure;
**FIGURE 59A** is a schematic diagram illustrating in front view, a portrait orientation image, in accordance with the present disclosure;
**FIGURE 59B** is a schematic diagram illustrating in front view, optical window arrays in portrait orientation from a parallax element and aligned spatial light modulator with 45 degree window orientation, and aligned optical windows from a directional backlight, in accordance with the present disclosure;
**FIGURE 60** is a schematic diagram illustrating in front view, the alignment of a parallax element with an array of color sub-pixels on a square grid to achieve optical windows aligned at 45 degrees, in accordance with the present disclosure;
**FIGURE 61** is a schematic diagram illustrating in front view, the alignment of a parallax element with an array of color sub-pixels on a rectangular grid to achieve optical windows aligned at 45 degrees, in accordance with the present disclosure;
**FIGURE 62** is a schematic diagram illustrating in side view, an apparatus arranged to achieve optical windows arranged at 45 degrees and in alignment with the optical windows from a spatial light modulator aligned with a respective parallax element, in accordance with the present disclosure;
**FIGURE 63** is a schematic diagram illustrating in perspective front view, an apparatus arranged to achieve optical windows arranged at 45 degrees and in alignment with the optical windows from a spatial light modulator aligned with a respective parallax element, in accordance with the present disclosure;
**FIGURES 64A-64D** are schematic diagrams illustrating in plan view various accommodation conditions for the human eye, in accordance with the present disclosure;
**FIGURE 65** is a schematic diagram illustrating in plan view a display apparatus arranged to correct accommodation conditions, in accordance with the present disclosure;
**FIGURE 66** is a schematic diagram illustrating in plan view correction of myopia in a directional display apparatus, in accordance with the present disclosure;
**FIGURE 67** is a schematic diagram illustrating in plan view correction of hyperopia or presbyopia in a directional display apparatus, in accordance with the present disclosure;
**FIGURE 68A** is a schematic diagram illustrating in perspective views a display apparatus arranged to correct accommodation conditions for left and right eyes, in accordance with the present disclosure;
**FIGURE 68B** is a flow chart further illustrating operation of FIGURE 68A, in accordance with the present disclosure;
**FIGURE 69** is a schematic diagram illustrating in front view a two dimensional array of viewing windows and aligned eyes, in accordance with the present disclosure;
**FIGURE 70A** is a schematic diagrams illustrating in perspective views a display apparatus arranged to correct accommodation conditions for left and right eyes, in accordance with the present disclosure;
**FIGURE 70B** is a flow chart further illustrating operation of FIGURE 69A, in accordance with the present disclosure;
**FIGURE 70C** is a schematic diagram illustrating a monocular illumination system that operates in the same manner as the first phase of FIGURE 70A, in accordance with the present disclosure;
**FIGURE 70D** is a flow diagram illustrating operation of FIGURE 70C, in accordance with the present disclosure;
**FIGURE 71A** is a schematic diagrams illustrating in perspective views a display apparatus arranged to correct accommodation conditions for left and right eyes, in accordance with the present disclosure;
**FIGURE 71B** is a flow chart further illustrating operation of FIGURE 69A, in accordance with the present disclosure.

Time multiplexed autostereoscopic displays can advantageously improve the spatial resolution of an autostereoscopic display by directing light from all of the pixels of a spatial light modulator to a first viewing window in a first time slot, and all of the pixels to a second viewing window in a second time slot. Thus an observer with eyes arranged to receive light in first and second viewing windows will see a full resolution image across the whole of the display over multiple time slots. Time multiplexed displays can advantageously achieve directional illumination by directing an illuminator array through a substantially transparent time multiplexed spatial light modulator using directional optical elements, wherein the directional optical elements substantially form an image of the illuminator array in the window plane.

The uniformity of the viewing windows may be advantageously independent of the arrangement of pixels in the spatial light modulator. Advantageously, such displays can provide observer tracking displays which have low flicker, with low levels of cross talk for a moving observer.

To achieve high uniformity in the window plane, it is desirable to provide an array of illumination elements that have a high spatial uniformity. The illuminator elements of the time sequential illumination system may be provided, for example, by pixels of a spatial light modulator with size approximately 100 micrometers in combination with a lens array. However, such pixels suffer from similar difficulties as for spatially multiplexed displays. Further, such devices may have low efficiency and higher cost, requiring additional display components.

High window plane uniformity can be conveniently achieved with macroscopic illuminators, for example, an array of LEDs in combination with homogenizing and diffusing optical elements that are typically of size 1 mm or greater. However, the increased size of the illuminator elements means that the size of the directional optical elements increases proportionately. For example, a 16 mm wide illuminator imaged to a 65 mm wide viewing window may require a 200 mm back working distance. Thus, the increased thickness of the optical elements can prevent useful application, for example, to mobile displays, or large area displays.

Addressing the aforementioned shortcomings, optical valves as described in commonly-owned U.S. Patent Application No. 13/300,293 advantageously can be arranged in combination with fast switching transmissive spatial light modulators to achieve time multiplexed autostereoscopic illumination in a thin package while providing high resolution images with flicker free observer tracking and low levels of cross talk. Described is a one dimensional array of viewing positions, or windows, that can display different images in a first, typically horizontal, direction, but contain the same images when moving in a second, typically vertical, direction.

Conventional non-imaging display backlights commonly employ optical waveguides and have edge illumination from light sources such as LEDs. However, it should be appreciated that there are many fundamental differences in the function, design, structure, and operation between such conventional non-imaging display backlights and the imaging directional backlights discussed in the present disclosure.

Generally, for example, in accordance with the present disclosure, imaging directional backlights are arranged to direct the illumination from multiple light sources through a display panel to respective multiple viewing windows in at least one axis. Each viewing window is substantially formed as an image in at least one axis of a light source by the imaging system of the imaging directional backlight. An imaging system may be formed between multiple light sources and the respective window images. In this manner, the light from each of the multiple light sources is substantially not visible for an observer's eye outside of the respective viewing window.

In contradistinction, conventional non-imaging backlights or light guiding plates (LGPs) are used for illumination of 2D displays. *See*, *e.g.*, Kälil Käläntär et al., Backlight Unit With Double Surface Light Emission, J. Soc. Inf. Display, Vol. 12, Issue 4, pp. 379-387 (Dec. 2004). Non-imaging backlights are typically arranged to direct the illumination from multiple light sources through a display panel into a substantially common viewing zone for each of the multiple light sources to achieve wide viewing angle and high display uniformity. Thus non-imaging backlights do not form viewing windows. In this manner, the light from each of the multiple light sources may be visible for an observer's eye at substantially all positions across the viewing zone. Such conventional non-imaging backlights may have some directionality, for example, to increase screen gain compared to Lambertian illumination, which may be provided by brightness enhancement films such as BEF™ from 3M. However, such directionality may be substantially the same for each of the respective light sources. Thus, for these reasons and others that should be apparent to persons of ordinary skill, conventional non-imaging backlights are different to imaging directional backlights. Edge lit non-imaging backlight illumination structures may be used in liquid crystal display systems such as those seen in 2D Laptops, Monitors and TVs. Light propagates from the edge of a lossy waveguide which may include sparse features; typically local indentations in the surface of the guide which cause light to be lost regardless of the propagation direction of the light.

As used herein, an optical valve is an optical structure that may be a type of light guiding structure or device referred to as, for example, a light valve, an optical valve directional backlight, and a valve directional backlight ("v-DBL"). In the present disclosure, optical valve is different to a spatial light modulator (even though spatial light modulators may be sometimes generally referred to as a "light valve" in the art). One example of an imaging directional backlight is an optical valve that may employ a folded optical system. Light may propagate substantially without loss in one direction through the optical valve, may be incident on an imaging reflector, and may counter-propagate such that the light may be extracted by reflection off tilted light extraction features, and directed to viewing windows as described in US-2012/127573.

As used herein, examples of an imaging directional backlight include a stepped waveguide imaging directional backlight, a folded imaging directional backlight, a wedge type directional backlight, or an optical valve.

Additionally, as used herein, a stepped waveguide imaging directional backlight may be an optical valve. A stepped waveguide is a waveguide for an imaging directional backlight including a waveguide for guiding light, further including a first light guiding surface; and a second light guiding surface, opposite the first light guiding surface, further including a plurality of light guiding features interspersed with a plurality of extraction features arranged as steps.

Moreover, as used, a folded imaging directional backlight may be at least one of a wedge type directional backlight, or an optical valve.

In operation, light may propagate within an exemplary optical valve in a first direction from an input side to a reflective side and may be transmitted substantially without loss. Light may be reflected at the reflective side and propagates in a second direction substantially opposite the first direction. As the light propagates in the second direction, the light may be incident on light extraction features, which are operable to redirect the light outside the optical valve. Stated differently, the optical valve generally allows light to propagate in the first direction and may allow light to be extracted while propagating in the second direction.

The optical valve may achieve time sequential directional illumination of large display areas. Additionally, optical elements may be employed that are thinner than the back working distance of the optical elements to direct light from macroscopic illuminators to a window plane. Such displays may use an array of light extraction features arranged to extract light counter propagating in a substantially parallel waveguide.

Thin imaging directional backlight implementations for use with LCDs have been proposed and demonstrated by 3M, for example U.S. Patent No. 7,528,893; by Microsoft, for example U.S. Patent No. 7,970,246 which may be referred to herein as a "wedge type directional backlight;" by RealD, for example US-2012/127573 which may be referred to herein as an "optical valve" or "optical valve directional backlight".

The present disclosure provides stepped waveguide imaging directional backlights in which light may reflect back and forth between the internal faces of, for example, a stepped waveguide which may include a first side and a first set of features. As the light travels along the length of the stepped waveguide, the light may not substantially change angle of incidence with respect to the first side and first set of surfaces and so may not reach the critical angle of the medium at these internal faces. Light extraction may be advantageously achieved by a second set of surfaces (the step "risers") that are inclined to the first set of surfaces (the step "treads"). Note that the second set of surfaces may not be part of the light guiding operation of the stepped waveguide, but may be arranged to provide light extraction from the structure. By contrast, a wedge type imaging directional backlight may allow light to guide within a wedge profiled waveguide having continuous internal surfaces. The optical valve is thus not a wedge type imaging directional backlight.

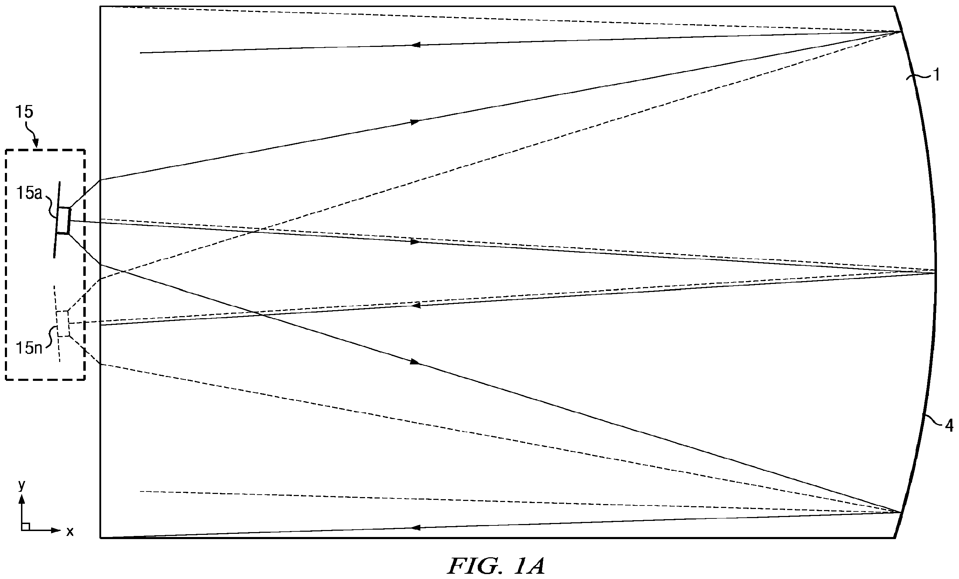

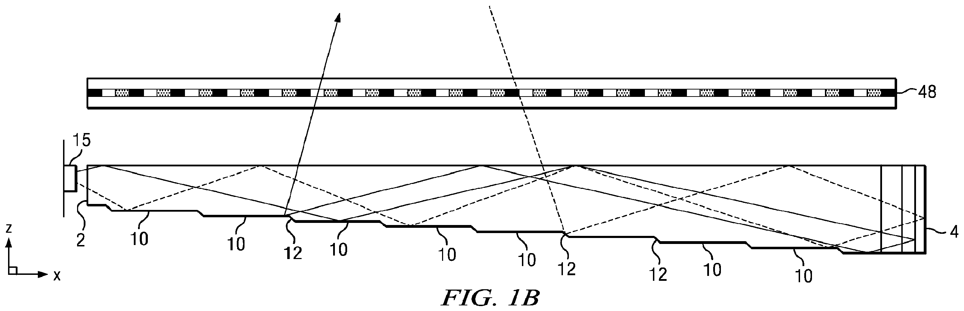

**FIGURE 1A** is a schematic diagram illustrating a front view of light propagation in one embodiment of a directional display device, and **FIGURE 1B** is a schematic diagram illustrating a side view of light propagation in the directional display device of FIGURE 1A.

FIGURE 1A illustrates a front view in the *xy* plane of a directional backlight of a directional display device, and includes an illuminator array 15 which may be used to illuminate a stepped waveguide 1. Illuminator array 15 includes illuminator elements 15a through illuminator element 15n (where n is an integer greater than one). In one example, the stepped waveguide 1 of FIGURE 1A may be a stepped, display sized waveguide 1. Illumination elements 15a through 15n are light sources that may be light emitting diodes (LEDs). Although LEDs are discussed herein as illuminator elements 15a - 15n, other light sources may be used such as, but not limited to, diode sources, semiconductor sources, laser sources, local field emission sources, organic emitter arrays, and so forth. Additionally, FIGURE 1B illustrates a side view in the xz plane, and includes illuminator array 15, SLM (spatial light modulator) 48, extraction features 12, guiding features 10, and stepped waveguide 1, arranged as shown. The side view provided in FIGURE 1B is an alternative view of the front view shown in FIGURE 1A. Accordingly, the illuminator array 15 of FIGURES 1A and 1B corresponds to one another and the stepped waveguide 1 of FIGURES 1A and 1B may correspond to one another.

Further, in FIGURE 1B, the stepped waveguide 1 may have an input end 2 that is thin and a reflective end 4 that is thick. Thus the waveguide 1 extends between the input end 2 that receives input light and the reflective end 4 that reflects the input light back through the waveguide 1. The length of the input end 2 in a lateral direction across the waveguide is greater than the height of the input end 2. The illuminator elements 15a - 15n are disposed at different input positions in a lateral direction across the input end 2.

The waveguide 1 has first and second, opposed guide surfaces extending between the input end 2 and the reflective end 4 for guiding light forwards and back along the waveguide 1 by total internal reflection. The first guide surface is planar. The second guide surface has a plurality of light extraction features 12 facing the reflective end 4 and inclined to reflect at least some of the light guided back through the waveguide 1 from the reflective end in directions that break the total internal reflection at the first guide surface and allow output through the first guide surface, for example, upwards in FIGURE 1B, that is supplied to the SLM 48.

In this example, the light extraction features 12 are reflective facets, although other reflective features could be used. The light extraction features 12 do not guide light through the waveguide, whereas the intermediate regions of the second guide surface intermediate the light extraction features 12 guide light without extracting it. Those regions of the second guide surface are planar and may extend parallel to the first guide surface, or at a relatively low inclination. The light extraction features 12 extend laterally to those regions so that the second guide surface has a stepped shape including of the light extraction features 12 and intermediate regions. The light extraction features 12 are oriented to reflect light from the light sources, after reflection from the reflective end 4, through the first guide surface.

The light extraction features 12 are arranged to direct input light from different input positions in the lateral direction across the input end in different directions relative to the first guide surface that are dependent on the input position. As the illumination elements 15a-15n are arranged at different input positions, the light from respective illumination elements 15a-15n is reflected in those different directions. In this manner, each of the illumination elements 15a-15n directs light into a respective optical window in output directions distributed in the lateral direction in dependence on the input positions. The lateral direction across the input end 2 in which the input positions are distributed corresponds with regard to the output light to a lateral direction to the normal to the first guide surface. The lateral directions as defined at the input end 2 and with regard to the output light remain parallel in this embodiment where the deflections at the reflective end 4 and the first guide surface are generally orthogonal to the lateral direction.. Under the control of a control system, the illuminator elements 15a - 15n may be selectively operated to direct light into a selectable optical window. The optical windows may be used individually or in groups as viewing windows.

The reflective end 4 may have positive optical power in the lateral direction across the waveguide. In embodiments in which typically the reflective end 4 has positive optical power, the optical axis may be defined with reference to the shape of the reflective end 4, for example being a line that passes through the center of curvature of the reflective end 4 and coincides with the axis of reflective symmetry of the end 4 about the x-axis. In the case that the reflecting surface 4 is flat, the optical axis may be similarly defined with respect to other components having optical power, for example the light extraction features 12 if they are curved, or the Fresnel lens 62 described below. The optical axis 238 is typically coincident with the mechanical axis of the waveguide 1.

The SLM 48 extends across the waveguide is transmissive and modulates the light passing therethrough. Although the SLM 48 may be a liquid crystal display (LCD) but this is merely by way of example, and other spatial light modulators or displays may be used including LCOS, DLP devices, and so forth, as this illuminator may work in reflection. In this example, the SLM 48 is disposed across the first guide surface of the waveguide and modulates the light output through the first guide surface after reflection from the light extraction features 12.

The operation of a directional display device that may provide a one dimensional array of viewing windows is illustrated in front view in FIGURE 1A, with its side profile shown in FIGURE 1B. In operation, in FIGURES 1A and 1B, light may be emitted from an illuminator array 15, such as an array of illuminator elements 15a through 15n, located at different positions, y, along the surface of thin end side 2, x=0, of the stepped waveguide 1. The light may propagate along +x in a first direction, within the stepped waveguide 1, while at the same time, the light may fan out in the *xy* plane and upon reaching the far curved end side 4, may substantially or entirely fill the curved end side 4. While propagating, the light may spread out to a set of angles in the xz plane up to, but not exceeding the critical angle of the guide material. The extraction features 12 that link the guiding features 10 of the bottom side of the stepped waveguide 1 may have a tilt angle greater than the critical angle and hence may be missed by substantially all light propagating along +x in the first direction, ensuring the substantially lossless forward propagation.

Continuing the discussion of FIGURES 1A and 1B, the curved end side 4 of the stepped waveguide 1 may be made reflective, typically by being coated with a reflective material such as, for example, silver, although other reflective techniques may be employed. Light may therefore be redirected in a second direction, back down the guide in the direction of x and may be substantially collimated in the *xy* or display plane. The angular spread may be substantially preserved in the xz plane about the principal propagation direction, which may allow light to hit the riser edges and reflect out of the guide. In an embodiment with approximately 45 degree tilted extraction features 12, light may be effectively directed approximately normal to the *xy* display plane with the *xz* angular spread substantially maintained relative to the propagation direction. This angular spread may be increased when light exits the stepped waveguide 1 through refraction, but may be decreased somewhat dependent on the reflective properties of the extraction features 12.

In some embodiments with uncoated extraction features 12, reflection may be reduced when total internal reflection (TIR) fails, squeezing the xz angular profile and shifting off normal. However, in other embodiments having silver coated or metallized extraction features, the increased angular spread and central normal direction may be preserved. Continuing the description of the embodiment with silver coated extraction features, in the xz plane, light may exit the stepped waveguide 1 approximately collimated and may be directed off normal in proportion to the y-position of the respective illuminator element 15a - 15n in illuminator array 15 from the input edge center. Having independent illuminator elements 15a - 15n along the input edge 2 then enables light to exit from the entire first light directing side 6 and propagate at different external angles, as illustrated in FIGURE 1A.

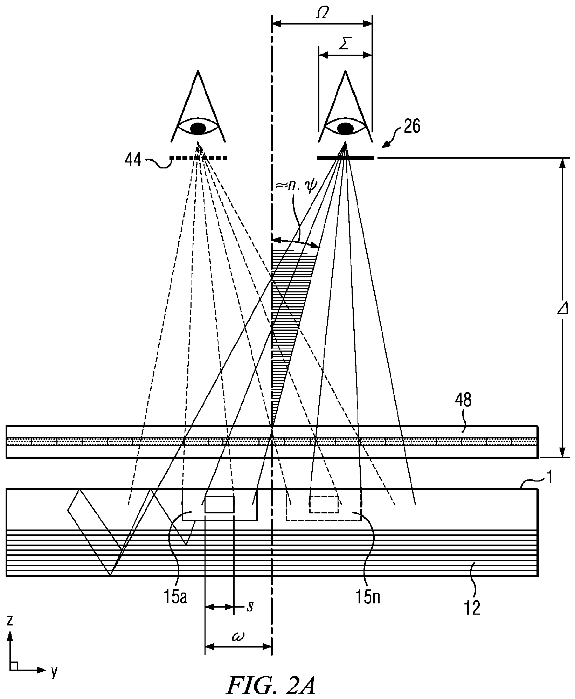

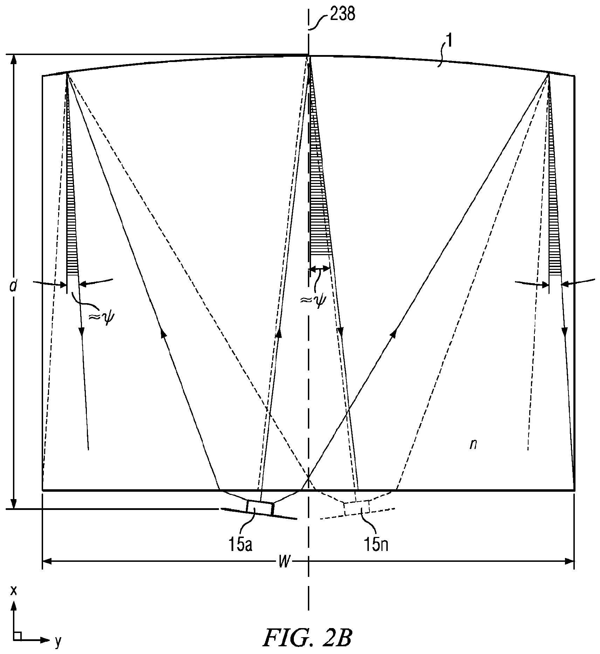

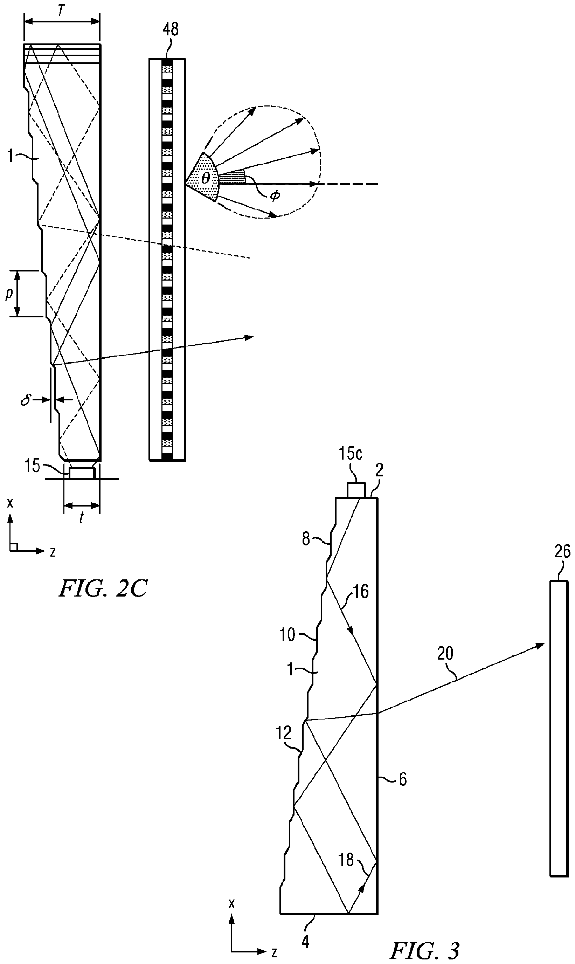

Illuminating a spatial light modulator (SLM) 48 such as a fast liquid crystal display (LCD) panel with such a device may achieve autostereoscopic 3D as shown in top view or *yz-*plane viewed from the illuminator array 15 end in FIGURE 2A, front view in FIGURE 2B and side view in FIGURE 2C. **FIGURE 2A** is a schematic diagram illustrating in a top view, propagation of light in a directional display device, **FIGURE 2B** is a schematic diagram illustrating in a front view, propagation of light in a directional display device, and **FIGURE 2C** is a schematic diagram illustrating in side view propagation of light in a directional display device. As illustrated in FIGURES 2A, 2B, and 2C, a stepped waveguide 1 may be located behind a fast (e.g., greater than 100Hz) LCD panel SLM 48 that displays sequential right and left eye images. In synchronization, specific illuminator elements 15a through 15n of illuminator array 15 (where n is an integer greater than one) may be selectively turned on and off, providing illuminating light that enters right and left eyes substantially independently by virtue of the system's directionality. In the simplest case, sets of illuminator elements of illuminator array 15 are turned on together, providing a one dimensional viewing window 26 or an optical pupil with limited width in the horizontal direction, but extended in the vertical direction, in which both eyes horizontally separated may view a left eye image, and another viewing window 44 in which a right eye image may primarily be viewed by both eyes, and a central position in which both the eyes may view different images. In this way, 3D may be viewed when the head of a viewer is approximately centrally aligned. Movement to the side away from the central position may result in the scene collapsing onto a 2D image.

The reflective end 4 may have positive optical power in the lateral direction across the waveguide. In embodiments in which typically the reflective end 4 has positive optical power, the optical axis may be defined with reference to the shape of the reflective end 4, for example being a line that passes through the center of curvature of the reflective end 4 and coincides with the axis of reflective symmetry of the end 4 about the x-axis. In the case that the reflecting surface 4 is flat, the optical axis may be similarly defined with respect to other components having optical power, for example the light extraction features 12 if they are curved, or the Fresnel lens 62 described below. The optical axis 238 is typically coincident with the mechanical axis of the waveguide 1. The cylindrical reflecting surface at end 4 may typically be a spherical profile to optimize performance for on-axis and off-axis viewing positions. Other profiles may be used.

**FIGURE 3** is a schematic diagram illustrating in side view a directional display device. Further, FIGURE 3 illustrates additional detail of a side view of the operation of a stepped waveguide 1, which may be a transparent material. The stepped waveguide 1 may include an illuminator input side 2, a reflective side 4, a first light directing side 6 which may be substantially planar, and a second light directing side 8 which includes guiding features 10 and light extraction features 12. In operation, light rays 16 from an illuminator element 15c of an illuminator array 15 (not shown in FIGURE 3), that may be an addressable array of LEDs for example, may be guided in the stepped waveguide 1 by means of total internal reflection by the first light directing side 6 and total internal reflection by the guiding feature 10, to the reflective side 4, which may be a mirrored surface. Although reflective side 4 may be a mirrored surface and may reflect light, it may in some embodiments also be possible for light to pass through reflective side 4.

Continuing the discussion of FIGURE 3, light ray 18 reflected by the reflective side 4 may be further guided in the stepped waveguide 1 by total internal reflection at the reflective side 4 and may be reflected by extraction features 12. Light rays 18 that are incident on extraction features 12 may be substantially deflected away from guiding modes of the stepped waveguide 1 and may be directed, as shown by ray 20, through the side 6 to an optical pupil that may form a viewing window 26 of an autostereoscopic display. The width of the viewing window 26 may be determined by at least the size of the illuminator, output design distance and optical power in the side 4 and extraction features 12. The height of the viewing window may be primarily determined by the reflection cone angle of the extraction features 12 and the illumination cone angle input at the input side 2. Thus each viewing window 26 represents a range of separate output directions with respect to the surface normal direction of the spatial light modulator 48 that intersect with a plane at the nominal viewing distance.

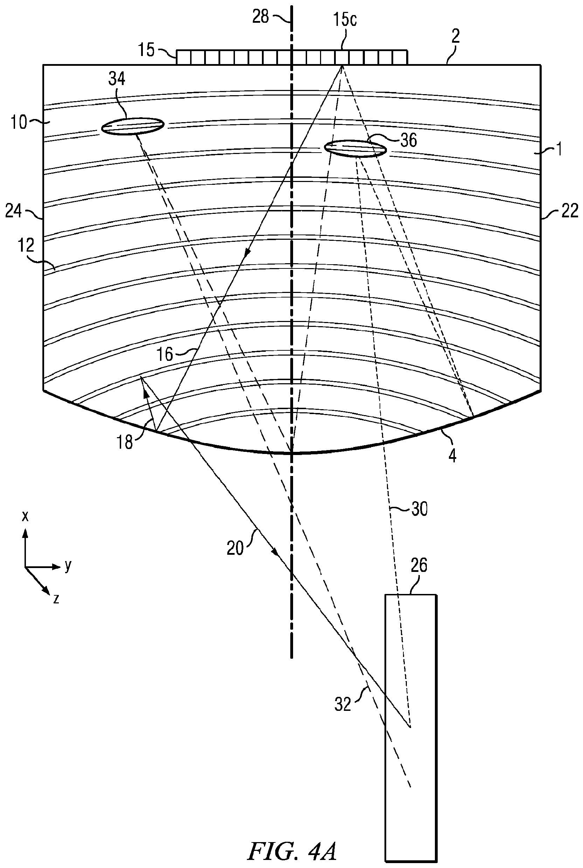

**FIGURE 4A** is a schematic diagram illustrating in front view a directional display device which may be illuminated by a first illuminator element and including curved light extraction features. Further, FIGURE 4A shows in front view further guiding of light rays from illuminator element 15c of illuminator array 15, in the stepped waveguide 1 having an optical axis 28. In FIGURE 4A, the directional backlight may include the stepped waveguide 1 and the light source illuminator array 15. Each of the output rays are directed from the input side 2 towards the same viewing window 26 from the respective illuminator 15c. The light rays of FIGURE 4A may exit the reflective side 4 of the stepped waveguide 1. As shown in FIGURE 4A, ray 16 may be directed from the illuminator element 15c towards the reflective side 4. Ray 18 may then reflect from a light extraction feature 12 and exit the reflective side 4 towards the viewing window 26. Thus light ray 30 may intersect the ray 20 in the viewing window 26, or may have a different height in the viewing window as shown by ray 32. Additionally, in various embodiments, sides 22, 24 of the waveguide 1 may be transparent, mirrored, or blackened surfaces. Continuing the discussion of FIGURE 4A, light extraction features 12 may be elongate, and the orientation of light extraction features 12 in a first region 34 of the light directing side 8 (light directing side 8 shown in FIGURE 3, but not shown in FIGURE 4A) may be different to the orientation of light extraction features 12 in a second region 36 of the light directing side 8. Similar to other embodiments discussed herein, for example as illustrated in FIGURE 3, the light extraction features of FIGURE 4A may alternate with the guiding features 10. As illustrated in FIGURE 4A, the stepped waveguide 1 may include a reflective surface on reflective side 4. In one embodiment, the reflective end of the stepped waveguide 1 may have positive optical power in a lateral direction across the stepped waveguide 1.

In another embodiment, the light extraction features 12 of each directional backlight may have positive optical power in a lateral direction across the waveguide.

In another embodiment, each directional backlight may include light extraction features 12 which may be facets of the second guide surface. The second guide surface may have regions alternating with the facets that may be arranged to direct light through the waveguide without substantially extracting it.

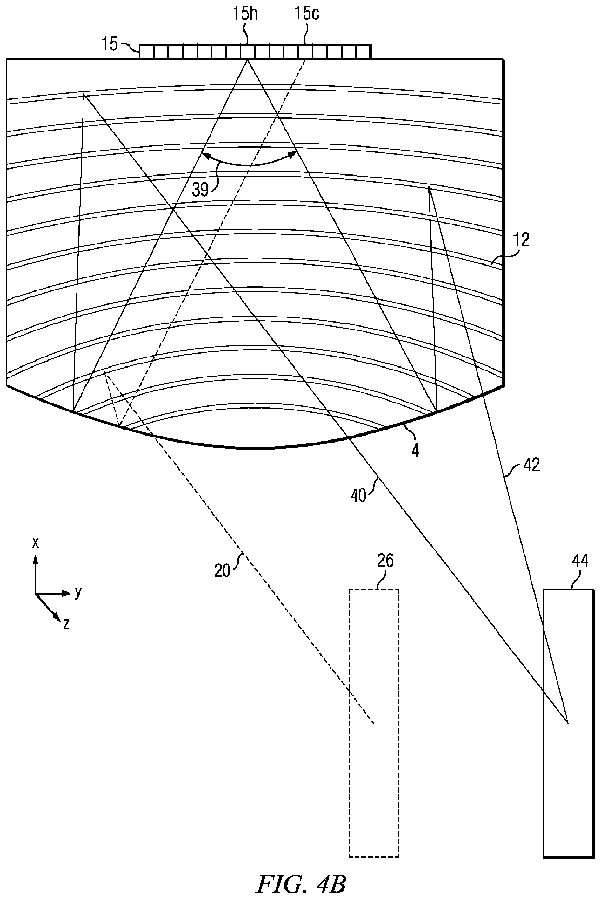

**FIGURE 4B** is a schematic diagram illustrating in front view a directional display device which may illuminated by a second illuminator element. Further, FIGURE 4B shows the light rays 40, 42 from a second illuminator element 15h of the illuminator array 15. The curvature of the reflective surface on the side 4 and the light extraction features 12 cooperatively produce a second viewing window 44 laterally separated from the viewing window 26 with light rays from the illuminator element 15h.

Advantageously, the arrangement illustrated in FIGURE 4B may provide a real image of the illuminator element 15c at a viewing window 26 in which the real image may be formed by cooperation of optical power in reflective side 4 and optical power which may arise from different orientations of elongate light extraction features 12 between regions 34 and 36, as shown in FIGURE 4A. The arrangement of FIGURE 4B may achieve improved aberrations of the imaging of illuminator element 15c to lateral positions in viewing window 26. Improved aberrations may achieve an extended viewing freedom for an autostereoscopic display while achieving low cross talk levels.

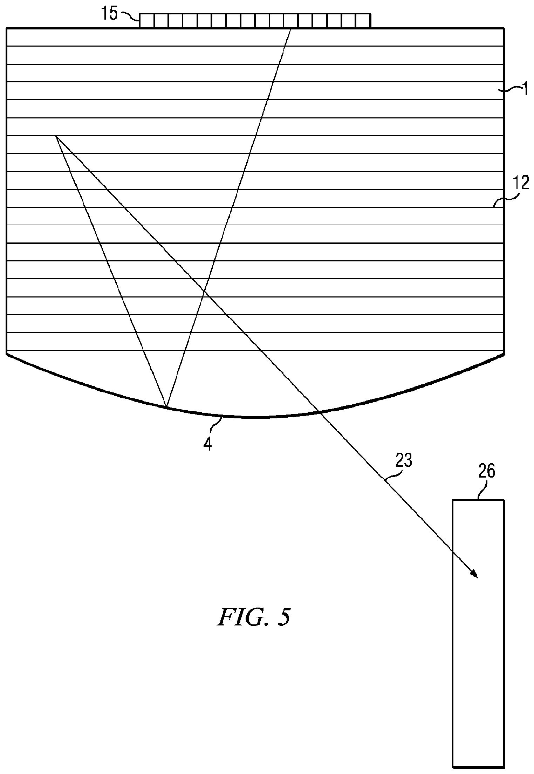

**FIGURE 5** is a schematic diagram illustrating in front view an embodiment of a directional display device having substantially linear light extraction features. Further, FIGURE 5 shows a similar arrangement of components to FIGURE 1 (with corresponding elements being similar), with one of the differences being that the light extraction features 12 are substantially linear and parallel to each other. Advantageously, such an arrangement may provide substantially uniform illumination across a display surface and may be more convenient to manufacture than the curved extraction features of FIGURE 4A and FIGURE 4B. The optical axis 321 of the directional waveguide 1 may be the optical axis direction of the surface at side 4. The optical power of the side 4 is arranged to be across the optical axis direction, thus rays incident on the side 4 will have an angular deflection that varies according to the lateral offset 319 of the incident ray from the optical axis 321.

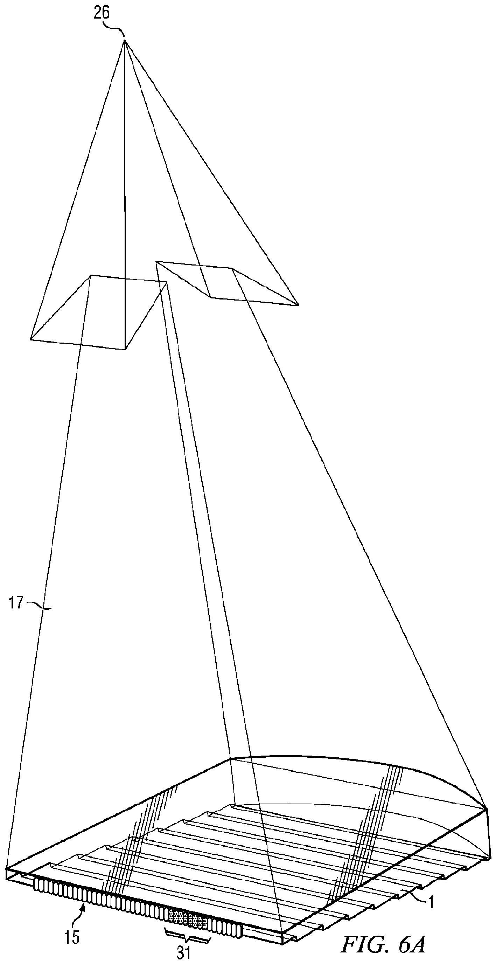

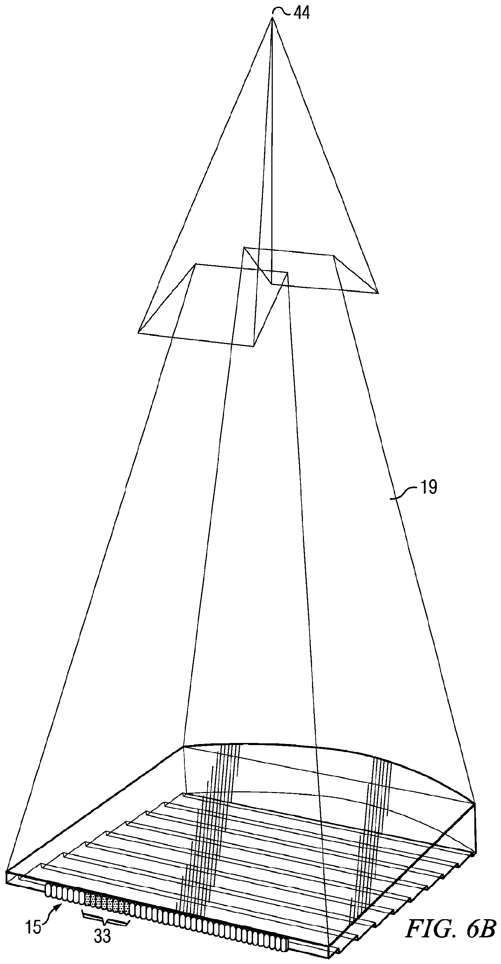

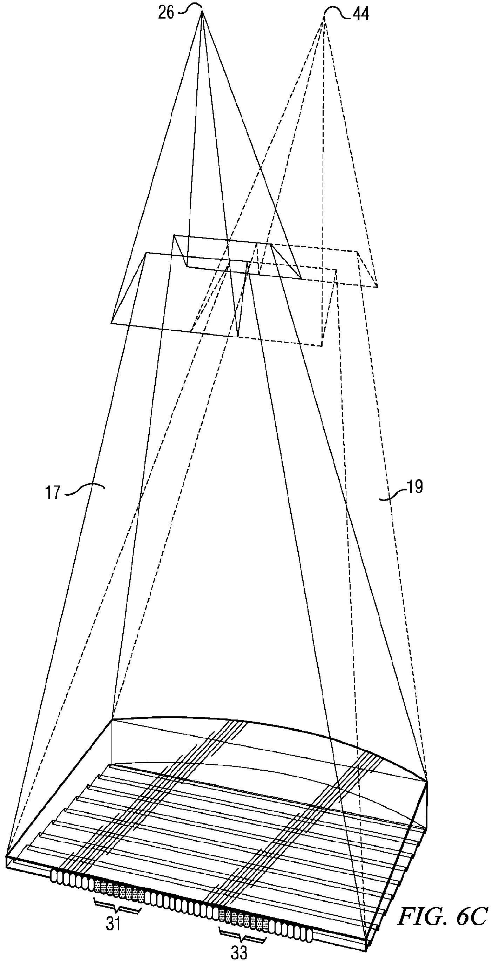

**FIGURE 6A** is a schematic diagram illustrating one embodiment of the generation of a first viewing window in a time multiplexed imaging directional display device in a first time slot, **FIGURE 6B** is a schematic diagram illustrating another embodiment of the generation of a second viewing window in a time multiplexed imaging directional backlight apparatus in a second time slot, and **FIGURE 6C** is a schematic diagram illustrating another embodiment of the generation of a first and a second viewing window in a time multiplexed imaging directional display device. Further, FIGURE 6A shows schematically the generation of viewing window 26 from stepped waveguide 1. Illuminator element group 31 in illuminator array 15 may provide a light cone 17 directed towards a viewing window 26. FIGURE 6B shows schematically the generation of viewing window 44. Illuminator element group 33 in illuminator array 15 may provide a light cone 19 directed towards viewing window 44. In cooperation with a time multiplexed display, windows 26 and 44 may be provided in sequence as shown in FIGURE 6C. If the image on a spatial light modulator 48 (not shown in FIGURES 6A, 6B, 6C) is adjusted in correspondence with the light direction output, then an autostereoscopic image may be achieved for a suitably placed viewer. Similar operation can be achieved with all the imaging directional backlights described herein. Note that illuminator element groups 31, 33 each include one or more illumination elements from illumination elements 15a to 15n, where n is an integer greater than one.

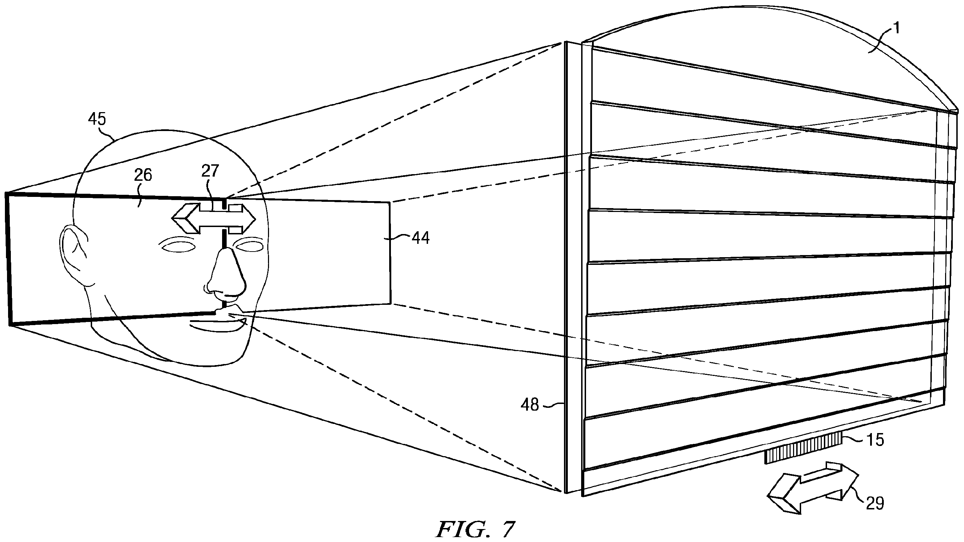

**FIGURE 7** is a schematic diagram illustrating one embodiment of an observer tracking autostereoscopic display apparatus including a time multiplexed directional display device. As shown in FIGURE 7, selectively turning on and off illuminator elements 15a to 15n along axis 29 provides for directional control of viewing windows. The head 45 position may be monitored with a camera, motion sensor, motion detector, or any other appropriate optical, mechanical or electrical means, and the appropriate illuminator elements of illuminator array 15 may be turned on and off to provide substantially independent images to each eye irrespective of the head 45 position. The head tracking system (or a second head tracking system) may provide monitoring of more than one head 45, 47 (head 47 not shown in FIGURE 7) and may supply the same left and right eye images to each viewers' left and right eyes providing 3D to all viewers. Again similar operation can be achieved with all the imaging directional backlights described herein.

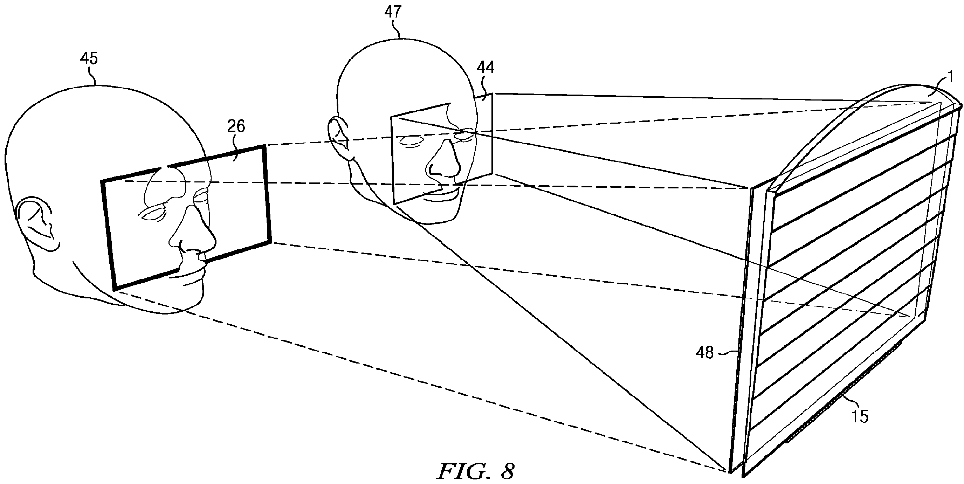

**FIGURE 8** is a schematic diagram illustrating one embodiment of a multi-viewer directional display device as an example including an imaging directional backlight. As shown in FIGURE 8, at least two 2D images may be directed towards a pair of viewers 45, 47 so that each viewer may watch a different image on the spatial light modulator 48. The two 2D images of FIGURE 8 may be generated in a similar manner as described with respect to FIGURE 7 in that the two images may be displayed in sequence and in synchronization with sources whose light is directed toward the two viewers. One image is presented on the spatial light modulator 48 in a first phase, and a second image is presented on the spatial light modulator 48 in a second phase different from the first phase. In correspondence with the first and second phases, the output illumination is adjusted to provide first and second viewing windows 26, 44 respectively. An observer with both eyes in viewing window 26 will perceive a first image while an observer with both eyes in viewing window 44 will perceive a second image.

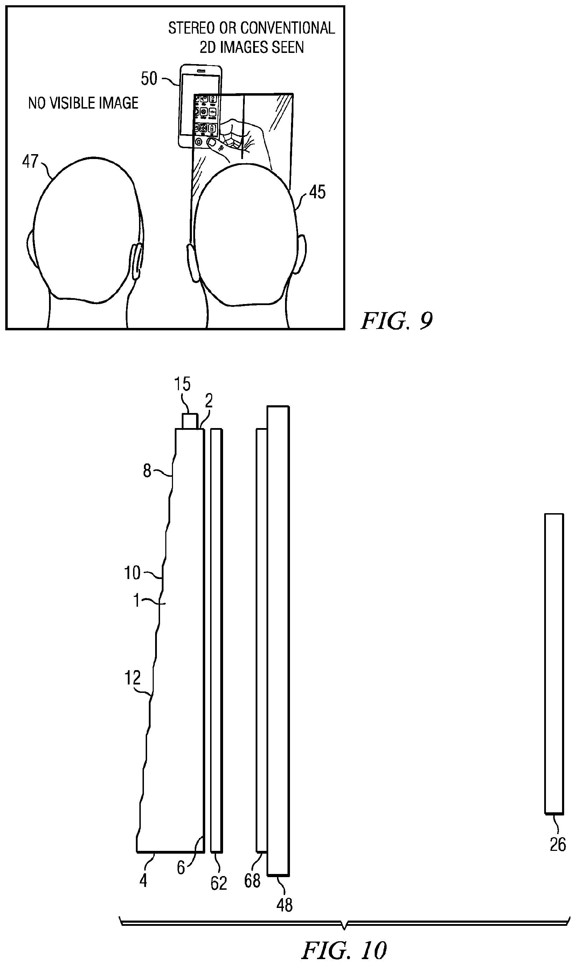

**FIGURE 9** is a schematic diagram illustrating a privacy directional display device which includes an imaging directional backlight. 2D display systems may also utilize directional backlighting for security and efficiency purposes in which light may be primarily directed at the eyes of a first viewer 45 as shown in FIGURE 9. Further, as illustrated in FIGURE 9, although first viewer 45 may be able to view an image on device 50, light is not directed towards second viewer 47. Thus second viewer 47 is prevented from viewing an image on device 50. Each of the embodiments of the present disclosure may advantageously provide autostereoscopic, dual image or privacy display functions.

**FIGURE 10** is a schematic diagram illustrating in side view the structure of a time multiplexed directional display device as an example including an imaging directional backlight. Further, FIGURE 10 shows in side view an autostereoscopic directional display device, which may include the stepped waveguide 1 and a Fresnel lens 62 arranged to provide the viewing window 26 for a substantially collimated output across the stepped waveguide 1 output surface. A vertical diffuser 68 may be arranged to extend the height of the viewing window 26 further. The light may then be imaged through the spatial light modulator 48. The illuminator array 15 may include light emitting diodes (LEDs) that may, for example, be phosphor converted blue LEDs, or may be separate RGB LEDs. Alternatively, the illuminator elements in illuminator array 15 may include a uniform light source and spatial light modulator arranged to provide separate illumination regions. Alternatively the illuminator elements may include laser light source(s). The laser output may be directed onto a diffuser by means of scanning, for example, using a galvo or MEMS scanner. In one example, laser light may thus be used to provide the appropriate illuminator elements in illuminator array 15 to provide a substantially uniform light source with the appropriate output angle, and further to provide reduction in speckle. Alternatively, the illuminator array 15 may be an array of laser light emitting elements. Additionally in one example, the diffuser may be a wavelength converting phosphor, so that illumination may be at a different wavelength to the visible output light.

There will now be described some waveguides, directional backlights and directional display devices that are based on and incorporate the structures of FIGURES 1 to 10 above. Except for the modifications and/or additional features which will now be described, the above description applies equally to the following waveguides, directional backlights and display devices, but for brevity will not be repeated. The waveguides described below may be incorporated into a directional backlight or a directional display device as described above. Similarly, the directional backlights described below may be incorporated into a directional display device as described above.

The present embodiments refer to optical windows and viewing windows. Optical windows from a directional backlight may be formed by one light source of the array 15 of light sources. Optical windows from a parallax element and spatial light modulator may be formed by a first set of pixel columns, each with one respective aligned slit of the parallax element. Viewing windows may comprise multiple optical windows.

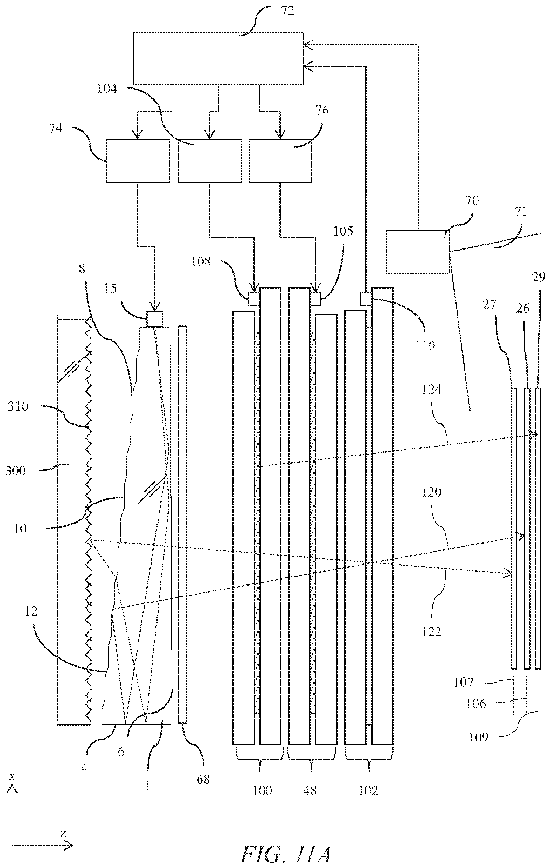

**FIGURE 11A** is a schematic diagram illustrating a directional display apparatus comprising a display device and a control system. The display device may comprise a directional backlight comprising waveguide 1, parallax element 100 and spatial light modulator 48 arranged in series. Further touch screen 102 may be arranged in series with the spatial light modulator 48, with the spatial light modulator typically arranged between the touch screen 102 and waveguide. The touch screen function may also be incorporated "on cell" using glass or films or "in cell" of spatial light modulator 48. Advantageously a thinner, lighter display is produced. Viewing windows 26 may be provided at window plane 106. Further viewing windows 27 may be produced by light from the waveguide 1 at window plane 107. Viewing windows 27, 26 may be substantially aligned with one another and window planes 106, 107 may be substantially coplanar and superimposed. Spatial light modulator 48 may cooperate with parallax element 100 to produce further viewing windows 29 at window plane 109. As will be described below, the viewing windows 29, 26 may be aligned and may have common window plane 106, 109 locations.

The arrangement and operation of the control system will now be described and may be applied, with changes as necessary, to each of the display devices disclosed herein.

The directional display device comprises a directional backlight that comprises waveguide 1 and an array of illuminator elements 15 arranged as described above. The control system is arranged to selectively operate the illumination elements 15a-15n of the array of illuminator elements 15, to direct light into selectable optical windows, in combination the optical windows providing viewing windows 26.

The waveguide 1 is arranged as described above. The reflective end 4 converges the reflected light. A Fresnel lens 62 (not shown) may be arranged to cooperate with reflective end 4 to achieve viewing windows 26 at a viewing plane 106 observed by an observer 99 (not shown). A transmissive spatial light modulator (SLM) 48 may be arranged to receive the light from the directional backlight. Further a diffuser 68 may be provided between the waveguide 1 and spatial light modulator 48 to substantially remove Moire beating between the waveguide 1, rear reflector 300 and pixels of the SLM 48.

As illustrated in FIGURE 11A, a directional backlight may include a stepped waveguide 1 and a light source illuminator array 15. As illustrated in FIGURE 11A, the stepped waveguide 1 includes a light directing side 8, a reflective side 4, guiding features 10 and light extraction features 12.

The control system may comprise a sensor system arranged to detect the position of the observer 99 relative to the display device 100. The sensor system comprises a position sensor 70, such as a camera with image capture cone 71 directed towards viewing window 26, and a head position measurement system 72 that may for example comprise a computer vision image processing system. The control system may further comprise an illumination controller 74 and an image controller 76 that are both supplied with the detected position of the observer supplied from the head position measurement system 72.

The illumination controller 74 selectively operates the illuminator elements 15a-15n to direct light to into the viewing windows 26 in cooperation with waveguide 1. The illumination controller 74 selects the illuminator elements 15a-15n to be operated in dependence on the position of the observer detected by the head position measurement system 72, so that the viewing windows 26 into which light is directed are in positions corresponding to the left and right eyes of the observer 99. In this manner, the lateral output directionality of the waveguide 1 corresponds with the observer position.

The image controller 76 controls the SLM 48 to display images. Image controller 76 may be connected to pixel drive element 105 on the spatial light modulator 48 arranged to address the pixels of the spatial light modulator as will be further described below. In one mode of operation, to provide an autostereoscopic display, the image controller 76 and the illumination controller 74 may operate as follows. The image controller 76 controls the SLM 48 to display temporally multiplexed left and right eye images. The illumination controller 74 operate the light sources 15a-15n to direct light into viewing windows in positions corresponding to the left and right eyes of an observer synchronously with the display of left and right eye images. In this manner, an autostereoscopic effect is achieved using a time division multiplexing technique.

The parallax controller 104 is arranged to provide drive signals to parallax drive element 108 that is used to adjust the arrangement of the parallax element 100 according to the controller 72. Parallax element 100 may be directly driven, may be spatially multiplexed, may be temporally multiplexed or may use a combination of spatial and temporal multiplexing. Further parallax element 100 may be arranged to switch between a parallax mode and a non-parallax mode wherein it is substantially transparent.

The above descriptions may apply to each or all of the following apparatuses, modifications and/or additional features, individually, or any combination thereof, which will now be described.

In another embodiment, a directional display apparatus may further include a control system which may be arranged to selectively operate the light sources to direct light into viewing windows corresponding to output directions as previously discussed. This embodiment may also be used in conjunction with any of the directional backlights, directional display devices, directional display apparatuses, and so forth as described herein.

In another embodiment, a directional display apparatus may be an autostereoscopic display apparatus with a control system. The control system may be further arranged to control the directional display device to temporally display multiplexed left and right images and to substantially synchronously direct the displayed images into viewing windows in positions corresponding to at least the left and right eyes of an observer. The control system may include a sensor system which may be arranged to detect the position of an observer across the display device, and the control system also may be arranged to direct the displayed images into viewing windows in positions corresponding to at least the left and right eyes of an observer. The position of the viewing windows may primarily depend on the detected position of the observer.

Thus a directional display device may comprise a first guide surface 6 arranged to guide light by total internal reflection and a second guide surface that comprises a plurality of light extraction features 12 oriented to direct light guided through the waveguide 1 in directions allowing exit through the first guide surface 6 as the output light and intermediate regions 10 between the light extraction features 12 that are arranged to guide light through the waveguide 1.

The second guide surface has a stepped shape comprising facets that are the light extraction features 12, and the intermediate regions 10. The directional backlight further comprises a rear reflector 300 comprising a linear array of reflective facets 310. The rear reflector 300 may be arranged to reflect light from the light sources 15a-15n of the array of illuminator elements 15, in which the light is first transmitted through the plurality of facets 12 of the waveguide 1, reflected off the rear reflector 300 back through the waveguide 1 to exit through the first guide surface 6 into said optical windows (that may form viewing windows 26). The light extraction features have positive optical power in the lateral direction, for example as shown in FIGURE 4B.

A directional display apparatus may comprise a directional display device and a control system arranged to control the light sources of the array 15 to direct light into optical windows for viewing by an observer. Further, a directional display apparatus may comprise a directional display device comprising a spatial light modulator 48 and parallax element 100, wherein the parallax element 100 is controllable to select the position of the viewing windows 26; and a control system 72, 74, 76, 104 arranged to control the light sources 15a-15n of the array of illuminator elements 15 to direct light into optical windows for viewing by an observer and to control the parallax element 100 in a coordinated manner to direct light into viewing windows 26 for viewing by the same observer. The directional display apparatus may further comprise a sensor system 70 arranged to detect the position of the head of the observer, the control system 72 being arranged to control the light sources 15a-15n of the array of illuminator elements 15 by means of light source controller 74 and the parallax element 100 by means of parallax element controller 104 and parallax drive element 108 in accordance with the detected position of the head of the observer. The control system 72 may be further arranged to control the spatial light modulator 48 by means of controller 76 and pixel drive element 105, for example by means of interlacing pixel columns of left and right eye image data on the spatial light modulator as will be described.

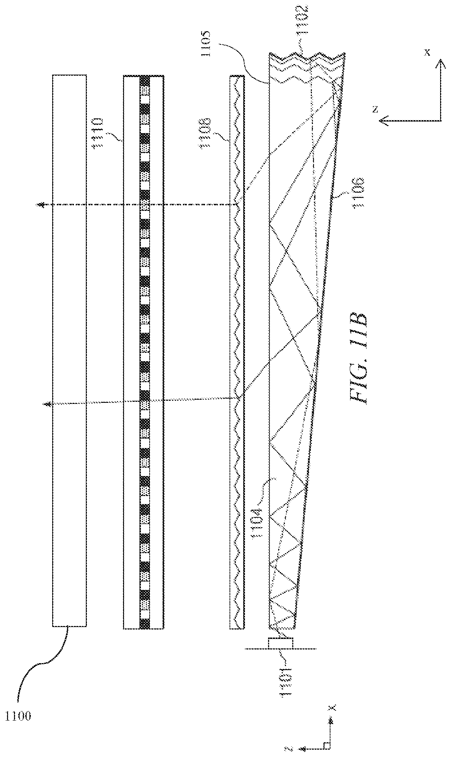

**FIGURE 11B** is a schematic diagram illustrating in side view, the structure of a directional display device comprising a wedge waveguide 1104 with faceted mirror end 1102. The first guide surface 1105 of the waveguide 1104 is arranged to guide light by total internal reflection and the second guide surface 1106 is substantially planar and inclined at an angle to direct light in directions that break the total internal reflection for outputting light through the first guide surface 1105. The display device further comprises a deflection element 1108 extending across the first guide surface 1105 of the waveguide 1104 for deflecting light from array 1101 of light sources towards the normal to the first guide surface 1105. Further the waveguide 1104 may further comprise a reflective end 1102 for reflecting input light back through the waveguide 1104, the second guide 1106 surface being arranged to deflect light as output light through the first guide surface 1105 after reflection from the reflective end 1102. The reflective end has positive optical power in the lateral direction (y-axis) in a similar manner to the reflective end shown in FIGURE 5 for example. Further facets in the reflective end 1102 deflect the reflected light cones within the waveguide 1104 to achieve output coupling on the return path. Thus viewing windows are produced in a similar manner to that shown in FIGURE 11A. Further the directional display may comprise a spatial light modulator 1110 and parallax element 1100 aligned to the spatial light modulator 1110 that is further arranged to provide optical windows. A control system 72 similar to that shown in FIGURE 11A may be arranged to provide control of directional illumination providing viewing windows 26 and windows 109 from the parallax element and aligned spatial light modulator.

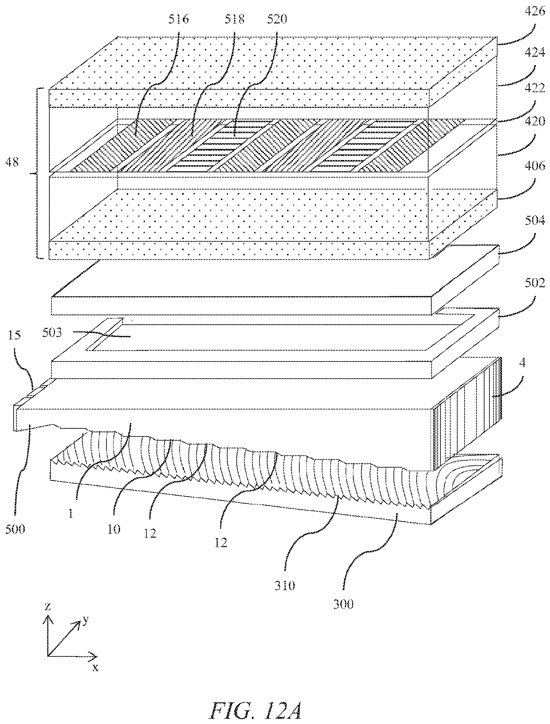

**FIGURE 12A** is a schematic diagram illustrating in perspective view, the structure of a directional display device comprising a waveguide 1 arranged with a spatial light modulator. Reflective end 4 may be provided by a Fresnel mirror. Further taper region 500 may be arranged at the input to the waveguide 1 to increase input coupling efficiency from the light sources 15a-15n of the array of illuminator elements 15 and to increase illumination uniformity. Shading layer 502 with aperture 503 may be arranged to hide light scattering regions at the edge of the waveguide 1. Rear reflector 300 may comprise facets 310 that are curved and arranged to provide viewing windows 27 from groups of optical windows provided by imaging light sources of the array 15 to the window plane 27. Optical stack 504 may comprise reflective polarizers, retarder layers and diffusers. Rear reflectors 300 and optical stack 504 are described further in U.S. Patent Application No. 14/186,862, filed February 21, 2014, entitled "Directional backlight" (Attorney Ref. No. 95194936.355001).

Spatial light modulator 48 may comprise a liquid crystal display that may comprise an input polarizer 406, TFT glass substrate 420, liquid crystal layer 422, color filter glass substrate 424 and output polarizer 426. Red pixels 516, green pixels 518 and blue pixels 520 may be arranged in an array at the liquid crystal layer 422. White, yellow, additional green or other color pixels (not shown) may be further arranged in the liquid crystal layer to increase transmission efficiency, color gamut or perceived image resolution.

In 2D operation such displays may be arranged to provide high efficiency by directing light to viewing windows near an observer and not wasting light in directions that are not in the region of the observer's eyes. Further such displays can desirably provide high luminance for improved visibility in environments with high ambient illuminance.

The spatial light modulator may be a temporally multiplexed spatial modulator with a frame rate of 120Hz for example, achieving autostereoscopic images comprising left and right images with a 60Hz frame rate. Such a directional display device may achieve autostereoscopic display through temporal multiplexing as described above. Such temporally multiplexed displays can undesirably provide cross talk due to scatter from components arranged to achieve high spatial and angular uniformity from the waveguide components in the backlight. Further fast switching spatial light modulators are required, increasing cost and complexity. Temporal cross talk in fast switching spatial light modulators can further degrade image cross talk. Control of cross talk may be provided by reducing illumination time, undesirably reducing display luminance and efficiency.

Cross talk arises from leaking of light comprising left eye image data into the right eye of an observer and vice versa. Cross talk may arise from sources that may include but are not limited to scatter and diffraction, wide viewing window overlap, electronic cross talk within the spatial light modulator and inadequate spatial light modulator response time. High cross talk may undesirably provide user discomfort, reduced operating times, limited depth presentation and other detrimental image artifacts. Desirable cross talk may be less than 10%, preferably less than 5%, more preferably less than 2.5% and most preferably less than 1%.

It may be desirable to reduce the cross talk of temporally multiplexed autostereoscopic displays using directional backlights. Further it may be desirable to provide advantages of high efficiency and high luminance for outdoors use of directional backlight displays, particularly for 2D applications.

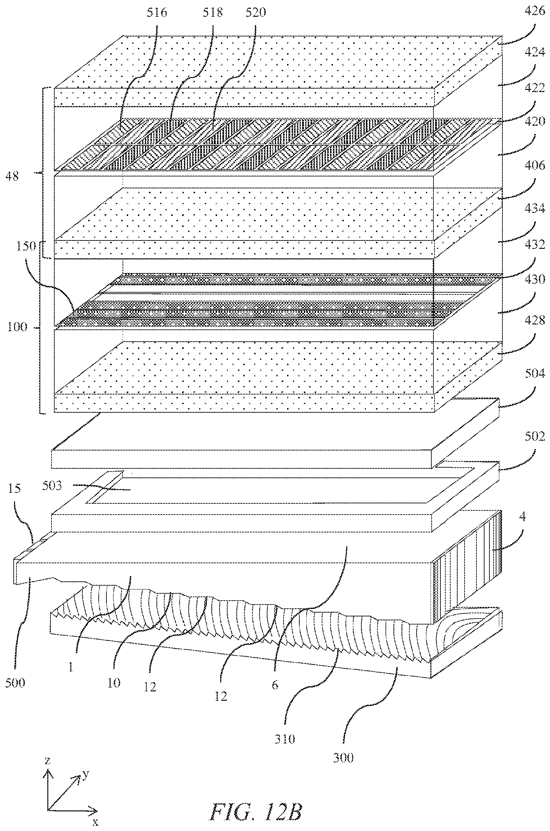

**FIGURE 12B** is a schematic diagram illustrating in perspective view, the structure of a directional display device of FIGURE 11A comprising a directional backlight arranged with a spatial light modulator 48 and aligned rear parallax element 100. In particular, a directional display device comprises a directional backlight comprising a waveguide 1 comprising first and second, opposed guide surfaces for guiding input light along the waveguide 1, and an array 15 of light sources 15a-15n of the array of illuminator elements 15 arranged to generate the input light at different input positions in a lateral direction (y-axis) across the waveguide 1, wherein the second guide surface is arranged to deflect light guided through the waveguide 1 out of the waveguide 1 through the first guide surface 6 as output light, and the waveguide is arranged to direct the output light into optical windows in output directions that are distributed in a lateral direction (y-axis) in dependence on the input position of the input light; a transmissive spatial light modulator 48 comprising an array of pixels 516, 518, 520 arranged to receive the output light from the waveguide 1 and to modulate it to display an image; and in series with the spatial light modulator 48 a parallax element 100 arranged to direct light from pixels of the spatial light modulator into viewing windows.

The parallax element 100 may be a parallax barrier. The parallax barrier may comprise a liquid crystal barrier element array. an input polarizer 428, substrate 430 that may be an electrode substrate, liquid crystal layer 432, and substrate 434 that may be an electrode substrate. At least one of substrates 430, 434 may have a patterned electrode array comprising barrier elements 150 as will be described below.

Such a display device may achieve autostereoscopic display through temporal multiplexing, spatial multiplexing and a combination of temporal and spatial multiplexing as will be described below.

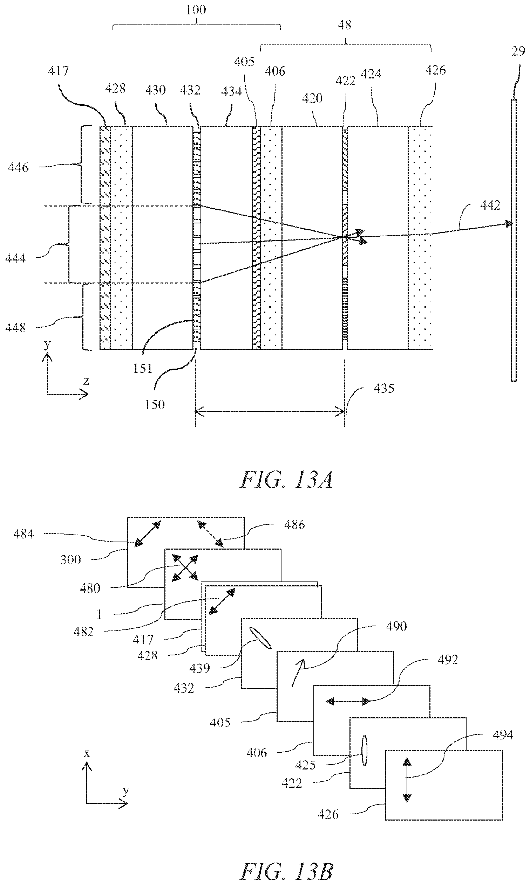

**FIGURE 13A** is a schematic diagram illustrating in top view, the structure of part of a directional display device comprising a spatial light modulator 48 and aligned rear parallax element 100. The parallax barrier may comprise a barrier element with a fixed layer comprising light absorbing regions and light transmitting regions. It may be desirable that the barrier can be switched between a two dimensional mode wherein the light absorbing regions are arranged to switch to a transmitting state, so that no parallax effect is achieved. Such a switching barrier can be provided by the arrangement of FIGURES 12B and 13A. Polarizers 428, 406 and liquid crystal layer 432 comprising patterned electrode layers are arranged to switch the incident polarization from polarizer 428 between absorption and transmission at polarizer 406 relating to the control of patterned electrode layers. Thus polarizer 406 advantageously provides functionality for barrier element 100 and spatial light modulator 48.

The parallax element 100 may comprise light absorbing regions 446 with transmitting slits 444. As will be shown below the barrier may be switched between a have (i) one slit for every pixel, (ii) one slit for each group of pixels, for example a group may comprise two columns of pixels (iii) a fully transmitting mode for 2D operation. The geometry of window formation is determined by the separation 435 of the pixel plane and barrier elements comprising layers 422, 432 as well as the size of the pixels on the spatial light modulator in the lateral (y-axis) direction and the desirable window size and viewing distance.

Further layers comprising reflective polarizer 417 and retarder 405 may be arranged to provide polarization recirculation and optimization of viewing angle as will be described in FIGURE 13B.

Two view parallax barrier displays using such pixel resolutions require small separations between the parallax barrier 100 and pixel plane 422; such separations may be smaller than that which can be achieved for desirable thicknesses of substrates 420, 434. For example a 500ppi spatial light modulator 48 may require a separation 435 of pixels 422 and barrier elements 150 of 350microns. If a 100 micron polarizer 406 is provided, substrates 420, 434 will each have a thickness of 125microns, which may reduce yield and increase cost. It may be desirable to reduce the cost of a parallax barrier display using a high resolution spatial light modulator.

In operation, light from slit region 444 is directed along rays 442 to viewing windows 29. The barrier may be comprised of multiple barrier elements 150 that may be provided by the electrodes of the parallax barrier element 100 layer 432. Thus the slit region 444 comprises multiple barrier elements 150 as will be described for observer tracking, below.

**FIGURE 13B** is a schematic diagram illustrating in front view, the alignment of polarization directions in the optical stack of FIGURE 13A when combined with waveguide 1 and rear reflector 300. Rear reflector 300 may comprise a prismatic structure arranged to achieve rotation of incident polarization as described in U.S. Patent Application No. 14/137,569, filed December 20, 2013, entitled "Superlens component for directional display" (Attorney Ref. No. 95194936.351001).

In operation light with unpolarized state 480 is outputted from the waveguide 1, some of which propagates directly to the reflective polarizer 417 aligned with polarizer 428, both of which may have a polarization state transmission direction oriented at 45 degrees to the horizontal. Some of the light is directed to the rear reflector 300 and returned through the waveguide 1 to the reflective polarizer 417. Light with polarization state 482 is passed through polarizers 417, 428 while light with polarization state 486 is reflected by polarizer 417 through waveguide 1 onto rear reflector 300. Reflector 300 may comprise a prismatic structure that rotates the polarization state so that state 484 is reflected and transmitted through waveguide 1 and polarizers 417, 428. Liquid crystal material 439 in layer 432 is switched to provide transmission or absorption of light at polarizer 492 after passing through retarder 405. Retarder 405 is arranged to rotate the polarization transmission direction for polarized light from layer 432 and may have for example an orientation of 22.5degrees to the vertical. Retarder may be a single retarder layer or may be a retarder stack such as a Pancharatnum stack, as known in the art. The 45 degrees output angle of light from the layer 432 may be rotated through 45 degrees to provide a horizontal or vertical polarization state incident onto polarizer 406 which may be arranged to transmit polarization state 492 and output polarizer 426 with polarization transmission state 494. Thus spatial light modulator 48 may comprise a liquid crystal mode such as an in-plane switching, fringe field switching or vertical alignment mode that preferably has a polarizer orientation of 0 degrees, whereas the parallax element 100 may comprise for example a twisted nematic mode that preferably has a polarizer orientation of 45 degrees.

Advantageously the parallax element 100 may comprise a low cost liquid crystal mode with desirable switching properties for substantially on-axis viewing with high contrast and high aperture ratio. The spatial light modulator 48 mode may be arranged to provide wide viewing angle high contrast image data. Retarder 405 may comprise one substrate, for example birefringent TAC of polarizer 406 and may thus have low thickness for use in high resolution LCDs.

In some arrangements it may be desirable to reduce the separation 435 to values that are smaller than can be conveniently be achieved by reducing the thickness of substrates 420, 434 and polarizer 406.

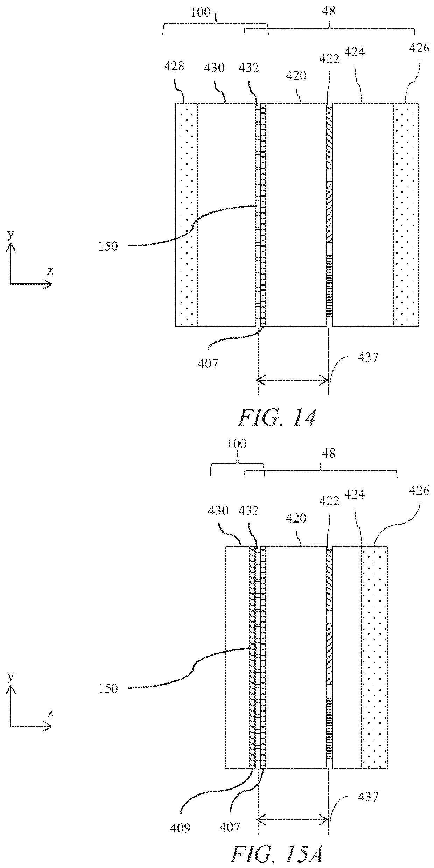

**FIGURE 14** is a schematic diagram illustrating in top view, the structure of part of a directional display device comprising a spatial light modulator and aligned rear parallax element further comprising an in-cell polarizer. In-cell polarizer layer 407 may comprise for example a wire grid polarizer on which controllable electrodes are arranged. Such an in-cell polarizer 407 desirably can remove the thickness of polarizer 406 and substrate 434 from the separation 437, and advantageously achieve desirable window sizes for very small pixel sizes. The wire grid polarizer may be arranged on the outer side of the TFT substrate 420 during fabrication of the spatial light modulator 48.

It may further be desirable to reduce the overall stack thickness compared to that of FIGURE 13A while maintaining the separation 437.

**FIGURE 15A** is a schematic diagram illustrating in top view, the structure of part of a directional display device comprising a spatial light modulator and aligned rear parallax element further comprising two in-cell polarizers. The polarizer 428 and substrate 430 of FIGURE 14 are replaced by second wire grid polarizer 409 and substrate 430. Advantageously total stack thickness may be substantially reduced in comparison to the arrangement of FIGURE 13A while maintaining desirable window properties for autostereoscopic operation. As will be described below, the window imaging properties of the present embodiments may be provided by parallax elements that have higher cross talk levels compared to those that may be typically desirable for prior art switchable parallax barrier displays. Thus the optical performance of the wire grid polarizers 407, 409 may advantageously be lower than for polarizers 428, 406 in known switchable parallax barrier displays.

During manufacture, SLM 48 may be formed with a wire grid polarizer on TFT substrate 420. Parallax element 100 may then be formed on the outer surface of the SLM 48 with substrate 430 and filled with liquid crystal. The sandwich of substrates 430, 420, 424 may then be thinned, for example by means of chemical-mechanical polishing. Advantageously a thin stack may be achieved with a desirable separation 437 between pixel layer 422 and barrier layer 432.

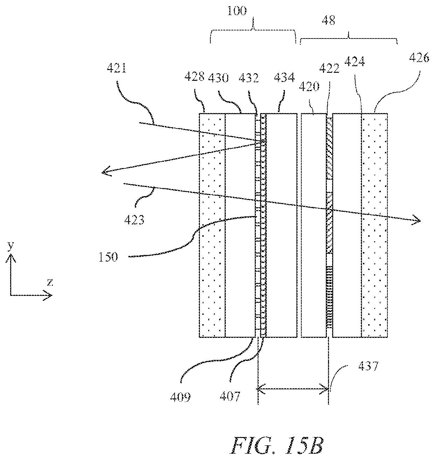

**FIGURE 15B** is a schematic diagram illustrating in top view, the structure of part of a directional display device comprising a spatial light modulator and aligned rear parallax element comprising an in-cell polarizer. The parallax element may advantageously be provided by a separate structure to the spatial light modulator, improving manufacturing yield. In comparison to the arrangement in FIGURE 13A, advantageously the separation 437 between the layers 422, 432 is reduced compared to the thickness 435 as the thickness of polarizer 406 is removed, replaced by wire grid polarizer within the layer 432. Further in comparison with FIGURE 13A, light rays 421 incident on barrier regions are reflected, and can be recycled in the backlight, whereas light rays 423 are transmitted and directed to viewing windows. The system efficiency is thus increased.

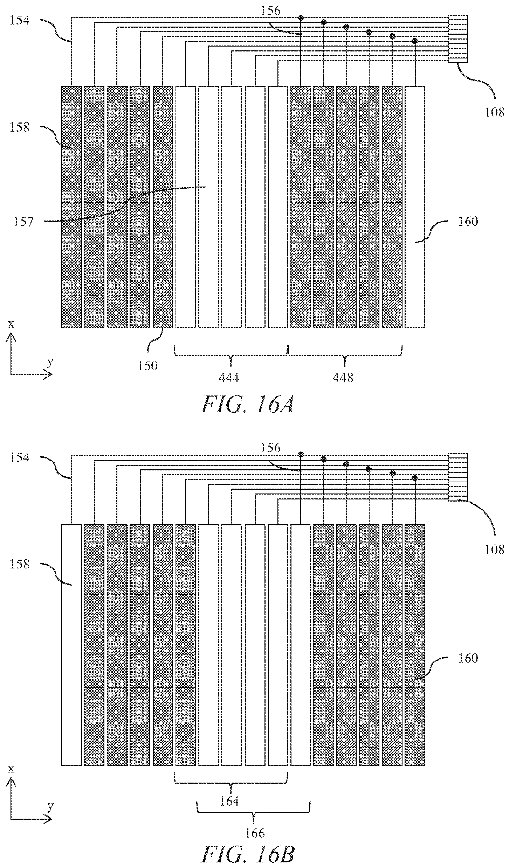

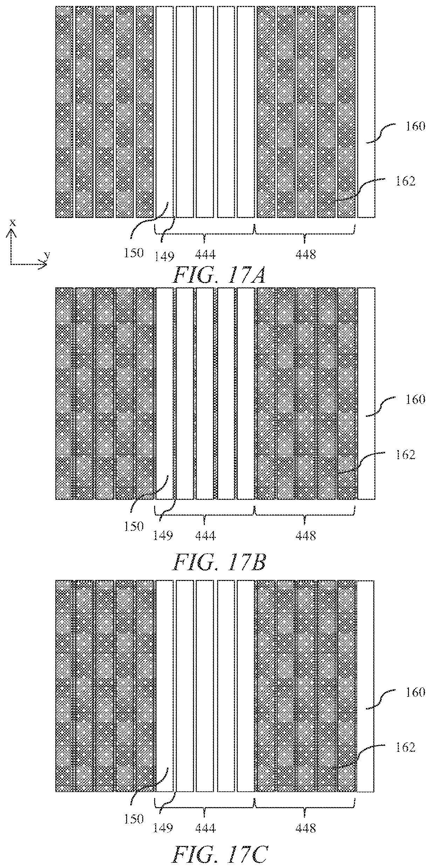

**FIGURES 16A-16B****, and** **FIGURES 17A-17E** are schematic diagrams illustrating in front view, the structures of parallax elements 100 arranged so that the parallax element 100 is controllable to select the position of the viewing windows 29. The parallax element 100 is a parallax barrier comprising an array of barrier elements 150 that are controllable to block or transmit light, and thereby to select the position of the viewing windows.

Barrier controller 108 is arranged to control barrier elements 150 by means of electrodes 154, typically by applying a voltage to the liquid crystal layer in the region of the barrier element 150. Thus elements 158 have a voltage applied to achieve a substantially absorbing barrier region 448 when used in combination with the respective polarizers 406, 428 of the optical stack. Elements 157 have a different voltage applied (that may be zero) to provide light transmission in the slit region 444. The elements 157 are retarder elements with absorption taking place in polarizer 406 at the input to the SLM 48. However, the barrier location is at the plane of the retarder barrier element 150. For convenience, such retarder regions are referred to as absorption regions in relation to their role as barrier regions of a parallax barrier 100.

The (n+1)th electrode 156 may be connected to the first electrode in a repeating pattern to advantageously reduce the number of electrode lines desirable for the addressing of the barrier elements 150. In this manner, respective aligned barrier elements and slits for each pixel of the spatial light modulator 48 may be controlled in the same manner. The pitch of the barrier elements may be arranged to provide slit regions 444 that have a pitch to achieve view point correction across the width of the display, so that viewing windows are substantially directed to the same plane from all points on the display surface, optimizing window switching quality for a moving observer across the whole of the display width in the lateral direction.

In operation, each barrier element 150 provides an optical window at the window plane 109 and in combination, the optical windows provide viewing window 29. The control system 72 shown in FIGURE 11A may identify a moving observer and that it may be desirable to adjust the lateral position of viewing window 29. Barrier controller 108 adjusts the driving of barrier elements 150 to provide new slot regions 166 and thus a different viewing window position in the lateral direction. Thus element 158 switches from absorbing to transmitting operation and element 160 switches from transmitting to absorbing operation.

The liquid crystal mode of layer 432 may be provided by for example twisted nematic, super-twisted nematic, vertical alignment, fringe field switching, in-plane switching, pi-cell or optically compensated bend, or other liquid crystal modes. The mode may be selected to achieve an optimized combination of at least switching speed, transmittance, chromaticity, black level in the region of the elements 158, black level in the region of the gaps between elements 158, contrast viewing angle and addressing electrode aperture ratio. Advantageously the present embodiments can achieve improved performance with liquid crystal modes that may not achieve low cross talk and other desirable display characteristics in parallax barrier displays with conventional backlights.

The operation of the gap region 162 between the barrier elements 150 will now be described. As shown in FIGURE 17A, the gap regions 162 may be transmitting, or as shown in FIGURE 17B they may be absorbing. Desirably in known displays, the gap regions are absorbing to reduce cross talk from light transmission in the absorbing regions 448. However, absorbing gap regions also results in loss of display luminance from absorption in the slit region 444. Advantageously as shown below the present embodiments achieve reduced cross talk in arrangements wherein light is transmitted in barrier regions 448, as shown in FIGURE 17A. Thus the display luminance can be increased while display cross talk can be reduced in comparison with known arrangements. Further fast liquid crystal modes such as Pi-cell modes are typically normally white operation.

FIGURES 17A-B illustrating gaps 149 and 162 that are both transmitting or both absorbing respectively in both of slit region 444 and absorbing region 448. FIGURE 17C illustrates transmitting gaps 149 in slit regions 444 and absorbing gaps 162 in the absorbing regions. Advantageously luminance may be increased and cross talk reduced.

In a typical electronically switchable parallax barrier, a liquid crystal cell gap of between 2 microns and 20microns may be provided. A typical cell gap may be between 10 and 15microns and may be 12 microns for example. For a gap 149 between adjacent electrode elements 150, such a cell gap may achieve gap switching; that is liquid crystal material reorientation of regions between elements of the parallax barrier by means of electric field coupling between electrodes. In particular gap switching may be arranged to switch the electrode gaps in barrier regions to block light while the electrode gaps in slit regions are transmitting. However, such liquid crystal cell gaps may limit the resolution of the barrier 100. For example, gap 149 between elements may have a width of 5 microns, and the elements may be on a pitch of 20 microns. If 10 elements 150 are required per barrier pitch, then the minimum barrier pitch will be 200microns. For a two view display, such a pitch may require an LCD of pitch 100microns; being appropriate for a 250ppi panel. Thus a gap 149 between elements 150 of width 2.5 microns or less may be desirable for a spatial light modulator of 500ppi or greater. Such gaps may reduce the yield and increase cost of the parallax barrier 100.

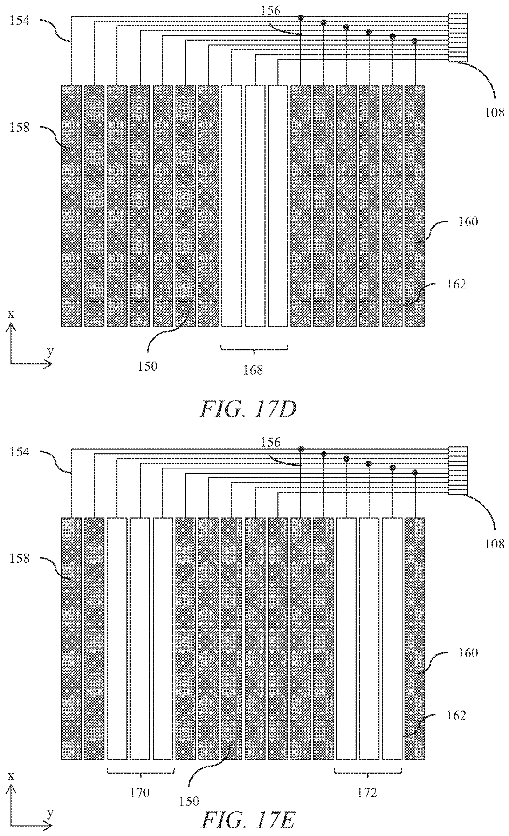

FIGURE 17D shows an arrangement of barrier elements arranged to achieve reduced cross talk by reducing the width of the slit region 168 in comparison to the width 444 of FIGURE 17B. Thus the display can be provided with a tuneable cross talk control method wherein the slit width is adjusted to suit the application and reliability of observer tracking. In operation, narrower slit widths can cause increased non-uniformities due to imaging of the black mask regions between the pixels of the SLM 48 into the viewing windows 29. However, if the tracking system is achieving reliable quality, the visibility of these non-uniformities to the tracked user can be reduced, and the slit width adjusted accordingly, advantageously reducing image cross talk.

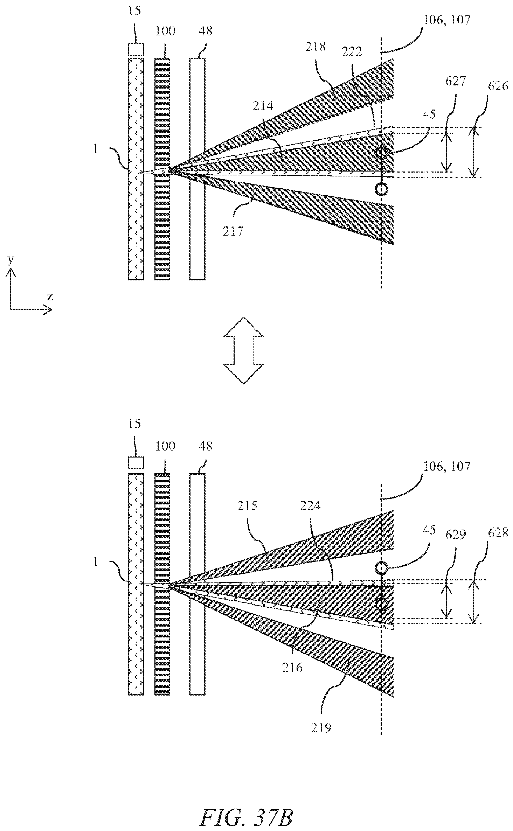

FIGURE 17E shows an arrangement of barrier elements 150 that may be used in antiphase to the arrangement of FIGURE 17D when employed in a time multiplexed parallax barrier, as will be described with reference to FIGURE 37B. Advantageously the parallax barrier elements can be switched to achieve a low cross talk temporally multiplexed display.

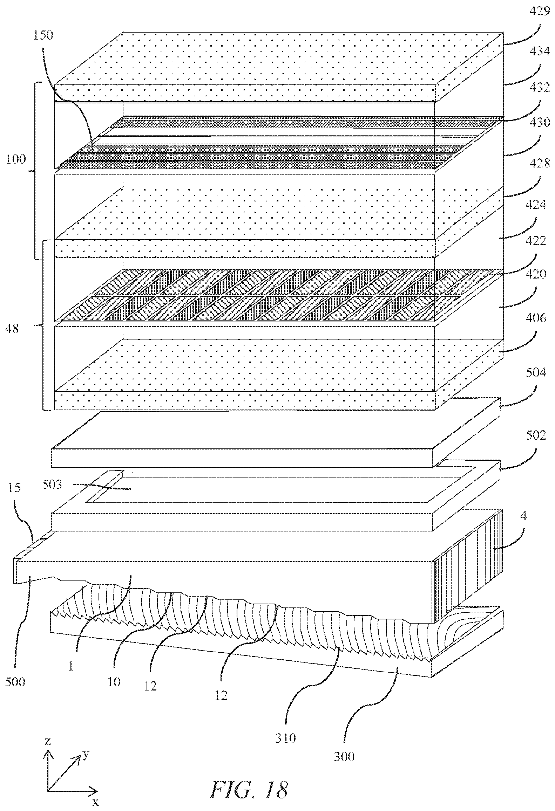

**FIGURE 18** is a schematic diagram illustrating in perspective view, the structure of a directional display device comprising an imaging waveguide arranged with a spatial light modulator and aligned front parallax element. In comparison to FIGURE 12B, the spatial light modulator 48 is arranged between the parallax barrier and directional backlight comprising waveguide 1. Advantageously the uniformity of viewing windows that can be achieved can be increased as such a device may operate in the Fraunhofer diffraction regime as opposed to the Fresnel diffraction regime of rear barrier of FIGURE 12B.

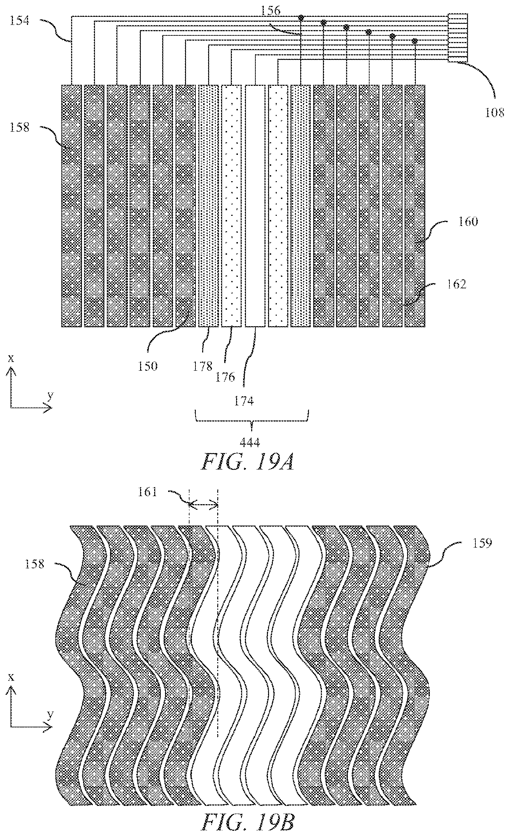

**FIGURE 19A** is a schematic diagram illustrating in front view, the structure of a parallax barrier comprising slot regions that are grey scale addressed. The barrier elements 174, 176, 178 may have grey scale levels that vary with position across the slit 444 by controlling the voltage applied to the respective barrier elements by means of controller 108 and electrodes 154. Advantageously diffraction from the barrier can be reduced due to apodisation, thereby increasing window uniformity.

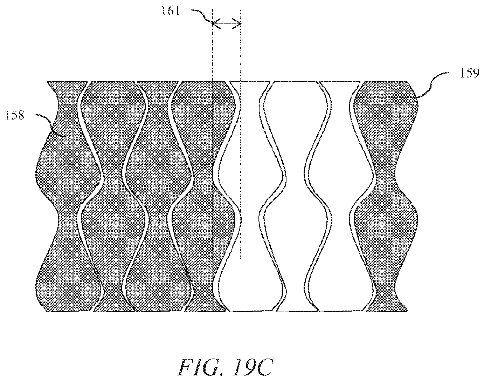

**FIGURE 19B-19C** are schematic diagrams illustrating in front view, structures of parallax barrier comprising slot regions that are arranged with an increased extent 161 in the lateral direction. Edge 159 of elements 158 may be arranged with a wobble or other lateral variation in the lateral (y-axis) direction to achieve extent 161. Advantageously, apodisation in the lateral direction may be achieved and barrier visibility may further be reduced. The edges 159 may be the same or may vary in amplitude and phase between at least two elements such as shown in FIGURE 19C to achieve reduced Moire visibility and to provide increased blur region between viewing windows, improving uniformity.

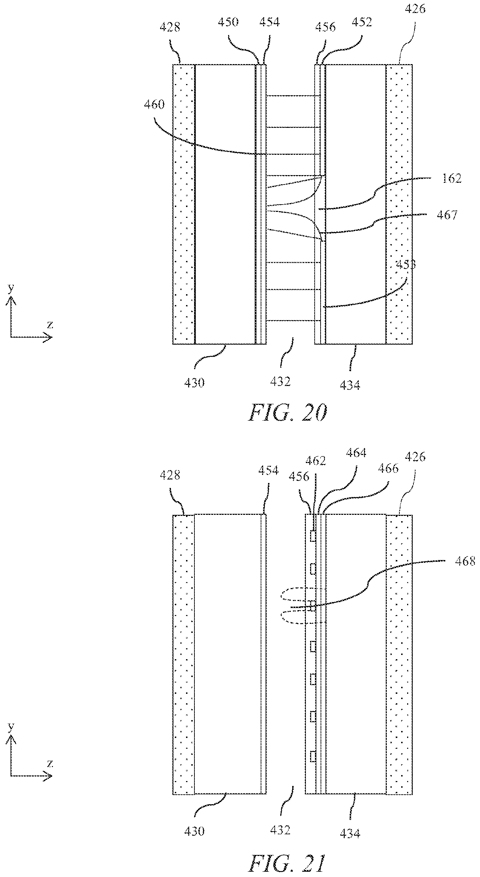

**FIGURE 20** is a schematic diagram illustrating in top view, the structure of a switchable parallax barrier comprising gap switching barrier elements. Substrate 430 has uniform electrode 450 and liquid crystal alignment layer 454 arranged on its surface. Substrate 434 has patterned electrodes 452, 453 and liquid crystal alignment layer 456 arranged on its surface with liquid crystal layer 432 arranged therebetween. On application of an electric field to adjacent electric fields, the electric field directions 467 in the region of the gap 462 are distorted to provide substantially continuous liquid crystal director orientation between the respective electrode regions.

**FIGURE 21** is a schematic diagram illustrating in top view, the structure of a switchable parallax barrier comprising fringe field switching barrier elements. Substrate 430 may be provided with no electrode, while substrate 434 has a first continuous electrode 466, a dielectric layer 464, a pattered electrode 462 and liquid crystal alignment layer 456. Distorted electric field lines 468 can achieve liquid crystal alignment in the gaps between the patterned electrodes 562 to provide substantially continuous liquid crystal director orientation between the respective electrode regions.

As shown in FIGURE 17B it can be desirable to provide light absorbing regions in the gaps 462 between the electrodes 452, 453. For example, a barrier element 150 comprises input polarizer 428, liquid crystal layer 432 in the region of the electrode 452 and polarizer 426. Advantageously the arrangements of FIGURES 20-21 can achieve switching of the liquid crystal in the gaps 162 between the barrier elements 150, reducing cross talk or increasing brightness.

It may be desirable to provide displays that can switch between landscape and portrait orientation, for example for use in mobile displays.

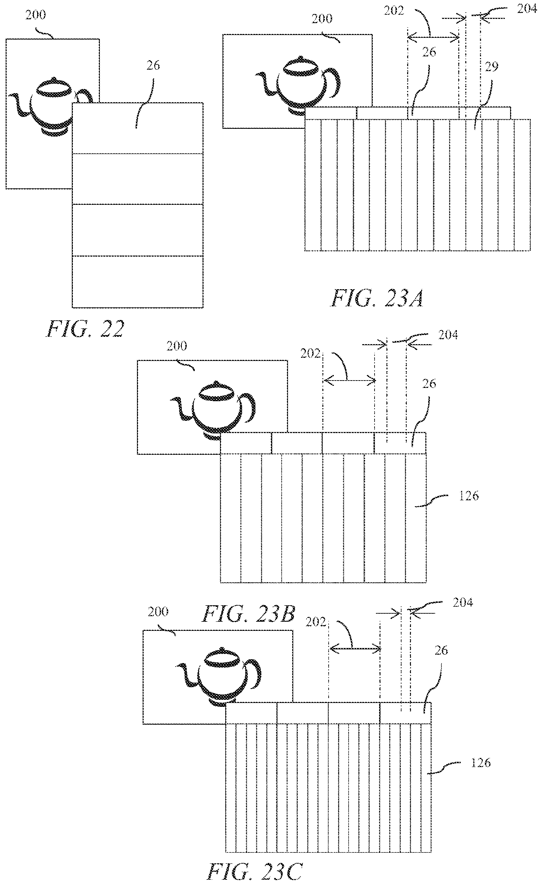

**FIGURE 22** is a schematic diagram illustrating in perspective front view, the arrangement of optical windows in portrait mode of the switchable autostereoscopic display of FIGURE 12B. Optical windows from imaging of the light sources 15a-15n of the array of illuminator elements 15 of the directional backlight are arranged to provide viewing windows 26 that are horizontal when the display 200 is arranged in portrait orientation. The switchable parallax barrier 100 is arranged to be transmissive and no separate viewing windows 29 are produced by the barrier. Advantageously, such a display can achieve high efficiency of operation for extended battery lifetime. Further, a wide angle mode of operation can be achieved by switching more optical windows on and controlling the grey scale profile of the respective optical windows. Further, for the same power consumption as a wide angle mode, a very high luminance display can be achieved, for example for use in outdoors with high illuminance levels. In comparison to the arrangement of FIGURE 12A, the efficiency of such a display may be reduced primarily by the parallel polarization transmission efficiency of the polarizer 428 as shown in FIGURE 12B, for example such relative efficiency may be 90%.

The viewing window arrangement of FIGURE 22 does not provide for autostereoscopic display operation.

**FIGURES 23A-23C** are schematic diagrams illustrating in perspective front views, the arrangement of optical windows in landscape mode of the switchable autostereoscopic display of FIGURE 12B. Viewing windows 26 of display 200 arising from the directional backlight are vertically oriented and viewing windows 29 from the parallax element are further vertically oriented. The viewing windows 26 may have a pitch 202 that is different from the pitch 204 of the viewing windows 29. The pitch 202 may be greater than the pitch 204. As shown in FIGURE 23B the pitch 202 may be a half integer multiple of the pitch. As shown in FIGURE 23C the pitch 202 may be an integer multiple of the pitch 204. Desirably the viewing windows 26, 29 may be substantially aligned to achieve alignment of left and right eye viewing windows for windows 26, 29. Such arrangements can advantageously reduce cross talk.

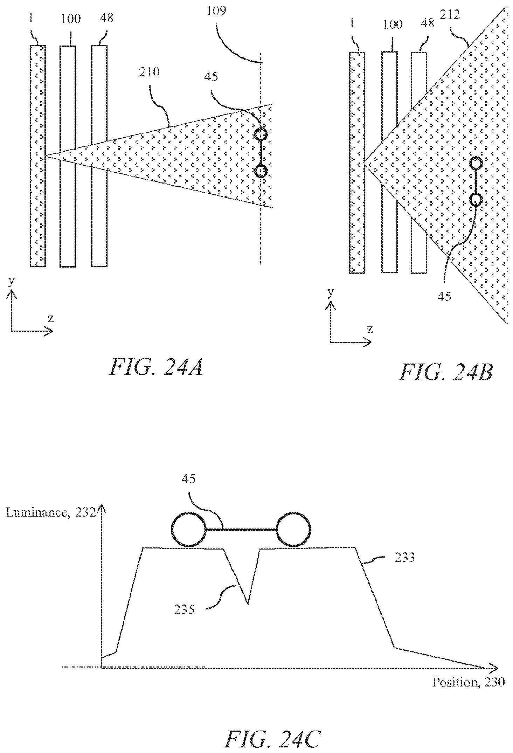

**FIGURES 24A-24B** are schematic diagrams illustrating in top views, arrangements of 2D viewing windows of the switchable display of FIGURE 12B with the parallax element fully transmitting. In FIGURE 24A the illumination cone 210 from the waveguide 1 when illuminated by a small number of light sources of the array 15 is shown for one position on the display. Observer 45 with left and right eyes within the cone 210 will see the position on the display illuminated. An observer at the window plane 126 will see the entire display illuminated. In FIGURE 24B more of the light sources of array 15 with waveguide 1 are illuminated and a wide angle cone 212 is achieved. Such a cone provides a wider range of viewing positions but has lower efficiency and luminance for a given power consumption than the arrangement of FIGURE 24A.

**FIGURE 24C** is a schematic graph illustrating a viewing window profile for the arrangement of FIGURE 24A. Display luminance 232 is plotted against position 230 in the window plane 109 with a luminance profile 233. Advantageously to increase efficiency, the central region 235 between the eyes of the observer 45 may be reduced.

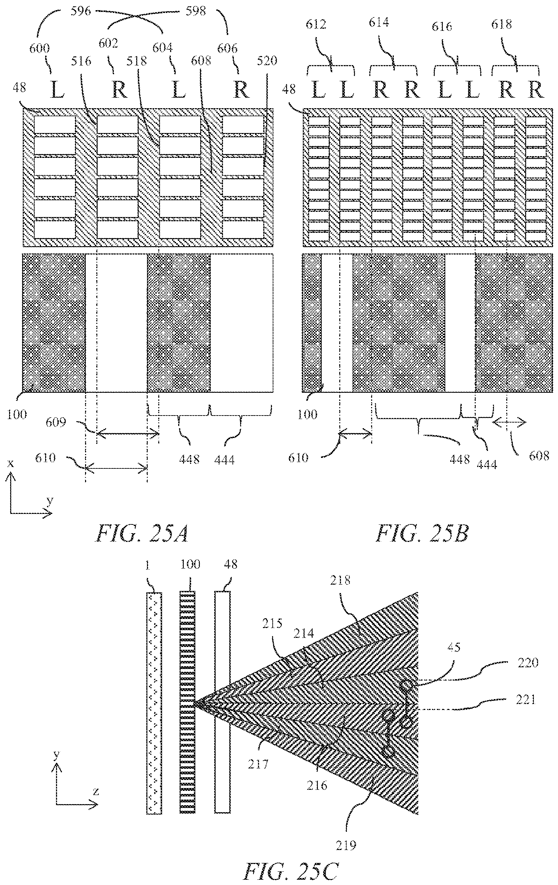

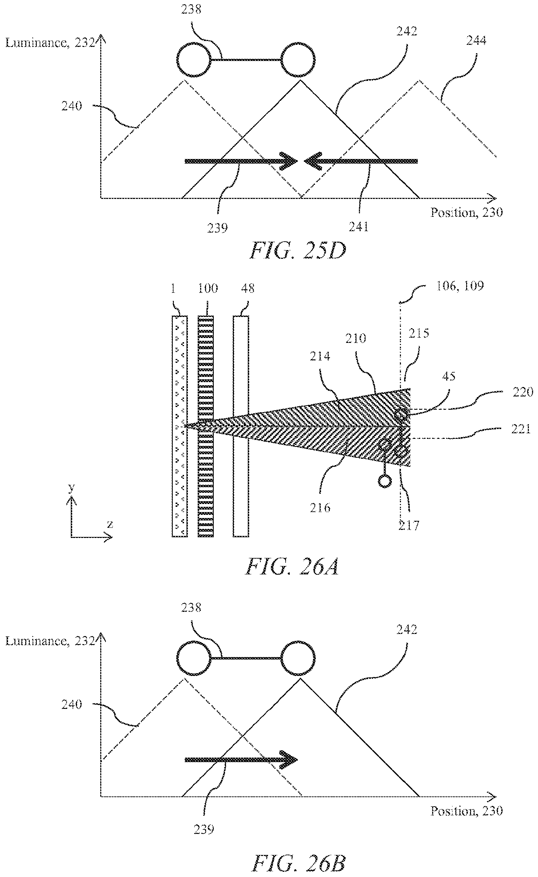

**FIGURE 25A** is a schematic diagram illustrating in front view, the arrangement of a spatial light modulator and aligned parallax barrier for two view spatial multiplexing. Barrier 100 has a slit width 610 that is substantially the same as the lateral pitch 609of the pixel columns of the spatial light modulator 48; wherein the SLM 48 comprises columns 600, 602, 604 and 606 of pixels each comprising rows of red pixels 516, green pixels 518 and blue pixels 520. Columns 600, 604 of left eye data (L) may be interlaced with columns 602, 606 of right eye data (R). Advantageously autostereoscopic windows 29 may be produced with good uniformity in the window plane 129. Such an arrangement has a narrow viewing lateral range of positions for which low cross talk can be achieved as will be described in FIGURE 25D for example

In the present embodiments, sets of pixel columns 600, 604 may comprise left set of pixels 596 and sets of pixel columns 602, 606 may comprise a right set of pixels 598. More generally the sets 596, 598 may be the sets of pixels that comprise left and right eye image data respectively. The sets may further comprise pixels that are not arranged as columns, for example in tilted arrays as will be described herein.

It may be desirable to increase the range of viewing freedom for low cross talk while maintaining high uniformity of the viewing windows 29.

**FIGURE 25B** is a schematic diagram illustrating in front view, the arrangement of a spatial light modulator and aligned parallax barrier for four view spatial multiplexing. In this embodiment each slit 444 of the barrier overlies four columns of pixels, and the columns are arranged as interlaced groups 612, 616 of left eye pixel data with groups 614, 618 of right eye image data. The width 610 of the slit region 444 is the same as the pitch of the pixel columns so that high window uniformity is achieved. Advantageously in comparison to the arrangement of FIGURE 25A, the viewing freedom for low cross talk is increased.

**FIGURE 25C** is a schematic diagram illustrating in top view, the angular output of a spatial light modulator and aligned parallax barrier for two view spatial multiplexing. Left eye viewing cones 215, 216, 219 and right eye viewing cones 218, 214 and 217 are directed towards observer 45. In a first observer 45 position 220 the right eye sees a right eye image, left eye sees a left eye image and an orthoscopic image is seen; and in a second position 221, the right eye sees a left eye image, left eye sees a right eye image and a pseudoscopic image is seen.

**FIGURE 25D** is a schematic graph illustrating, the variation of optical window luminance against position in the window plane for the arrangement of FIGURE 25A. The pseudoscopic images of position 221 in FIGURE 25C are undesirable causing visual strain and user confusion. Further as will be shown, pseudoscopic images create increased cross talk in the display system. Considering the left eye of an observer 238, right eye viewing window profile 29 from the arrangement of FIGURE 25A will have a substantially triangular profile 242, with adjacent right eye window profiles 240, 244. In operation, light will further bleed by diffusers and other scattering mechanisms between adjacent viewing windows as indicated by arrows 239, 241. Thus light from both right eye windows 240, 244 will be directed to the right eye of the observer 238.

It may be desirable to reduce the display cross talk and reduce the appearance of pseudoscopic zones and reduce image cross talk.

**FIGURE 26A** is a schematic diagram illustrating in top view, the combined angular output of directional illumination and a spatial light modulator and aligned parallax barrier for two view spatial multiplexing. A directional display apparatus being an autostereoscopic directional display apparatus may be arranged wherein: the parallax element 100 is arranged to direct light from first and second sets 596, 598 of spatially multiplexed pixels of the spatial light modulator 48 into left and right eye viewing windows 29 (shown by intersection of plane 109 with cones 214, 216) for viewing by left and right eyes of the observer 45; the control system 72, 76 is arranged to control the spatial light modulator 48 to display left and right eye images on the first set 596 and second set 598 of spatially multiplexed pixels; and the control system 72, 74 is arranged to control the light sources 15a-15n of the array of illuminator elements 15 to direct light into an optical window 26 (shown by intersection of plane 106 with cone 210) for viewing by both the left and right eyes of the observer 45.

Viewing windows 26 provided by cone 210 in FIGURE 24A is provided by the directional backlight comprising waveguide 1, while viewing windows 29 provided by cones 214, 216 are directed to the observer 45. In position 220, an orthoscopic image can be seen whereas in position 221 a single image is seen in the right eye, giving the appearance of a 2D image.

**FIGURE 26B** is a schematic graph illustrating the variation of optical window luminance against position in the window plane for the arrangement of FIGURE 26A. Thus window 244 is eliminated and light scattering from window 240 shown by arrow 239 is directed to the left eye of observer 238. Advantageously the cross talk of the system is substantially reduced, and pseudoscopic zones may be eliminated.

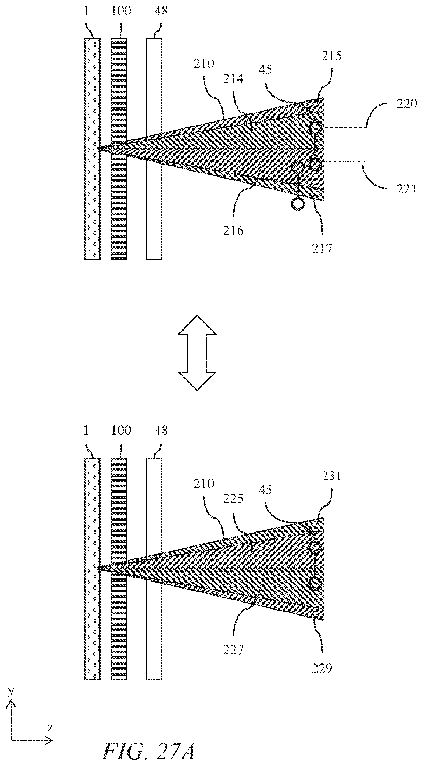

The arrangement of FIGURE 25A for example reduces the lateral display resolution by one half. It may be desirable to achieve full display resolution as will be described with reference to FIGURES 27A-B.

**FIGURE 27A** is a schematic diagram illustrating in top views, the combined angular output of directional illumination and a spatial light modulator and aligned parallax barrier for two view spatial multiplexing and temporal view multiplexing. In this example, the windows 26 given by cone 210 and windows 29 given by cones 214, 216, 215, 217 are not accurately aligned and some small residual adjacent pseudoscopic cones may also be directed to the observer 45, providing small pseudoscopic illuminated side cones 215, 217.

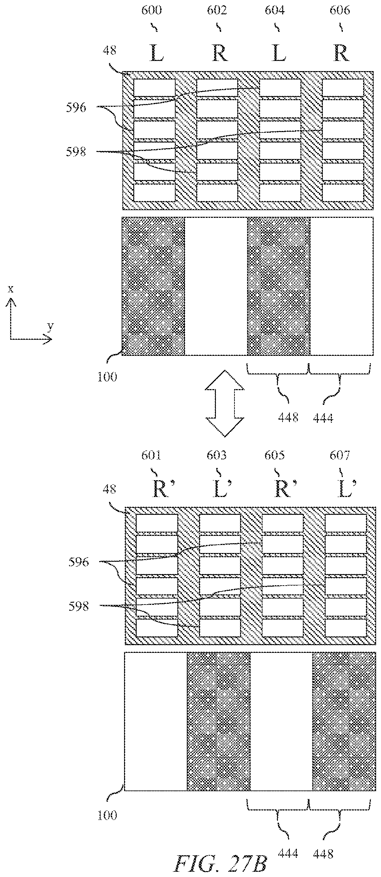

**FIGURE 27B** is a schematic diagram illustrating in front views, the arrangements of a spatial light modulator and aligned parallax barrier for two view spatial multiplexing and temporal view multiplexing. A directional display apparatus may thus be an autostereoscopic directional display apparatus wherein: the parallax element 100 is controllable to select the position of the viewing windows 29; the control system 72, 104 is arranged to control the parallax element 100 to direct light, in a temporally multiplexed manner, (a) from first and second sets 596, 598 of spatially multiplexed pixels into left and right eye viewing windows 29 for viewing by left and right eyes of the observer 45, and (b) from the first and second sets 596, 598 of pixels into reversed right and left eye viewing windows 29 for viewing by right and left eyes of the observer, the control system 72, 104 is arranged to control the spatial light modulator 48 to display, in a temporally multiplexed manner in synchronization with the control of the parallax element, (a) left and right eye images on the first and second sets 596, 598 of spatially multiplexed pixels, respectively, when light therefrom is directed into the left and right eye viewing windows, and (b) right and left eye images on the first and second sets 596, 598 of spatially multiplexed pixels, respectively, when light therefrom is directed into the reversed right and left eye viewing windows 29; and the control system is arranged to control the light sources 15a-n to direct light into an optical window 26 for viewing by both eyes of the observer 45.

The SLM 48 may be a high frame rate device, for example providing left and right images at 120Hz frame rate compared to 60Hz for a display that has only spatial multiplexing. In the first phase (shown in the upper parts of FIGURE 27A-B) the viewing cone 214 is from a right eye image that comes from a first barrier slit region 444 on the panel and aligned right eye pixel columns. In the second phase (shown in the lower parts of FIGURE 27A-27B) the viewing cone 225 is from a right eye image (R' where R' refers to the data for the complimentary interlaced right eye data for R data used in the first phase) that comes from a second barrier slit region 444 on the panel and aligned right eye pixel columns, both of which are translated between the first and second phases. The R' data 601, 603, 605, 607 may be different from the R data 600, 602, 604, 606 to increase display resolution and similarly for L and L' data.

Advantageously, display image resolution may be increased while high window uniformity and low cross talk may be achieved.

It may be desirable to increase the viewing freedom of the arrangements of FIGURES 26A and 27A.

It may be desirable to provide directional images such as autostereoscopic images to multiple observers.

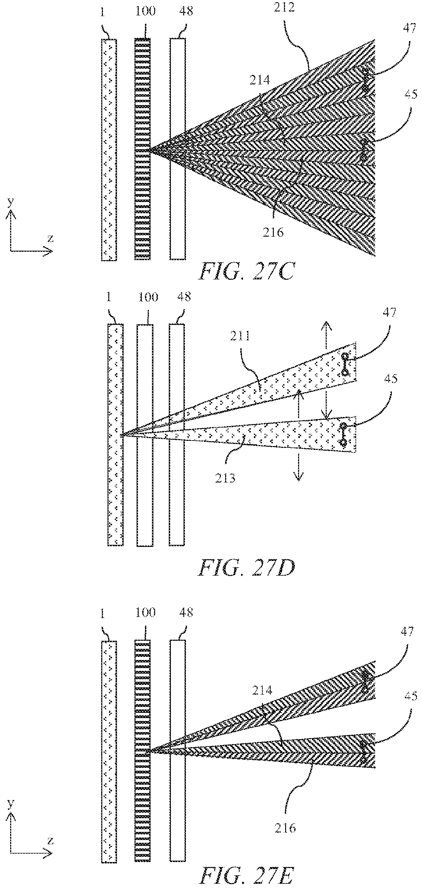

**FIGURES 27C-27E** are schematic diagrams illustrating in top views, the arrangements of a directional backlight comprising waveguide 1, spatial light modulator 48 and aligned parallax barrier 100 for multiple observers. FIGURE 27C shows the multiple lobes of a spatially multiplexed autostereoscopic display for observers 45, 47 when the illumination is provided by a wide angle cone 212. Multiple orthoscopic and pseudoscopic are provided that can be distracting and confusing for observers 45, 47. FIGURE 27D shows an alternative arrangement of viewing windows 211, 213 from directional backlight comprising waveguide 1 and array 15. In this embodiment, the cones 211, 213 may be independently tracked so that multiple observers can advantageously be tracked.

FIGURE 27E shows the combined result of the arrangements of FIGURES 27C-27D. Advantageously the observers 45, 47 may both be provided with orthoscopic autostereoscopic 3D images.

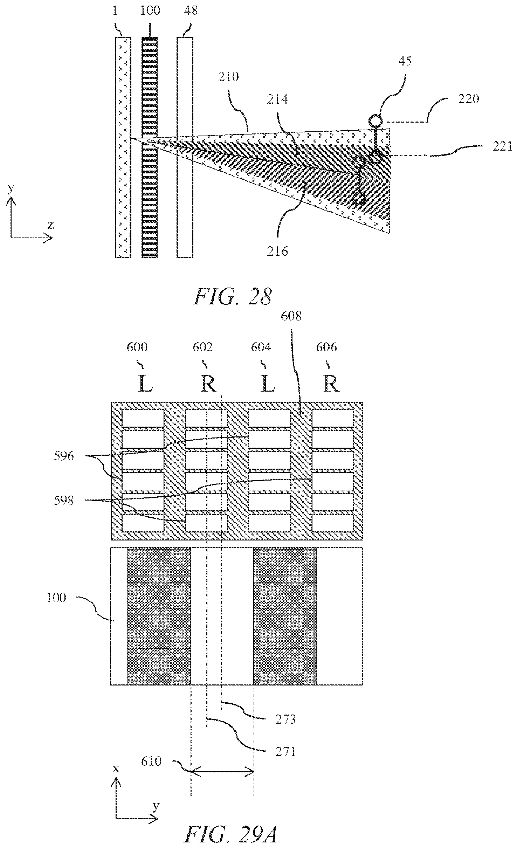

**FIGURE 28** is a schematic diagram illustrating in top view, the combined angular output of directional illumination and a spatial light modulator and aligned parallax barrier for two view spatial multiplexing with observer tracking. **FIGURE 29A** is a schematic diagram illustrating in front view, the arrangement of a spatial light modulator and aligned parallax barrier for two view spatial multiplexing with observer tracking.

The parallax element 100 may be controllable to select the position of the viewing windows 29, and the control system 72, 104 may further arranged to control the parallax element 100 to direct light into the left and right viewing windows 29.

The viewing windows 26 represented for one position on the display by cone 210 and viewing windows 29 represented by cones 214, 216 may be directed in response to an observer tracking system so that for observer 45 moving between positions 220, 221, an orthoscopic image with low cross talk, high uniformity is maintained. Thus the selection of the light sources in the array 15 for the waveguide 1 are adjusted in cooperation with the control of the barrier elements 150 in the barrier 100, in a similar manner to that shown in FIGURES 16A-16B. Thus the position 271 of the center of the slit 444 may move to position 273 in cooperation with the change in the LED array 15 addressing.

The pixel array of the spatial light modulator may be arranged as rows and columns. Black mask regions 608 may be arranged between the pixel columns. The black mask regions may be imaged by the parallax element to the window plane 109, creating non-uniformities. An aperture width 610 for the parallax element such as parallax barrier slit can be used to remove the visibility of the non-uniformities from the black mask region in the window plane. However, the increased slit width 610 to achieve high uniformity increases image cross talk.

It may be desirable to maintain high luminance uniformity in the window plane while further reducing image cross talk in spatially multiplexed displays with black mask between pixel columns.

In the embodiment of FIGURE 25B, the thickness of substrates 420, 434 may be increased by using multiple pixels columns for each viewing window, thus the optical window provided by a single pixel column may be halved and the substrate thickness may be substantially increased, reducing cost.

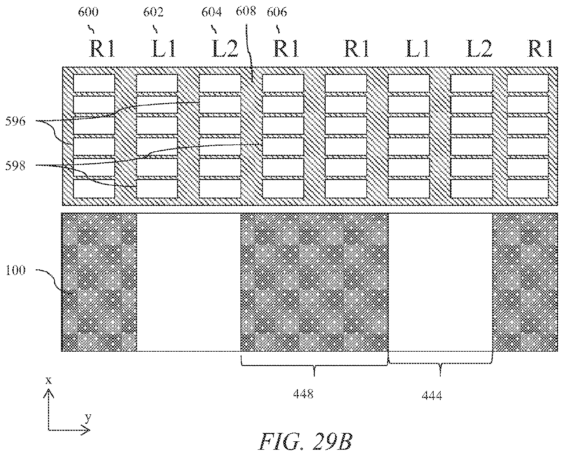

**FIGURE 29B** is a schematic diagram illustrating in front view, the arrangement of a spatial light modulator and aligned parallax barrier for four view spatial multiplexing. As described above, the optical windows produced by each column of pixels may be for example 32mm. For an 800ppi LCD using a 100micron thickness polarizer 406, then the total separation of pixels to barrier required for a 300mm viewing distance is approximately 450microns and the substrate thicknesses are approximately 175microns. Advantageously production yield is increased and cost reduced for high resolution spatial light modulators. Further gap 149 has a width with improved yield and reduced cost.

In operation left pixel columns may have slightly different left pixel data L1, L2 and right pixel data R1, R2to achieve greater perceived image resolution than that provided by the parallax barrier aperture pitch.

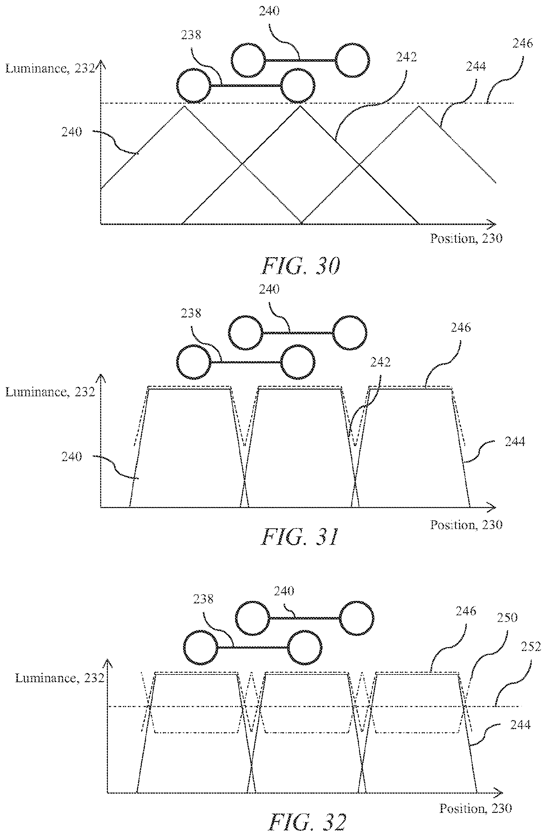

**FIGURE 30** is a schematic graph illustrating the variation of optical window luminance against position in the window plane for the arrangement of FIGURE 28B. The uniformity 246 at the window plane is thus maintained due to the wide slit 444 of the parallax barrier 100. **FIGURE 31** is a schematic graph illustrating the variation of total viewing window luminance against position in the window plane for an arrangement with reduced slit 444 width 610. Reducing slit width improves cross talk by modifying window profile for single view data, providing viewing windows 240, 242, 244; however total luminance profile 246 has increased non-uniformity due to imaging of the black mask region 608. Non-uniform window profile is undesirable as the display may appear to flicker with observer or display motion. Further the display may have non-uniform luminance for an observer away from the parallax element window plane 109.

**FIGURE 32** is a schematic graph illustrating the variation of total viewing window luminance against position in the window plane for the arrangement of FIGURE 29A further comprising compensation luminance distribution. The parallax element 100 and the spatial light modulator 48 cooperate to produce viewing windows 27 having a lateral window luminance distribution 246 that is non-uniform, and the directional backlight is arranged to produce optical windows 26 having a lateral window luminance distribution 250 that is non-uniform and compensates for the non-uniformity of the lateral window luminance distribution 246 of the viewing windows. The resultant luminance 232 distribution 252 is thus substantially uniform. The distribution 252 is shown for a Lambertian display. In other embodiments, the distribution 252 may have for example a central maximum to achieve a higher gain profile. However, the total luminance distribution is smoothly changing without local maxima or minima, thus achieving substantially uniform display appearance.

The directional backlight may comprise the array 15, waveguide 1 and optical stack 504 arranged to provide viewing windows 26. The directional backlight may further comprise the rear reflector 300 arranged to provide viewing windows 27 that may be aligned with viewing windows 27.

Advantageously observers 238, 240 see substantially the same luminance in each eye and the display cross talk is reduced while the SLM 48 comprises black mask columns to cover addressing circuitry.

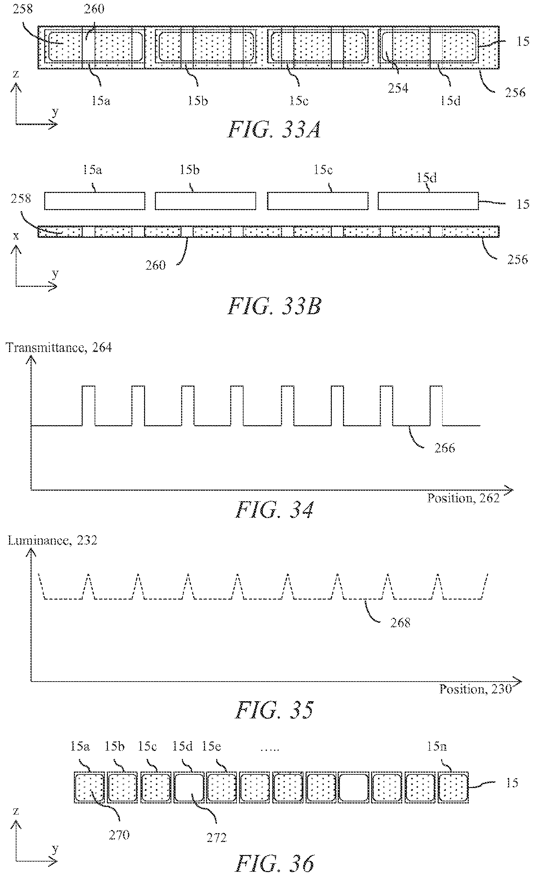

**FIGURES 33A-33B** are schematic diagrams illustrating in side and front views an LED array comprising a compensating feature comprising a transmission element 256.

**FIGURE 34** is a schematic graph illustrating the variation of compensating feature transmission 264 against position 262 across the LED array of FIGURES 33A-B. **FIGURE 35** is a schematic graph illustrating the variation of luminance against position 230 in the window plane for the arrangement of FIGURES 33A-B. In addition to or instead of transmission element 256, the LED array may illuminate through a Quantum Dot material in order to improve the color gamut of the resulting display.

The directional backlight 1, 15 thus further comprises a transmission element 256 disposed over the light sources 15a-n and having a transmittance 264 that varies in a lateral direction with profile 266 to provide the non-uniform lateral window luminance 232 distribution 268 of the optical windows 26 produced by the directional backlight 1, 15. The term "directional backlight 1, 15," may be used herein to denote the waveguide 1 and the array of light sources 15. Stated differently, the backlight 1, 15 may include the waveguide 1 and the array of light sources 15 for discussion purposes only, and not of limitation. The transmission element 258 has regions 258, 260 with first and second transmissions respectively. The transmission element 256 may further be a switchable transmission element, such as a liquid crystal element arranged between the array 15 and input side 2 of the waveguide 1. Such a controllable element can be arranged to translate the transmittance profile 266 in response to the position of an observer 45 in a tracking system.

Advantageously the uniformity and cross talk of the present embodiments comprising black mask regions 608 between pixel columns can be improved.

**FIGURE 36** is a schematic graph illustrating in side view the addressing of an LED array 15 in order to achieve a viewing window luminance distribution compensating feature. The LEDs 15a-n of array 15 have an output luminous flux distribution that is arranged to provide a window luminance 232 distribution 268 shown in FIGURE 35. Thus LED 15d has a higher output luminous flux 272 than the luminous flux 270 of LED 15a. Advantageously, the luminous flux distribution can translate with the viewing windows 26 during observer tracking.

It may be desirable to further reduce the cross talk of the display system through cooperation between the viewing windows 26 from the directional backlight 1, 15 and viewing windows 27 from the parallax element 100 and spatial light modulator 48.

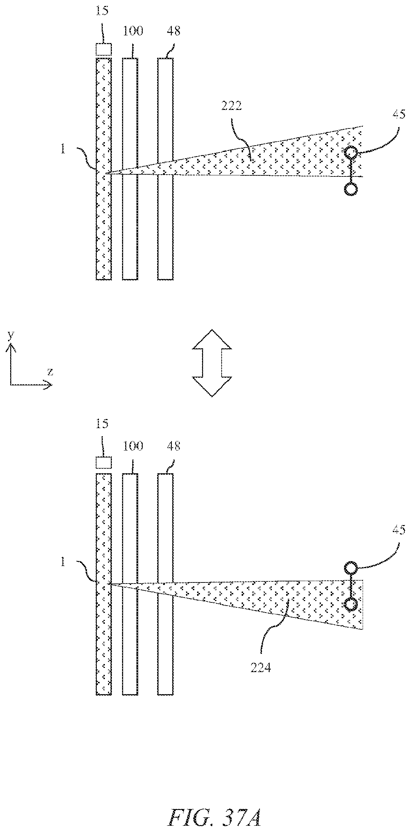

**FIGURE 37A** is a schematic diagram illustrating in top view, the temporally multiplexed angular output of directional illumination from a directional backlight. In embodiments comprising a fast response SLM 48 such as a 120Hz LCD viewing windows 26 can be produced in a time multiplexed manner, providing output cones 222 and 224 in first and second phases to the right and left eyes respectively of observer 45. In this embodiment the parallax element may be arranged to be substantially transmitting.

Advantageously such an arrangement can provide autostereoscopic images to multiple observers with full resolution and thus a user can select a multi-user case of operation of the display system through software control of the parallax element setting. The minimum achievable cross talk of such a directional backlight can be limited by light that returns from the reflective end 4 to the input side 2 and is returned into the optical system. It may be desirable to further reduce the cross talk of such an arrangement.

**FIGURE 37B** is a schematic diagram illustrating in top view, the temporally multiplexed angular output of directional illumination from a directional backlight 1, 15 in cooperation with the temporally multiplexed output of a parallax element 100 arranged to provide slit regions 444 and absorbing regions 448 and aligned spatial light modulator 48.

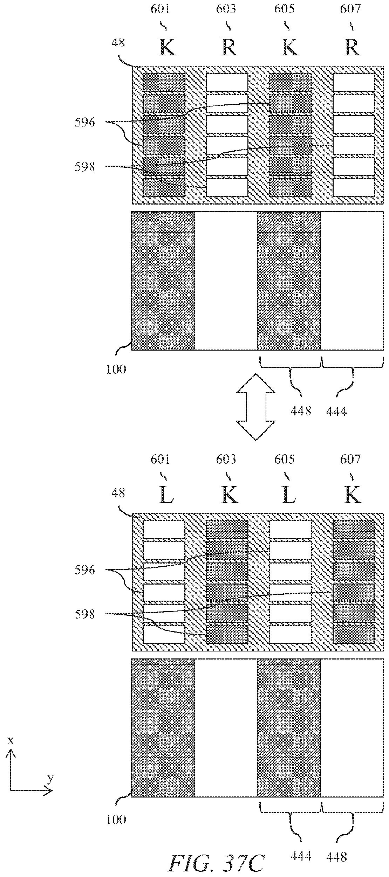

**FIGURE 37C** are schematic diagrams illustrating in front view, the arrangement of a spatial light modulator and aligned parallax barrier for two view spatial multiplexing comprising blank, for example, black pixel columns (marked K) and temporal multiplexing.

A directional display apparatus may be an autostereoscopic directional display apparatus wherein: the parallax element 100 is arranged to direct light from first and second sets 596, 598 of spatially multiplexed pixels into left and right eye viewing windows 29 for viewing by left and right eyes of the observer 45; the control system 72, 74 is arranged to control the light sources 15a-n to direct light, in a temporally multiplexed manner, into left and right eye optical windows 628, 626 for viewing by the left and right eyes of the observer 45; and the control system 72, 76 is arranged to control the spatial light modulator 48 to display, in a temporally multiplexed manner in synchronization with the control of the light sources 15a-n of array 15, (a) a left eye image (L) and a blank image (K) on the first and second sets 596, 598 of pixels, respectively, when the light sources direct 15a-n light into the left eye optical window 628, and (b) a blank image (K) and a right eye image (R) on the first and second sets 596, 598 of pixels, respectively, when the light sources 15a-n direct light into the right eye optical window 626. Further the parallax element 100 may be controllable to select the position of the viewing windows 627, 629, and the control system 72, 104 is further arranged to control the parallax element 100 to direct light into the left and right viewing windows 627, 629.

In operation in a first phase, the cone 222 is provided by the directional backlight 1, 15 to achieve viewing windows 26 such as window 627 and the cones 214, 217, 218 are provided by the parallax element 100 and spatial light modulator 48 to achieve viewing windows 27 such as window 626 at the window plane 106, 107. As shown in FIGURE 37C, data shown on the spatial light modulator 48 in the first phase comprises odd columns 601, 605 with blank (K) data, which is typically black data, and even columns 603, 607 with right (R) eye data.

In operation in a second phase, the cone 224 is provided by the directional backlight 1, 15 to achieve viewing windows 27 such as window 629 and the cones 214, 217, 218 are provided by the parallax element 100 and spatial light modulator 48 to achieve viewing windows 27 such as window 628 at the window plane 106, 107. As shown in FIGURE 37C, data shown on the spatial light modulator 48 in the second phase comprises even columns 603, 607 with blank (K) data, which is typically black data, and odd columns 601, 605 with right (R) eye data.

In both phases, the parallax element 100 may have a fixed position for a given observer position and may be arranged to track in cooperation with the tracking of the light sources of the array 15 in response to observer 45 movement.

As will be described below, the arrangements of FIGURE 37B-37D can achieve reduced cross talk in comparison to the arrangement of FIGURE 27A-27B.

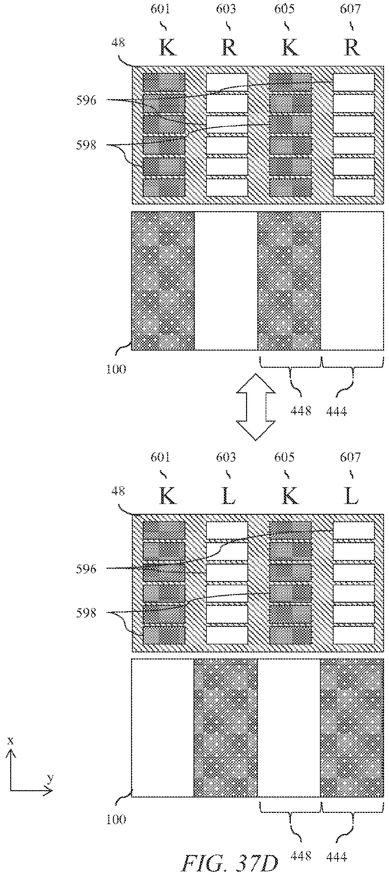

**FIGURE 37D** are schematic diagrams illustrating in front view, the arrangement of a spatial light modulator and aligned parallax barrier for two view spatial multiplexing comprising fixed position black pixel columns and temporal multiplexing parallax elements further arranged to provide increased display resolution with low cross talk.

A directional display apparatus may be an autostereoscopic directional display apparatus wherein: the parallax element 100 is controllable to select the position of the viewing windows 29; the control system 72, 76, 104 is arranged to control the parallax element 100 to direct light, in a temporally multiplexed manner, (i) from a first set 596 of pixels, that is spatially multiplexed with a second set 598 of pixels, into a left eye viewing window 629 for viewing by a left eye of an observer 45, and (ii) from the first set 596 of pixels into a right eye viewing window 627 for viewing by a right eye of the observer 45.

The control system 72, 74, 104 may be arranged to control the light sources, in a temporally multiplexed manner in synchronization with the control of the parallax element 100, (i) into a left eye optical window 628 for viewing by the left eye of the observer 45 when the parallax element 100 directs light from the first set of pixels 596 into the left eye viewing window 629, and (ii) into a right eye optical window 626 for viewing by the right eye of the observer 45 when the parallax element 100 directs light from the first set of pixels 596 into the right eye viewing window 627. The control system 72, 74, 76, 104 may be arranged to control the spatial light modulator 48 to display, in a temporally multiplexed manner in synchronization with the control of the parallax element 100, (i) a left eye image (L) and a blank image (K) on the first and second sets 596, 598 of pixels, respectively, when the parallax element 100 directs light from the first set 596 of pixels into the left eye viewing window 629, and (ii) a right eye image (R) and a blank image (K) on the first and second sets 596, 598 of pixels, respectively, when the parallax element 100 directs light from the first set 596 of pixels into the right eye viewing window 627.

In other words, the pixels of set 596 remain blank (K) whereas the pixels of set 598 are arranged with either left eye image (L) or right eye image (R) so that image data switching takes place on a single set. Advantageously the cross talk that arises from switching of pixel data between image data and blank (K) in FIGURE 37C may be reduced by switching between image data that may be similar, wherein left and right eye data may be more correlated than blank and left or right eye data.

It may further be desirable to increase the resolution of the embodiments of FIGURE 37B-37C.

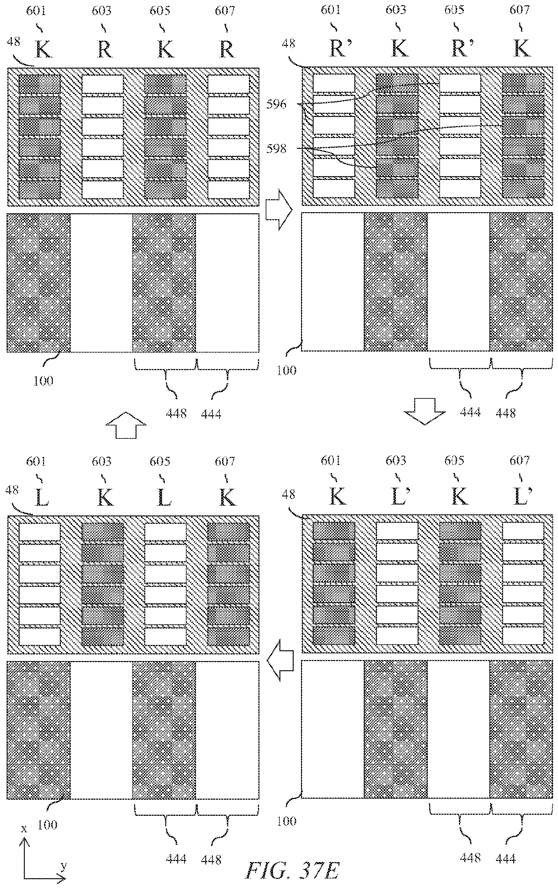

**FIGURE 37E** are schematic diagrams illustrating in front view, the arrangement of a spatial light modulator and aligned parallax barrier for two view spatial multiplexing comprising black pixel columns and temporal multiplexing further arranged to provide increased display resolution with low cross talk.

A directional display apparatus may be an autostereoscopic directional display apparatus wherein: the parallax element 100 is controllable to select the position of the viewing windows 29; the control system 72, 76, 104 is arranged to control the parallax element 100 to direct light, in a temporally multiplexed manner, (i) from first and second sets 596, 598 of spatially multiplexed pixels into left and right eye viewing windows 629, 627, respectively, for viewing by left and right eyes of the observer 45, and (ii) from the first and second sets 596, 598 of spatially multiplexed pixels into right and left eye viewing windows 627, 629, respectively, for viewing by right and left eyes of the observer 45.

The control system 72, 74 is arranged to control the light sources 15a-n (i) while the parallax element 100 directs light from the first set 596 of pixels into the left eye viewing window 629 and from the second set of pixels 598 into the right eye viewing window 627, to direct light, in a temporally multiplexed manner, into left and right eye optical windows 628, 626 for viewing by the left and right eyes of the observer 45, and (ii) also while the parallax element 100 directs light from the first set 596 of pixels into the right eye viewing window 627 and from the second set of pixels 598 into the left eye viewing window 629, to direct light, in a temporally multiplexed manner, into left and right eye optical windows 628, 626 for viewing by the left and right eyes of the observer 45.

The control system 72, 76 is arranged to control the spatial light modulator 48 such that (i) while the parallax element 100 directs light from the first set 596 of pixels into the left eye viewing window 629 and from the second set 598 of pixels into the right eye viewing window 627, to display, in a temporally multiplexed manner in synchronization with the control of the light sources 15a-n, (a) (as shown in the bottom left hand arrangement) a left eye image (L) and a blank image (K) on the first and second sets 596, 598 of pixels, respectively, when the light sources 15a-n direct light into the left eye optical window, and (b) (as shown in the top left hand arrangement) a blank image (K) and a right eye image (R) on the first and second sets of pixels 596, 598, respectively, when the light sources direct light into the right eye optical window 626, and (ii) while the parallax element 100 directs light from the first set of pixels 596 into the right eye viewing window 627 and from the second set of pixels 598 into the left eye viewing window 629, to display, in a temporally multiplexed manner in synchronization with the control of the light sources 15a-n, (a) (as shown in the bottom right hand arrangement) a blank eye image (K) and a left image (L') on the first and second sets 596, 598 of pixels, respectively, when the light sources 15a-n direct light into the left eye optical window 628, and (b) (as shown in the top right hand arrangement) a right image (R') and a blank eye image (K) on the first and second sets 596, 598 of pixels, respectively, when the light sources 15a-n direct light into the right eye optical window 626.

Thus with a further increase in SLM 48 update frequency, for example to 240Hz, a third and fourth addressing phase can be introduced. In the third phase as shown in the upper part, the parallax barrier position may be laterally translated and the interlaced R'-K pixel data swapped in comparison to the first phase where R' refers to the data for the complimentary interlaced right eye data for R data used in the first phase. In the fourth phase as shown in the lower part, the parallax barrier position may be laterally translated and the interlaced L'-K pixel data swapped in comparison to the second phase where L' refers to the data for the complimentary interlaced right eye data for R data used in the first phase.

Advantageously a high resolution, low cross talk display can be achieved with no pseudoscopic viewing zones. Such a display can be tracked in response to the movement of an observer, maintaining a 3D image.

In the present embodiments a directional display apparatus may further comprise a sensor system 70 arranged to detect the position of the head of the observer 45, the control system 72,74 being arranged to control the light sources 15a-n in accordance with the detected position of the head of the observer 45. For example the position of the head may be determined measurement of at least one of the position of eye, nose, mouth, head outline, hair or other features of the observer. Such measurement may be provided by computer vision measurement technologies as known in the art. Further the sensor system 70 may be arranged to detect the position of the head of the observer 45, the control system 72, 74, 104 being arranged to control the light sources 15a-n and the parallax element 100 in accordance with the detected position of the head of the observer 45.

The origin of reduction of cross talk for the arrangements of FIGURES 37B-37D will now be described.

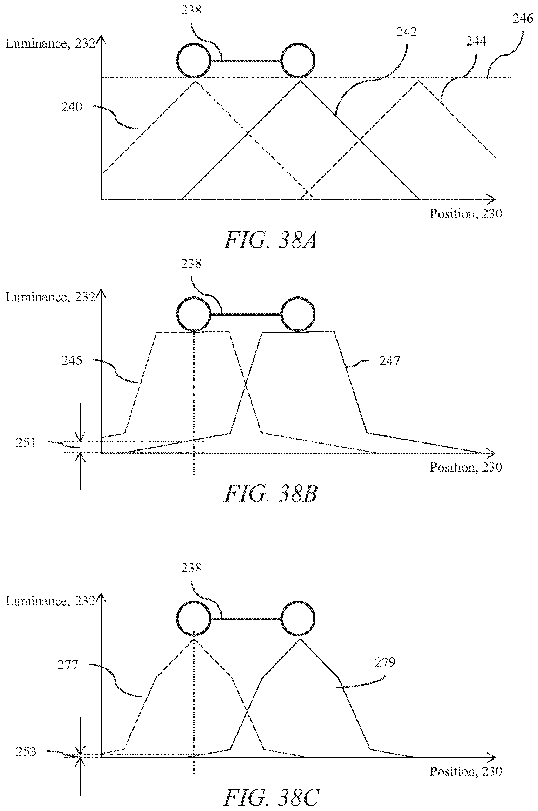

**FIGURES 38A-38C** are schematic graphs illustrating the variation of total viewing window luminance against position in the window plane for the arrangement of FIGURE 37B. FIGURE 38A is similar to FIGURE 30 and shows the right eye windows 240, 244 and left eye window 242 for observer 238 at the window plane in a parallax barrier display wherein the slit width 444 is substantially the same as the barrier width 448. As described previously, windows 240, 244 each contribute to cross talk in the observer's left eye. FIGURE 38B shows example viewing window 245, 247 profiles for viewing windows 26 produced by the directional backlight 1, 15, with substantially uniform luminance profile in the central window region. Cross talk 251 is thus produced in the region of the right eye from the left eye. Mechanism to reduce cross talk 251 typically undesirably incurs a penalty in light transmission of the directional backlight 1, 15.

FIGURE 38C shows the combination of the windows of FIGURES 38A-B, providing resultant windows 277, 279. Thus cross talk 253 in the right eye from the left eye data is substantially reduced. Advantageously, the cross talk of the directional backlight components and parallax barrier components can be optimized for light transmission, while in combination the overall cross talk can conveniently be reduced.

It may be desirable to adjust window position wherein the addressability of windows 26, 27 is different.

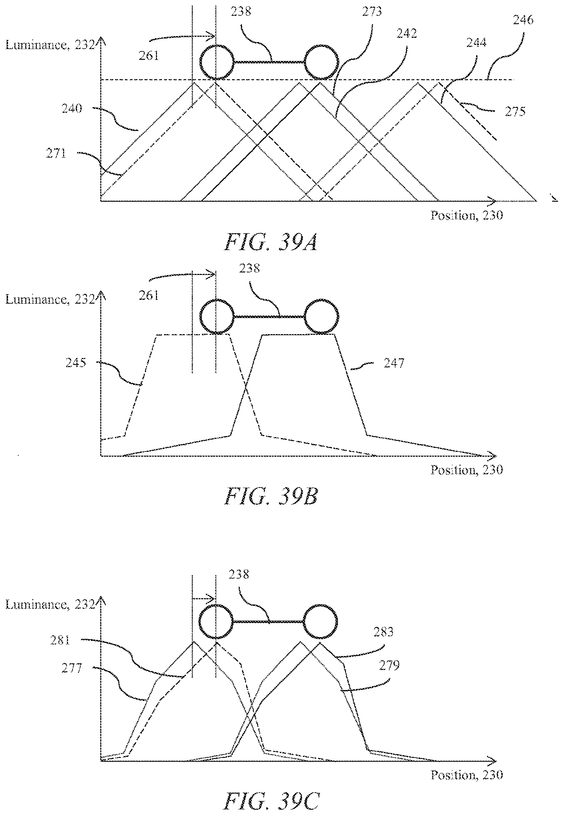

**FIGURES 39A-39C** are schematic graphs illustrating the variation of total viewing window luminance against position in the window plane for the arrangement of FIGURE 37B with observer tracking. FIGURE 39A shows that as observer 238 moves laterally by distance 261 then the parallax elements can be adjusted to provide fine window control, for example as shown in FIGURES 16A-16B. In comparison, the windows 245, 247 of the directional backlight may remain fixed due to the increased window 26 pitch of the directional backlight 1, 15, as shown in FIGURE 39B. The resultant window profile is thus shown in FIGURE 39C where the windows 281, 283 have a distorted shape but maintain luminance uniformity for the tracked observer, while advantageously achieving low cross talk.

It may be desirable to further increase the resolution of the autostereoscopic image, while reducing the thickness of the optical stack.

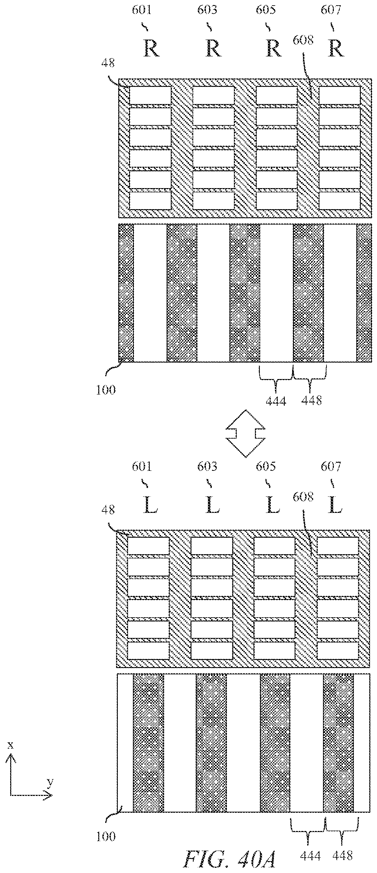

**FIGURE 40A** are schematic diagrams illustrating in front view, the arrangement of a spatial light modulator and aligned parallax barrier for two view spatial multiplexing and temporal multiplexing wherein black regions between the pixel columns are provided by black mask 608 between the pixel columns.

A directional display apparatus may be an autostereoscopic directional display apparatus wherein the parallax element 100 may be controllable to select the position of the viewing windows 29, the control system 72, 104 is arranged to control the parallax element to direct light, in a temporally multiplexed manner, (a) from all the pixels into a left eye viewing window 629 for viewing by the left eye of the observer 45, and (b) from all the pixels into a right eye viewing window 627 for viewing by the right eye of the observer 45. The control system 72, 74, 76 may be arranged to control the light sources 15a-n to direct light, in a temporally multiplexed manner in synchronization with the control of the parallax element 100, into left and right eye optical windows 628, 626 for viewing by the left and right eyes of the observer 45; and the control system 72, 74, 76, 104 is arranged to control the spatial light modulator 48 to display, in a temporally multiplexed manner in synchronization with the control of the parallax element 100 and the light sources 15a-n, (a) a left eye image (L) on all the pixels when the parallax element 100 directs light into the left eye viewing window 629, and (b) a right eye image (R) on all the pixels when the parallax element 100 directs light into the right eye optical window 627.

The pitch of the slit regions 444 may be the same as the pitch of the pixel columns. In operation in a first phase a right eye image is displayed on the SLM 48 and the parallax element position adjusted to achieve viewing windows aligned with the observer's right eye. In the second phase, a left eye image is displayed on the SLM 48 and the parallax barrier position adjusted to present left eye windows to the observer 45.

In comparison to FIGURES 37B-37D, advantageously the resolution of the autostereoscopic image is the same as the resolution of the pixel columns as compared to half the resolution. In comparison to FIGURE 37E, a full resolution image may be achieved with SLM 48 refresh rate that is reduced, for example 120Hz compared to 240Hz. Further for the same size viewing windows, the separation 437 between the pixel plane of the spatial light modulator 48 and the liquid crystal layer 432 may be reduced, advantageously reducing total device thickness and bezel width. Further, the images are not interlaced on the columns of the SLM 48 and thus electronic cross talk between the left and right eye channels can be reduced.

It may be desirable to achieve increased uniformity of viewing windows for the arrangement of FIGURE 40A.

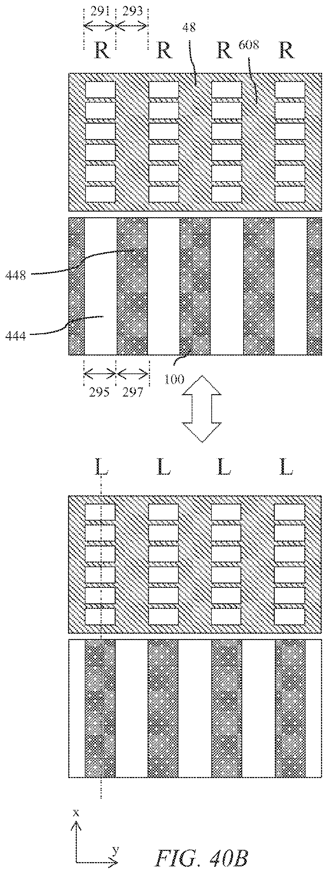

**FIGURE 40B** are schematic diagrams illustrating in front view, the arrangement of a spatial light modulator and aligned parallax barrier for two view spatial multiplexing and temporal multiplexing wherein blank regions between the pixel columns are provided by the black mask 608 between the pixel columns that is the same width 293 as the pixel aperture width 291. Further the widths 295, 297 of the parallax element aperture region 444 and barrier region 448 may be substantially the same. Thus, the window uniformity can advantageously be increased in comparison to the arrangement of FIGURE 40A.

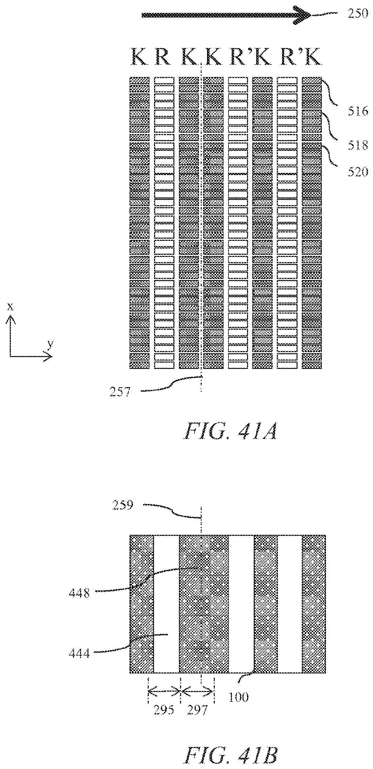

**FIGURES 41A-41B** are schematic diagrams illustrating in front view, the addressing of pixel columns and parallax elements respectively in a time multiplexed spatial light modulator for use in the present spatially and temporally multiplexed embodiments such as shown in FIGURES 39C-39D. In operation the SLM 48 may be scanned in direction 250 from left to right. Pixel columns may be changed between blank (K) data, right (R) data and left (L) data according to phase of operation. Similarly the parallax element 100 may be required to change between at least first and second positions in correspondence with phase of operation (similar to that shown in FIGURES 17D-17E) ; in addition changes in barrier position according to observer position that may be required. Thus position 257 in the SLM 48 relates to a time in the SLM 48 addressing cycle at which pixels change data state. It may be desirable that such changes are made in cooperation with the change of state of the parallax element at position 259 in the parallax barrier.

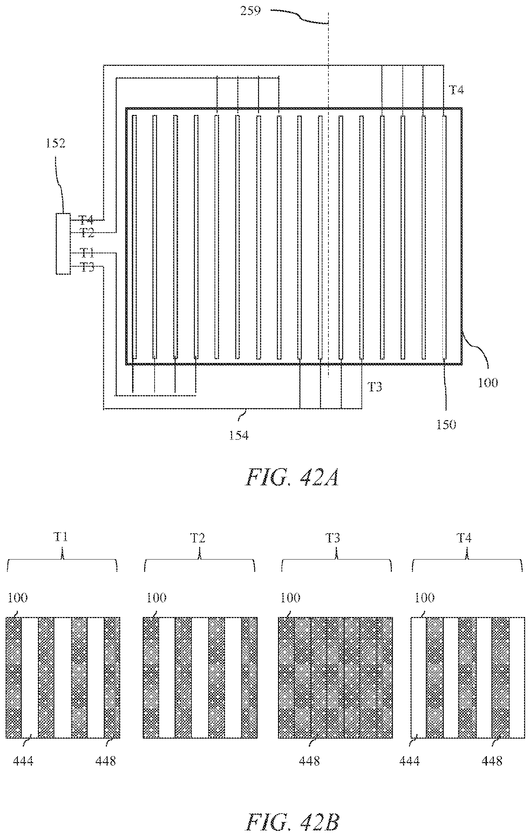

**FIGURE 42A** is a schematic diagram illustrating in front view, the addressing of parallax barrier slots in a time multiplexed spatial light modulator for use in the present spatially multiplexed embodiments. Thus, controller 152 may be arranged to provide signals to groups of barrier elements 150 at different time intervals T1-T4. In this manner the update of the parallax barrier elements 150 can be provided in synchronization with the switching of the SLM 48 to achieve increased switching performance.

**FIGURE 42B** are schematic diagrams illustrating in front view, the addressing of parallax barrier for use in the present spatially multiplexed embodiments at time intervals T1-T4 respectively. In phase T3 for example, a further blank addressing of the parallax element may be provided while the spatial light modulator is switched between left and right eye data, improving image cross talk during switching. In a second phase, the parallax barrier phase has been swapped in comparison to the first phase.

Switching of a light source of the array 15 during observer tracking may cause a flicker artifact that may be a double pulse or a missing pulse as will be described below. It may be desirable to reduce the appearance of such artifacts, in a similar manner to that described in U.S. Patent Application No. 13/897191, filed May 17, 2013, entitled "Control system for a directional light source" (Attorney Ref. No. 95194936.362001).

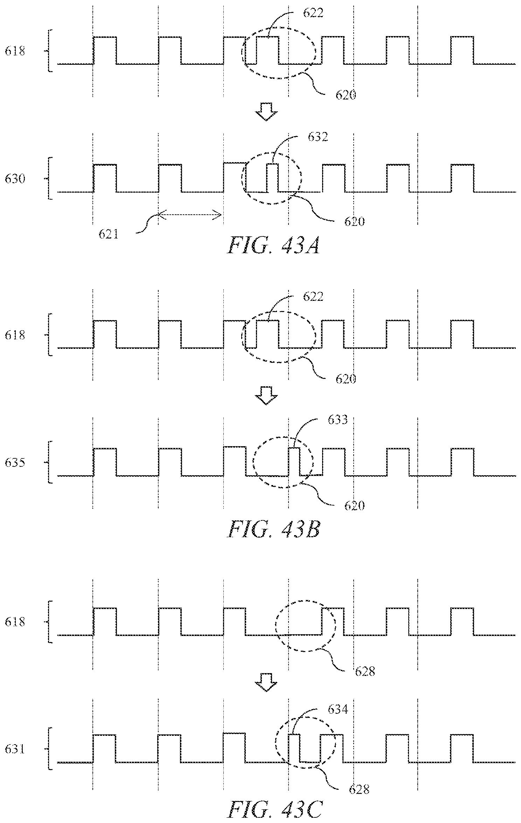

**FIGURES 43A-43C** are schematic timing diagrams of illumination pulses for switching of the light emitting elements 15 in the directional backlight. FIGURE 43A illustrates schematically one example of compensation for a double pulse (bright) artifact. The control signal supplied to the illuminator element has a waveform 630 that in region 620 causes operation in the left image phase to cease and operation in the right image phase to start. In this example, the final instance of operation in the left image phase is before the initial instance of operation in the right image phase by pulse 632, and the final instance of operation in the left image phase is by a pulse that has a normal pulse period so that over that phase the time-average of luminous flux is the predetermined value. The initial instance of operation in the right image phase is by pulse 632 that has a shortened period so that over that phase the time-average of luminous flux is less than the predetermined value.

Advantageously, in the present embodiments, by processing the waveforms to the illuminator elements of the illuminator array 15 in the transition regions between left and right phases the conditions that may result in a brightness artifact can be compensated for.

FIGURE 43B illustrates schematically a further example of compensation for a double pulse (bright) artifact. The control signal supplied to the illuminator element has a waveform 635 that in region 620 causes operation in the left image phase to cease and operation in the right image phase to start. In this example, the final instance of operation in the left image phase by a pulse 633 is before the initial instance of operation in the right image phase by a pulse which itself has a normal pulse period so that over that phase the time-average of luminous flux is the predetermined value. However, the final instance of operation in the left image phase is by a pulse 633 that itself has a shortened period so that over that phase the time-average of luminous flux is less than the predetermined value. Thus, the pulse 633 may be arranged to be in the opposite image phase to the pulse 632 of FIGURE 43A, so that for example a right image is seen rather than a left image at the time of transition. Advantageously, such an embodiment may achieve reduced image flicker.

FIGURE 43C illustrates schematically one example of compensation for a missing (dark) pulse in original waveform 618 in region 620. The control signal supplied to the illuminator element has a waveform 631 that in region 628 causes operation in the left image phase to cease and operation in the right image phase to start. In this example, the waveform 631 is similar to the waveform 635 of FIGURE 43B.

The arrangements of FIGURE 43A-C may be further arranged to cooperate with switching of the parallax element in response to observer movement, as will be described below.

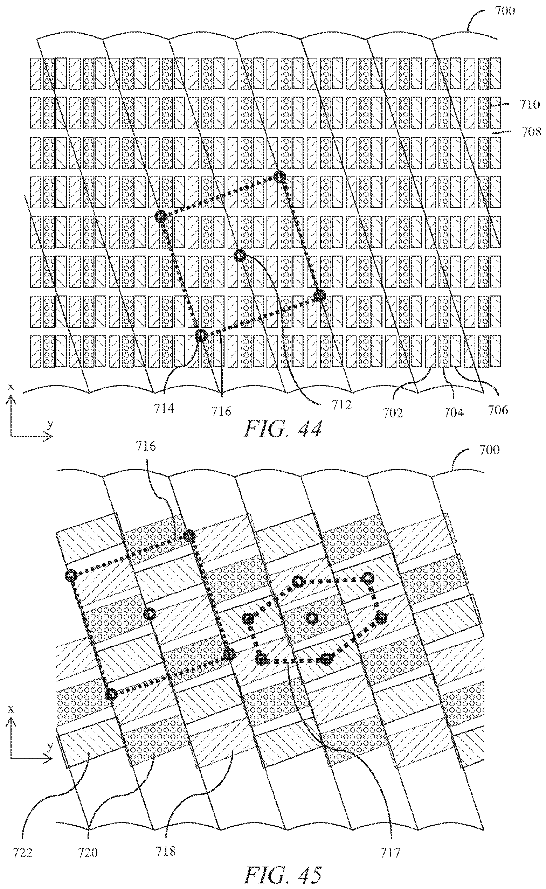

**FIGURE 44** is a schematic diagram illustrating in front view, the arrangement of an inclined parallax element in alignment with a spatial light modulator in multi-view spatially multiplexed embodiments. A parallax element 100 such as lens array 700 is arranged in alignment with an array of pixels of an SLM 2 comprising red pixels 702, green pixels 704 and blue pixels 706. Parallax element 100 may also be a parallax barrier of the types described previously. The pixels are arranged in commonly used stripe arrangement with horizontal and vertical gaps 708, 710, and square 'white' pixels (containing pixels 702, 704, 706). The array 700 is shown schematically as aligned so that each edge is aligned with the top left hand corner of a pixel, and at an angle so that the pixel one row down and one column across, giving a tilt angle of 18.4 degrees. The lens pitch is substantially five times the pixel pitch, although in practice lenticular array elements will have a pitch slightly less than this to achieve a finite window plane 109 distance, as is well known in the art. In operation as a 3D display, the 3D image appearance can be determined by locating for each view the location of a central green pixel 712 and the nearest neighbor lattice points 714. In this arrangement, locus 716 is a tilted square shape at an angle of 18.4 degrees to the horizontal and vertical directions.

**FIGURE 45** is a schematic diagram illustrating in front view, the image appearance of the arrangement of FIGURE 44. Further FIGURE 45 is a schematic diagram illustrating in front view the 3D pixel arrangement of a five view autostereoscopic display comprising red 718 pixels, green 720 pixels and blue 722 pixels. A further locus 717 can be located around each green pixel showing a rosette of red-blue-red-blue-red-blue pixels. Such a rosette may advantageously enhance the appearance of natural images, as typically used for 3D display purposes.

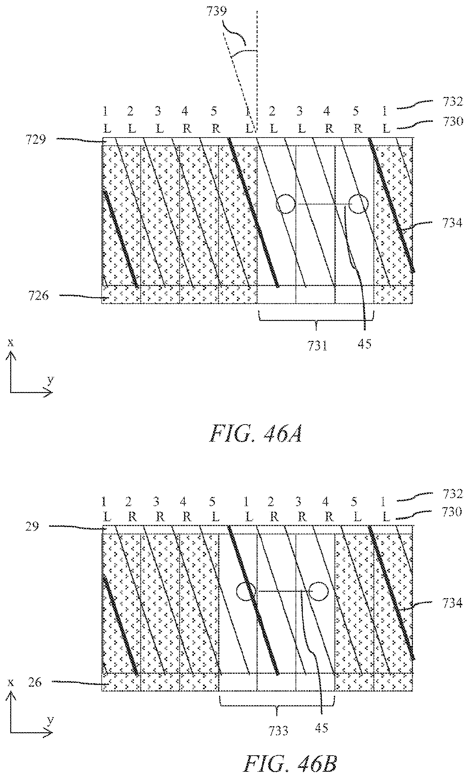

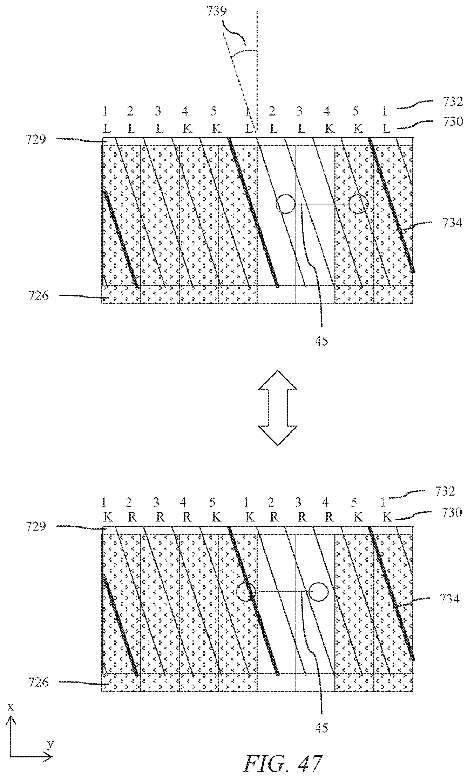

**FIGURES 46A-46B** **and** **FIGURE 47** are schematic diagrams illustrating in front view, the alignment of optical windows 729 from the arrangement of FIGURE 44 with the alignment of optical windows 726 from a directional backlight 1, 15. Thus in autostereoscopic mode of operation, the windows 729 may be tilted with respect to the vertical direction (x-axis) while the windows 726 may be parallel to the vertical direction. Optical windows 731 from three light emitting elements in the array 15 are arranged to provide illumination in the region of the viewer 45, while the left (L) and right (R) image data 730 is set on the repeating array of optical windows 732 from the parallax element 100 and aligned spatial light modulator 48. A boundary 734 is shown between the lobes of five optical windows 732 for illustrative purposes. After movement of observer tracking, controllers 72, 76 control the data 730 on the optical windows 732 to provide left and right eye image data to the observer. Controllers 72, 74 further adjust the illumination of the respective viewing optical windows to provide viewing window 733.

Thus the optical windows 726 provided by the directional backlight 1, 15 and the viewing windows comprising optical windows 729 provided by the parallax element 100 extend at an acute non-zero angle 739 relative to each other. For example the angle 739 may be 18.4 degrees for the arrangement of FIGURE 44.

Advantageously, the efficient illumination of the left and right eyes is achieved. Further cross talk from outer optical windows is reduced. High luminance 232 uniformity for positions 230 across the window plane 109 is achieved, reducing display flicker for a moving observer and achieving high display spatial uniformity.

**FIGURE 47** is a schematic diagram illustrating in front view, the alignment of optical windows 729 from the arrangement of FIGURE 44 with the alignment of optical windows 726 from a directional backlight 1, 15 further comprising time multiplexed viewing windows. In a first phase of operation, optical windows 729 are provided with left (L) or blank (K) data wherein the blank data may be black. Optical windows 726 from the directional backlight 1, 15 are directed towards the observer's left eye, at a non-zero angle 739 to the optical windows 729. In a second phase of operation, optical windows 729 are provided with right (R) or blank (K) data wherein the blank data may be black. Optical windows 726 from the directional backlight 1, 15 are directed towards the observer's right eye, at a non-zero angle 739 to the optical windows 729. Alternatively, the optical windows 731 from the directional backlight may be tilted to match the optical window 729 tilt, for example as described in U.S. Patent Application No. 14/137,569, entitled "Superlens component for directional display," filed December 20, 2013, (Attorney Ref. No. 351001).

Advantageously the cross talk may be reduced due to the multiplicative effect of cross talk cancellation between left and right eye optical windows 726, 729, in a similar manner to that shown in FIGURES 38A-38C. As the observer moves in the x direction, the content of the respective optical windows 729 may be adjusted while the optical windows 726 may remain unchanged.

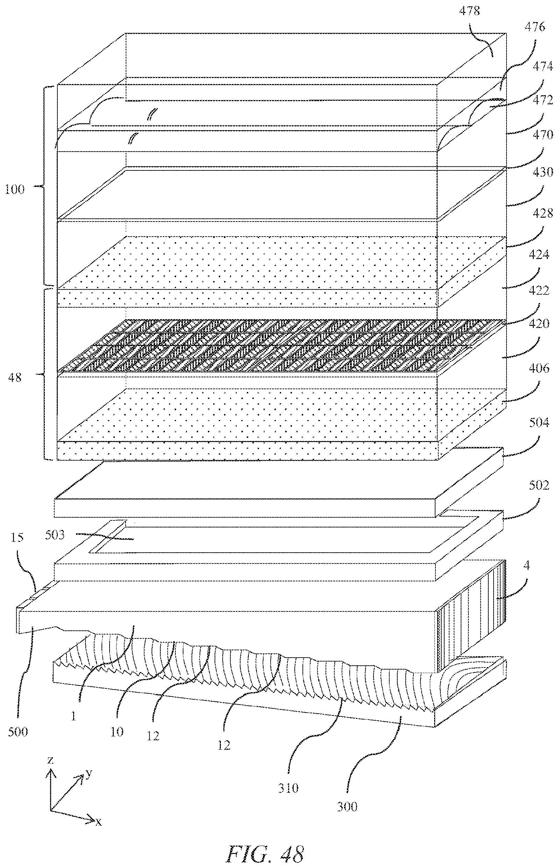

**FIGURE 48** is a schematic diagram illustrating in perspective view, the structure of a directional display device comprising an imaging waveguide arranged with a spatial light modulator and aligned front lenticular array. The parallax element 100 is a lenticular array which is a liquid crystal lenticular array comprising layers 474, 476 with a lenticular surface shape arranged therebetween. Further the parallax element may comprise a polarization switching layer 470 arranged to provide switching between a lens effect and a transparent effect for the lenticular array. The lenticular array may operate in a similar manner to that shown for parallax barrier elements described herein. Advantageously the lenticular array may have higher transmission efficiency and is well suited to the observer tracking arrangements of FIGURES 46A-47, wherein viewing windows from the lenticular array cooperate with viewing windows from the directional backlight 1, 15.

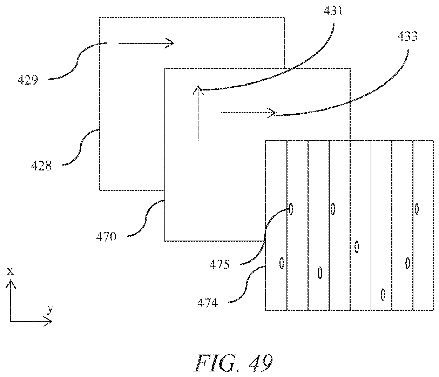

**FIGURE 49** is a schematic diagram illustrating in perspective front view, the operation of a switchable lenticular array. In this embodiment the parallax element is a surface relief liquid crystal lenticular array. A polarization switching element 428 is arranged to switch at least part of the liquid crystal lenticular array 474 between transmitting and lensing modes of operation.

Linear polarized light polarization state 429 from the polarizer 429 is transmitted by layer 470 to linear polarization state 433 in a first mode and to linear polarization state 431 in a second mode. In the first mode, light with state 433 is incident on the ordinary refractive index of aligned liquid crystal material in the first layer 474 of the lenticular array. The refractive index of the second layer 476 of the lenticular array is matched to the ordinary refractive index and thus the lenticular array has substantially no optical effect. In the second mode of operation the state 475 encounters the extraordinary refractive index of the aligned liquid crystal material in the first layer 474 which causes an index step to the second layer 476 and thus a lens effect is produced. Advantageously a high efficiency parallax optical element may be provided.

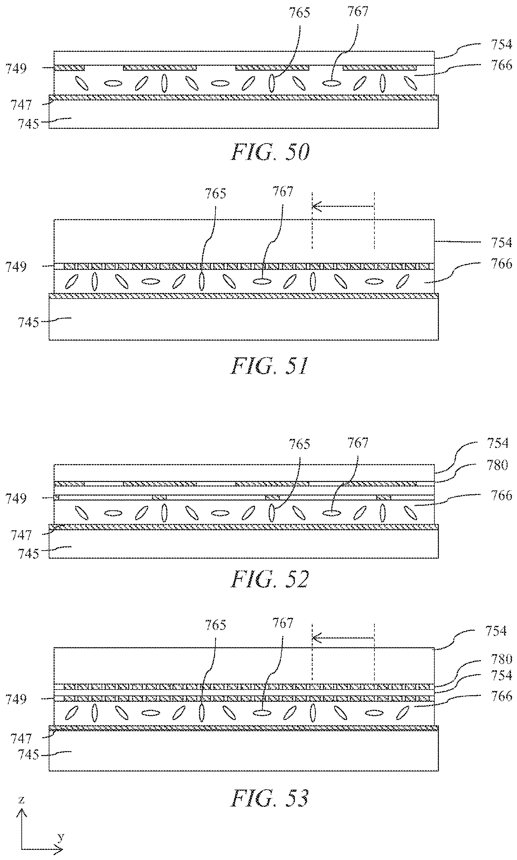

**FIGURES 50-53** are schematic diagrams illustrating in side view, arrangements of switchable graded index lenticular arrays. In these embodiments the parallax element is a graded index liquid crystal lenticular array. FIGURE 50 shows a first graded index lenticular array comprising electrodes patterned electrodes 749 and continuous electrode 747 arranged on substrate 754, 745 respectively. In a first mode of operation, all of the liquid crystal molecules 766 are arranged to have a substantially homogeneous alignment as shown for molecule 767. In a second mode, some molecules such as shown by molecule 765 are reoriented to a homeotropic alignment such that a lateral variation of refractive index is achieved for light of a given polarization state.

FIGURE 51 shows that electrode layer 749 can be further segmented to provide switchable position for the homeotropic molecule 765 alignment region and homogeneous molecule 767 alignment region. In this manner the position of the graded index lenticular element can be adjusted in response to observer position, achieving translation of viewing windows 29 in response to observer position and increasing resolution of 3D image compared to that shown for FIGURES 44-47. Graded index lens profile can be further enhanced by incorporation of a further electrode layer 780, to provide a triode addressing structure, shown for a fixed structure and tracking structure in FIGURES 52-53 respectively.

The arrangements of FIGURES 22-23C illustrated 2D operation in portrait orientation and autostereoscopic 3D operation in landscape mode. It may be desirable to achieve autostereoscopic 3D operation in landscape and portrait modes of operation.

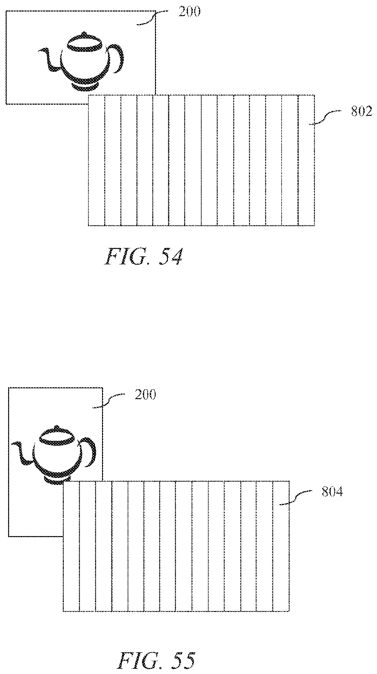

**FIGUREs 54-55** are schematic diagrams illustrating in perspective front view, the operation of a switchable autostereoscopic display arranged to achieve landscape and portrait modes of autostereoscopic operation. Thus desirably a display 200 may provide viewing windows 802 that are vertical in landscape operation and viewing windows 804 that are vertical in portrait operation.

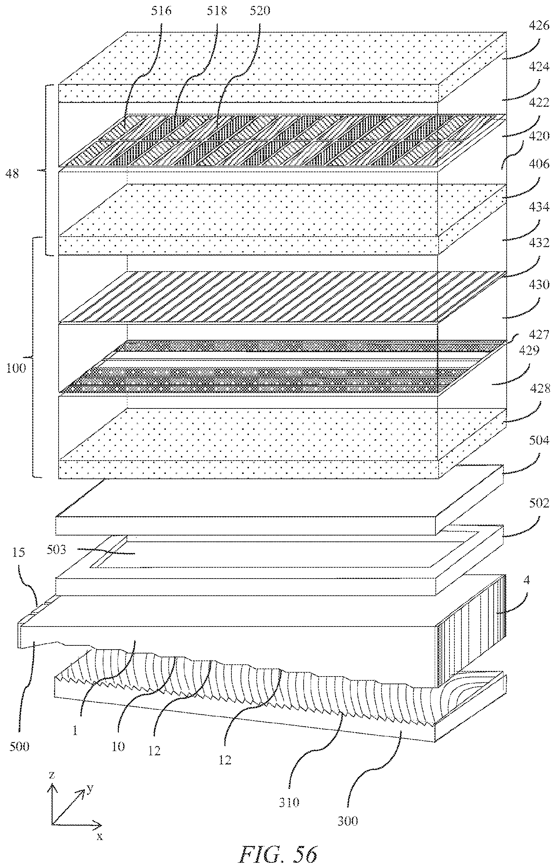

**FIGURE 56** is a schematic diagram illustrating in perspective view, the structure of a directional display device comprising an imaging waveguide arranged with a spatial light modulator and two switchable parallax barrier arrays comprising layer 427 and additional substrate 429. The color sub-pixels 516 518, 520 of the spatial light modulator 48 are rectangular with substantially three times the pitch in the y-axis direction compared to the sub-pixel pitch in the x-axis direction.

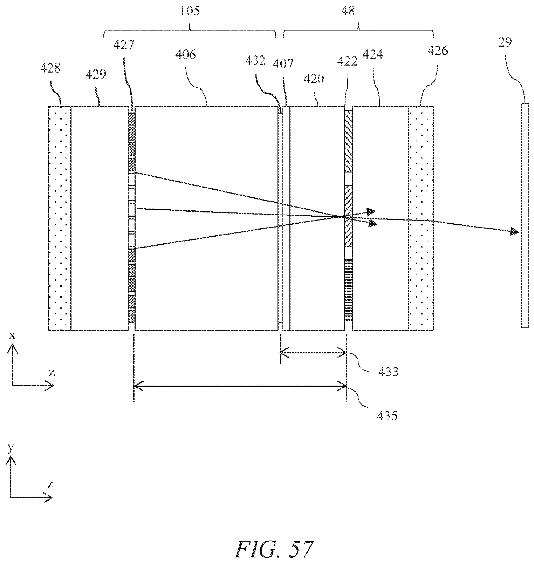

**FIGURE 57** is a schematic diagram illustrating in top view, the structure of a spatial light modulator and two aligned switchable parallax barrier arrays. To achieve the same viewing window distance and size for the layers 432, 427, the separations 433, 435 of respective layers should be substantially three times different. In the landscape mode of operation the barrier layer 427 is provided while layer 432 is substantially transparent, whereas in the portrait mode of operation the barrier layer 432 is provided while layer 427 is substantially transparent.

It may be desirable to reduce cost by reducing the number of layers for landscape and portrait operation.

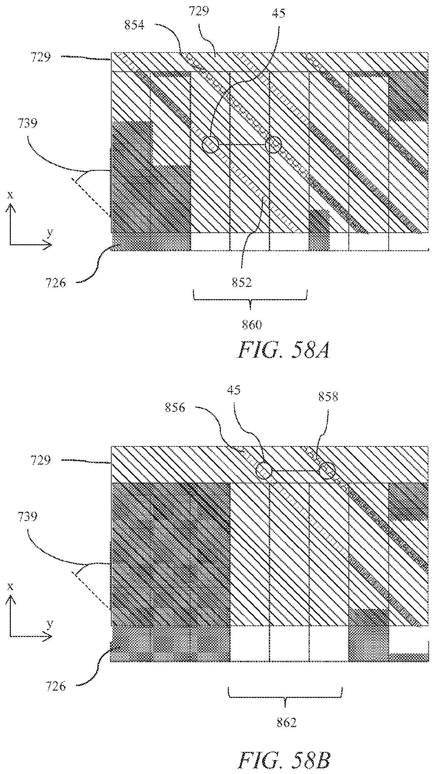

**FIGURES 58A-58B** are schematic diagrams illustrating in front view, optical window arrays 729 in landscape orientation from a parallax element 100 and aligned spatial light modulator 48 with 45 degree angle 739, and aligned optical windows 726 from a directional backlight, for first and second viewing positions respectively. Thus optical windows 729 may comprise left eye data for window 852 and right eye data for at least window 854 in a first viewer 45 position. In a second viewer 4 position, the windows 856, 858 may comprise left and right eye data respectively. In the same manner the viewing windows 860, 862 may be formed from respective optical windows 726, adjusted to the viewer position where there is a 45 degree angle 739 between the optical windows 726, 729. More generally, the non-zero acute angle 739 may 25 to 65 degrees, from 30 to 60 degrees, from 35 to 55 degrees, or from 40 to 50 degrees.

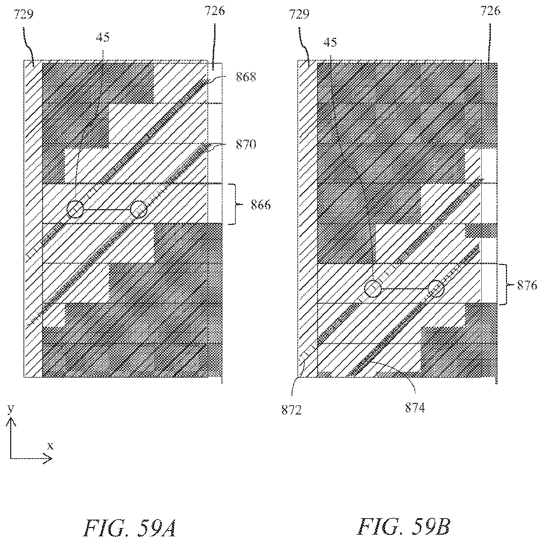

**FIGURES 59A-59B** are schematic diagrams illustrating in front view, optical window arrays in portrait orientation from a parallax element and aligned spatial light modulator with 45 degree window orientation, and aligned optical windows from a directional backlight. The rotation of the display from landscape to portrait also rotates both the arrays of optical windows 726,729. For a first viewing position shown in FIGURE 59A, the left eye views are applied to at least optical window 868 and the right eye view to optical window 870 with optical window 866 from the directional backlight 866. For a second viewing position shown in FIGURE 59B, the left eye views are applied to at least optical window 872 and the right eye view to optical window 874 with optical window 868 from the directional backlight 866.

Advantageously the efficiency of the display can be increased compared to the landscape arrangement of FIGURE 58A which requires more optical windows to illuminate both eye positions.

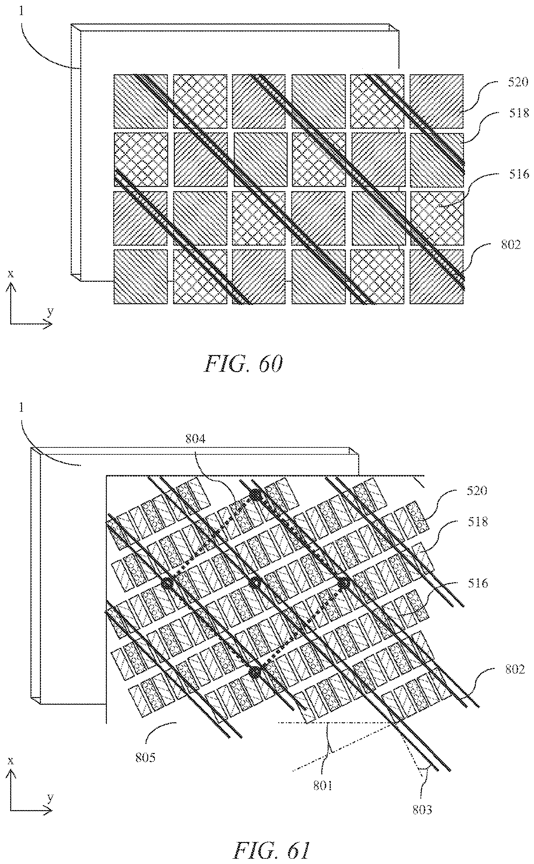

**FIGURE 60** is a schematic diagram illustrating in front view, the alignment of a parallax element with an array of color sub-pixels on a square grid to achieve optical windows aligned at 45 degrees in comparison to viewing windows from the directional backlight. Square shape color sub-pixels 516, 518, 520 may be arranged with extent of the parallax optic 802 arranged at 45 degrees to the polarizer. In the case of parallax barrier elements, the parallax optic may also be switchable between vertical and horizontal directions by means of patterned electrodes on substrates 430, 434 of the parallax element, with landscape electrode orientation on one substrate and portrait electrode orientation on the second substrate. Disadvantageously such an arrangement may have a non-grid image appearance in 2D mode, degrading the appearance of horizontal and vertical lines in the 2D image.

**FIGURE 61** is a schematic diagram illustrating in front view, the alignment of a parallax element with an array of color sub-pixels on a rectangular grid to achieve optical windows aligned at 45 degrees and as described in US Patent Application No. 13/939,053. Color sub-pixels 516, 518, 520 may be arranged at an angle 801 to the horizontal and barrier elements 803 may be arranged at an angle 803 to the color sub-pixels to achieve a parallax element 802 orientation to the vertical of approximately 45 degrees. Advantageously the locus 804 of the unit cell for the 3D image provides high image fidelity at reduced resolution.

In other embodiments, additional sub-pixels such as white or yellow sub-pixels may be incorporated to achieve increased resolution and modification of 3D pixel shape by means of sampling of the parallax element with respect to the pixel matrix of the spatial light modulator. Advantageously panel efficiency may be increased, color space extended, 3D image resolution and 3D pixel appearance may be improved.

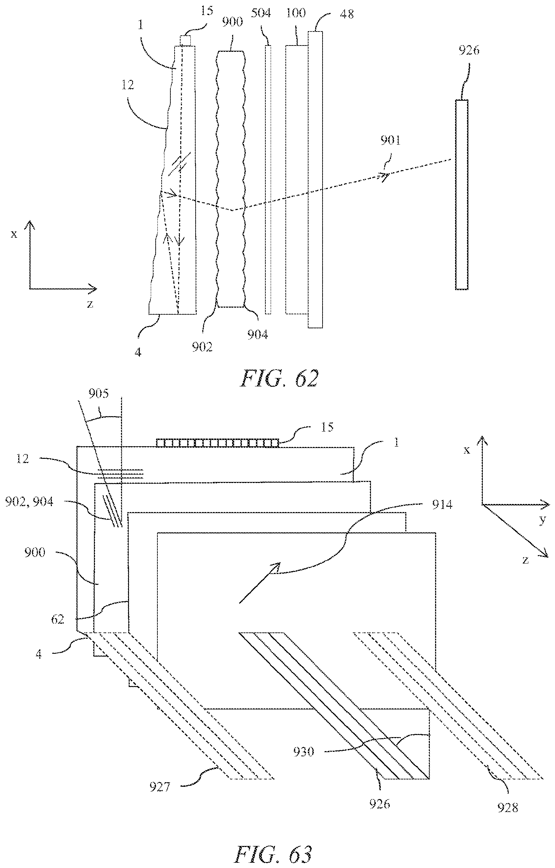

**FIGURE 62** is a schematic diagram illustrating in side view, an apparatus arranged to achieve optical windows arranged at 45 degrees and in alignment with the optical windows from a spatial light modulator aligned with a respective parallax element. Gabor superlens 900 comprising lenticular arrays 902, 904 as described in U.S. Patent Application Nos. 14/044,767, entitled "Temporally multiplexed display with landscape and portrait operation modes," filed October 2, 2013, (Attorney Ref. No. 339001), and 14/137,569, entitled "Superlens component for directional display," filed December 20, 2013, (Attorney Ref. No. 351001) is arranged between the directional backlight waveguide 1 and the parallax element 100 and aligned spatial light modulator 48. **FIGURE 63** is a schematic diagram illustrating in perspective front view, an apparatus arranged to achieve optical windows arranged at 45 degrees and in alignment with the optical windows from a spatial light modulator aligned with a respective parallax element. If the inclination 905 of the Gabor superlens geometric axis is at 22.5 degrees to the x axis, then the viewing windows 926 can be oriented at angle 930 of 45 degrees to the x-axis. Such windows 926 may be aligned with 45 degree oriented windows from the parallax element 100 and aligned spatial light modulator 48 as described herein.

The present embodiments may provide advantages for operation that is not autostereoscopic. In a power saving mode or a privacy mode, the parallax barrier 100 may be arranged to be substantially transparent. The optical windows provided may be widened so that both eyes of an observer are substantially within a single viewing window. Regions either side of the viewer's head are not illuminated, achieving power savings. Further observers that are not in the viewing window are provided a low image luminance, advantageously achieving privacy operation.

First and second viewing windows may be provided with different images (rather than a stereo pair) so that one viewer in a first viewing window can see for example map data while the other observer in a second different viewing window can see an entertainment image. The display may be used to provide a display for the dashboard of an automobile. Further, a signal derived from the movement of the vehicle may be used to turn off an image or to switch at least one viewer position between images in compliance with traffic regulations.

It may be desirable to provide correction for human accommodation conditions from a display without the need for correcting spectacles.

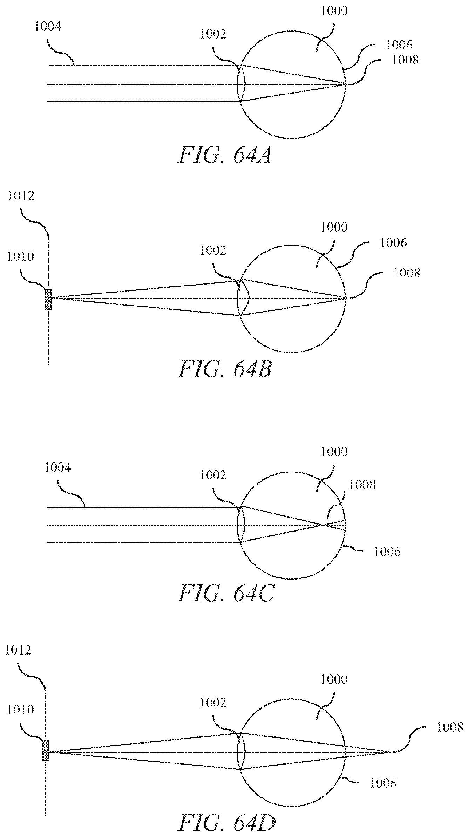

**FIGURES 64A-64D** are schematic diagrams illustrating in plan view various accommodation conditions for the human eye. The human eyeball 1000 may be considered as comprising focusing optic comprising at least the cornea and lens 1002. In eyes with normal vision characteristics, the visual system relaxes the lens 1002 so that rays 1004 from distant objects are substantially focused at point 1008 on the retina 1006 as shown in FIGURE 64A. Similarly for near objects 1010 in plane 1012, the lens 1002 is adjusted to maintain focus 1008 on the retina 1006 as shown in FIGURE 64B. Such adjustment may be provided by feedback between the lens focus mechanism and measure of sharpness of the image of object 1010 at the retina 1006. As will be described, the focusing mechanism relies on variations in luminance of rays from the object 1010 across the pupil of the lens 1002.

FIGURE 64C illustrates a myopic individual, in which the eyeball shape is typically distorted so that rays 1004 from distant objects are focused to a point 1008 within the eyeball 1000, blurring the image seen on the retina 1006. FIGURE 64D shows a hyperopic or presbyopic individual in which the shape or power of the eyeball means that rays from object 1010 are focused behind the retina.

For many accommodation deficient users, particularly presbyopic mobile display users it is undesirable to require spectacles for short periods of display use. It may be desirable for the visual correction to be provided by the display apparatus.

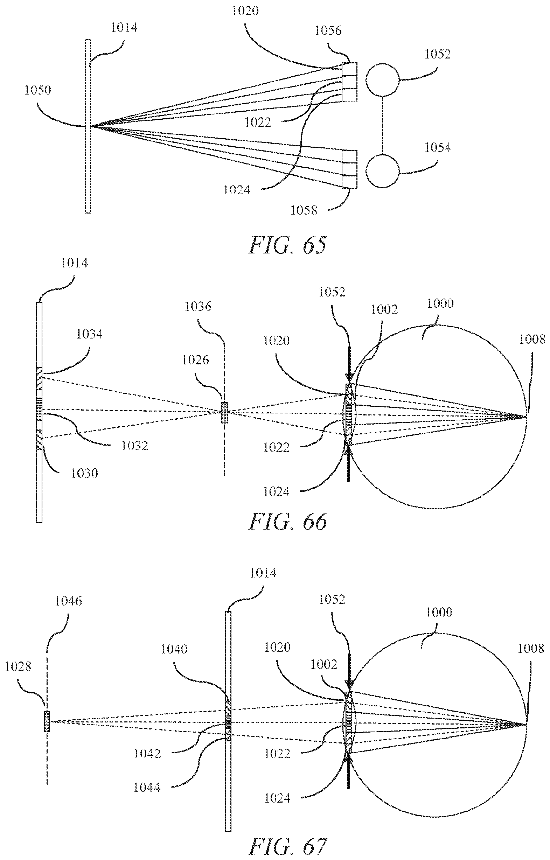

**FIGURE 65** is a schematic diagram illustrating in plan view a display apparatus arranged to correct accommodation conditions in a display apparatus without the use of additional spectacles. Directional display 1014 may provide viewing window array 1056 comprising windows 1020, 1022, 1024 for the right eye pupil 1052 (illustrated schematically) from points 1050 on the display 1014. Optionally the display 1014 may further provide multiple optical windows 1058 for the left eye pupil 1054. The window size of windows 1020, 1022, 1024 are less than the width of the pupil 1052, the ratio of pupil 1052 width to window separation may be preferably greater than 1.5, and more preferably greater than 3.0. Thus in an illustrative example, window pitch may be 3mm for a pupil of 6mm diameter at a 250mm viewing distance from display 1014.

**FIGURE 66** is a schematic diagram illustrating in plan view correction of myopia in a directional display apparatus in the case of correction for myopia. Focused point 1008 is relayed to point 1026 in plane 1036. Thus data for windows 1020, 1022, 1024 is provided from homologous pixels 1030, 1032, 1034 at the plane of directional display 1014. Thus the data on pixels 1034 may be arranged to provide an in-focus image from the display for a myopic observer, advantageously achieving accommodation correction without the need for corrective spectacles.

**FIGURE 67** is a schematic diagram illustrating in plan view correction of hyperopia or presbyopia in a directional display apparatus. Focused point 1008 is relayed to point 1028 in plane 1046. Thus data for windows 1020, 1022, 1024 is provided from homologous pixels 1040, 1042, 1044 at the plane of directional display 1014. Thus the data on pixels 1034 may be arranged to provide an in-focus image from the display for a hyperopic or presbyopic observer, advantageously achieving accommodation correction without the need for corrective spectacles.

The observer may provide their (optical) prescription to the display, and compensation may be provided by modifying separation of homologous pixels 1030, 1032, 1034 for given image points 1026. Further, a two dimensional array of windows may be provided so that additional visual aberrations such as astigmatism may be corrected.

Such displays may reduce display resolution and luminance to achieve the desirable window pitch at the observer's pupils. Further, to achieve a comfortable viewing freedom for a single eye of the observer multiple windows may need to be provided. Further it may be desirable to provide correction for both eyes of the observer. It may be desirable to provide a directional display apparatus with a large number of small pitch optical windows while maintaining display resolution and luminance.

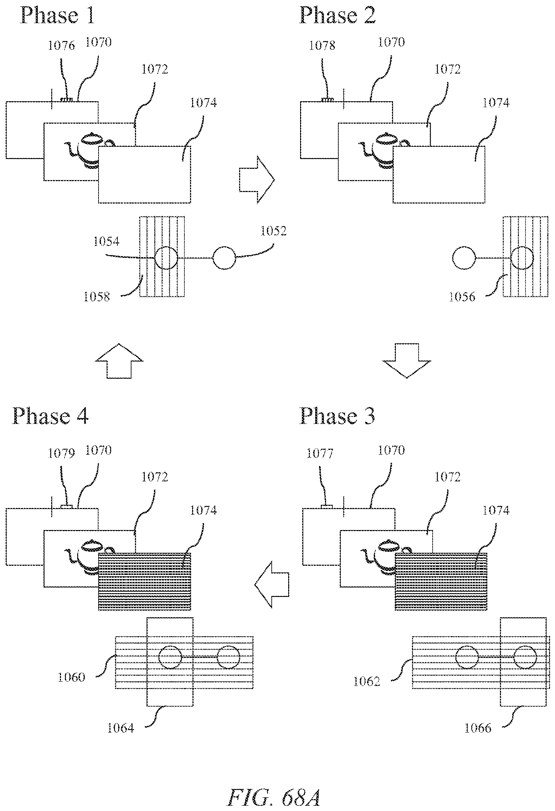

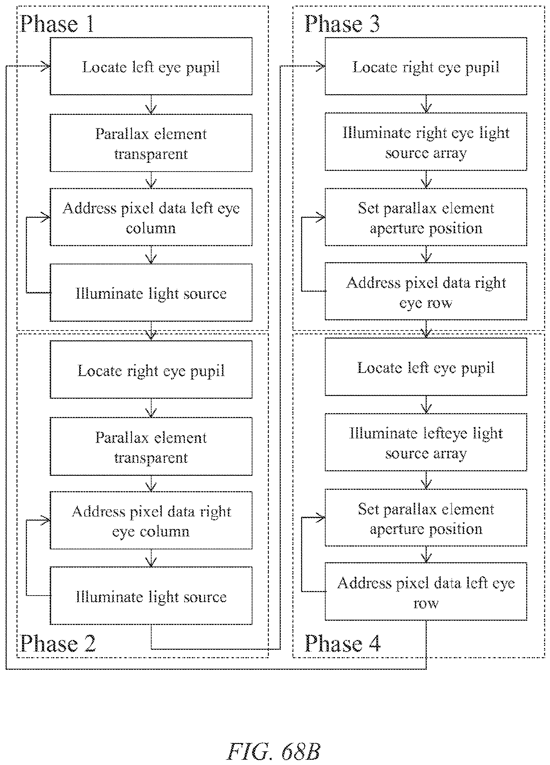

**FIGURE 68A** is a schematic diagram illustrating in perspective views a display apparatus arranged to correct accommodation conditions. **FIGURE 68B** is a flow chart further illustrating the operation of FIGURE 68A. A display may comprise a directional backlight 1070, a spatial light modulator 1072 and a parallax optic 1074 according to the present embodiments described herein. In a first phase, an array of light sources 1076 may be arranged to provide optical window array 1058 around the left pupil 1054 that have a vertical extent. Each optical window may be provided by a light source of the array of light sources 1076. In combination the array of optical windows may provide a viewing window. The presented images may be time multiplexed in sequence with the windows of the array 1058. In a second phase light sources 1078 provide time multiplexed window array 1056 around the right pupil 1052 that have a vertical extent. In the first and second phases the parallax optic 1074 may be substantially transparent across the whole area. In a third phase light source 1079 may provide window 1066 around the right pupil 1052 and parallax optic 1074 may be arranged to provide window array 1062 with horizontal extent by means of spatial multiplexing with the spatial light modulator 1072. In a fourth phase light source 1079 may provide window 1064 around the left pupil 1054 and parallax optic 1074 may be arranged to provide window array 1062 with horizontal extent by means of spatial multiplexing with the spatial light modulator 1072. Advantageously separate window arrays may be provided for left and right eyes of the observer to achieve accommodation correction while maintaining display resolution.

Advantageously small pitch of optical windows in the arrays 1058 may be provided by small separation of light sources in the array of light sources 1076 without loss of image resolution.

It may be desirable to provide correction of accommodation in horizontal and vertical axes at the same time to advantageously improve image sharpness.

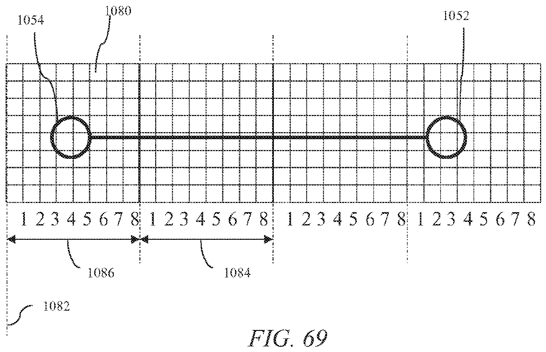

**FIGURE 69** is a schematic diagram illustrating in front view a two dimensional array of optical windows and aligned eyes 1052, 1054 of an observer, each eye comprising multiple optical windows. The shape of the optical windows 1080 may be determined by the shape of image pixels of an autostereoscopic display. Alternatively the optical windows may be provided by a directional backlight in a first direction and a parallax optic in a second direction. Typically parallax optics may provide multiple lobes 1084, 1086 with lobe boundaries 1082, in which the window data repeats.

Considering the lateral direction with respect to the observer's eye line, the right eye pupil 1052 may be in window columns 3,4,5 as shown whereas the left eye pupil 1054 may be in window columns 2,3,4. Thus while correct data may be provided for the right eye, the left eye will see incorrect data. It may be desirable to achieve correction for both left and right eyes.

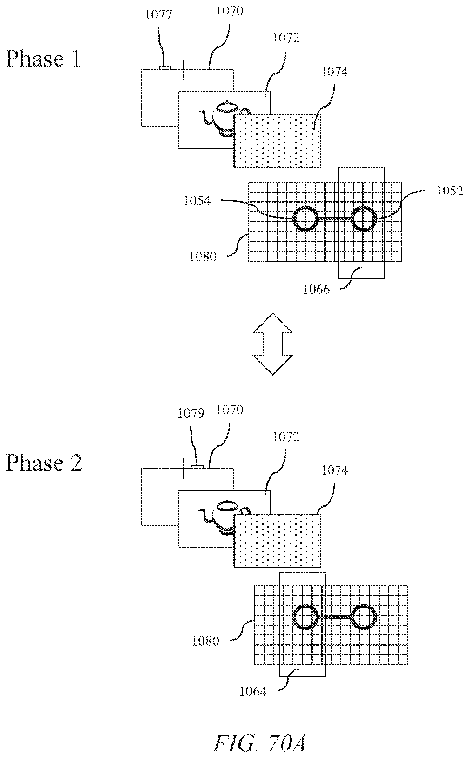

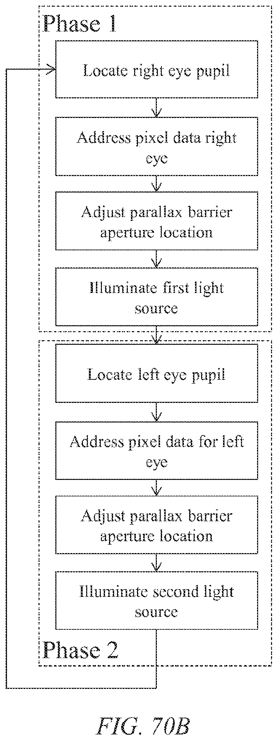

**FIGURE 70A** is a schematic diagram illustrating in perspective views a display apparatus arranged to correct accommodation conditions. **FIGURE 70B** is a flow chart further illustrating the operation of FIGURE 70A. A display may comprise a directional backlight 1070, a spatial light modulator 1072 and a parallax optic 1074 according to the present embodiments described herein. The parallax optic 1074 may comprise an aperture array or microlens array arranged to provide a two dimensional array 1080 of optical windows. The windows may be arranged to repeat in lobes and so may overlap with both left and right eyes.

Optical windows 1064, 1066. An observer tracking apparatus may be arranged to locate the position of left and right eye pupils. In a first phase window 1066 may be provided by light source 1077 so that window array 1080 is visible to the right eye. In a second phase window 1064 may be provided by light source 1079 so that window array 1080 is visible to the left eye. The composition of left and right eye window arrays may be adjusted in accordance with the image content, eye position in the window array 1080 and visual correction required by the user. The first and second phases may be multiplexed at 120Hz for example. Accommodation adjustment may be provided for left and right eyes to provide two dimensional or three dimensional images.

Further, the parallax optic may be adjusted to direct the correct optical windows to the observer's eyes. For example, a small number of windows may be provided within each lobe 1084, 1086 to advantageously improve resolution. The parallax optic aperture location may be adjusted in a first phase to direct the optical windows 1080 to the correct position in the pupil 1052 for a right eye in cooperation with the illumination from the directional backlight 1070. In a second phase the parallax optic aperture location may be adjusted to direct the optical windows 1080 to the correct position within the left eye pupil 1054 in cooperation with the illumination from the directional backlight 1070.

To optimize image resolution it may be desirable to provide a two dimensional array of viewing windows using elongate parallax optical elements and elongate optical windows from a directional backlight.

It may be desirable to provide accommodation correction for spatial light modulators with relatively slow response speed, such as 60Hz.

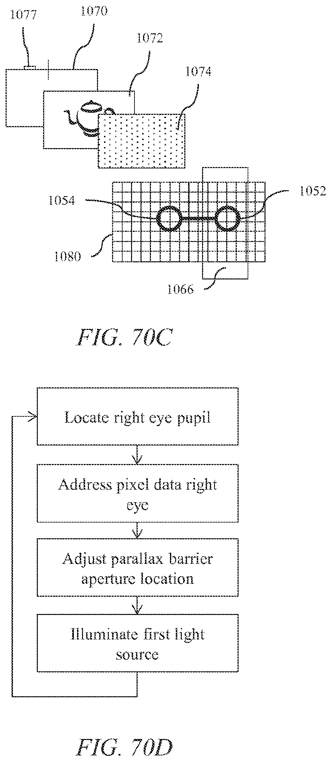

**FIGURE 70C** is a schematic diagram illustrating a monocular illumination system that operates in the same manner as the first phase of FIGURE 70A, and FIGURE 70D is a flow diagram illustrating operation of FIGURE 70C. Advantageously the right eye pupil 1052 may receive the correct accommodation cues and the left eye 1054 may receive substantially no light, thus not providing conflicting accommodation cues. Further the pupil may be tracked with illumination and image data to allow for a moving observer with respect to the display, using a slow response speed spatial light modulator 1072.

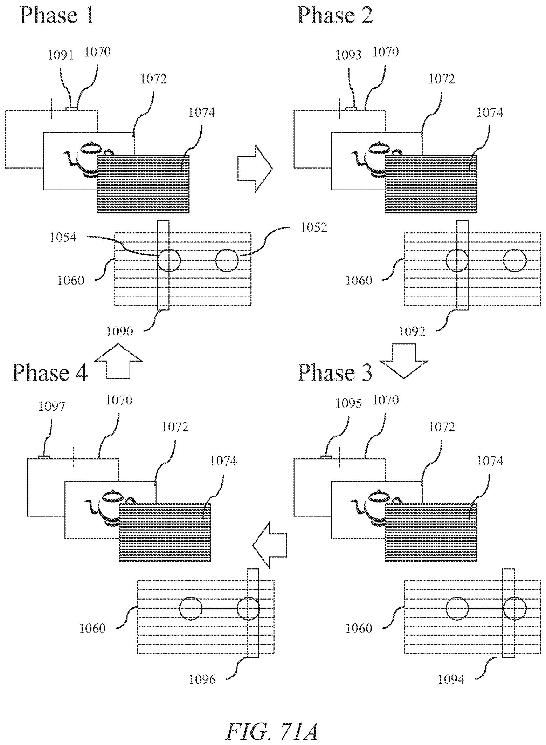

**FIGURE 71A** is a schematic diagram illustrating in perspective views a further display apparatus arranged to correct accommodation conditions for left and right eyes.

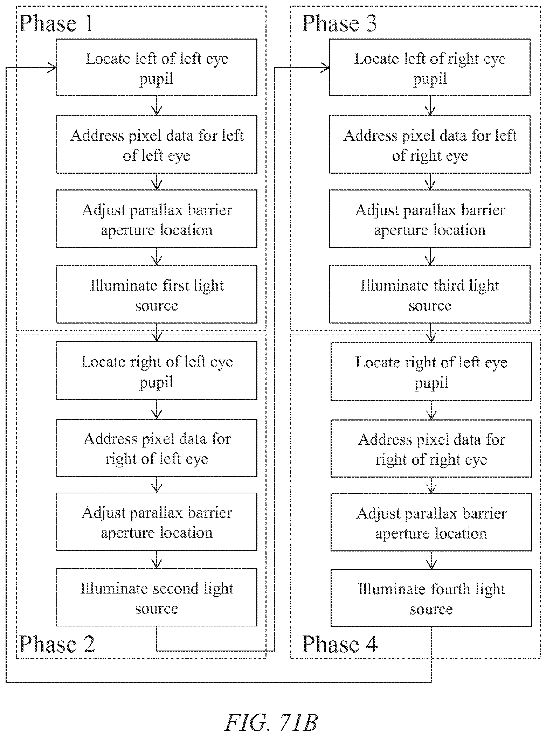

**FIGURE 71B** is a flow chart further illustrating the operation of FIGURE 71A. A parallax element 1074 may be arranged to provide an array of viewing windows 1060 with horizontal extent. In a first phase, the left portion of the pupil 1054 may be provided with a first set of windows from the parallax element 1074 by illumination of optical window 1090 provided by light source 1091 of the directional backlight 1070. In a second phase the right portion of the pupil 1054 may be provided with a second set of windows from the parallax element 1074 by illumination of optical window 1092 by light source 1093 of the directional backlight 1070 and updating the data on the spatial light modulator 1072 in correspondence with the position of the optical window 1092. Similarly in third and fourth phases, the right eye may be illuminated by viewing windows from the parallax element and optical windows 1094, 1096 from light sources 1095, 1097 of the directional backlight 1070 respectively. Thus the spatial light modulator update rate may be 240Hz for example. In this manner, multiple windows may be arranged across the pupils of the left and right eyes.

In the present embodiments the parallax optic may be a parallax barrier comprising an array of pinhole apertures or elongate apertures that may be a fixed position or a tracking barrier. Alternatively the parallax optic may be a microlens array or a lenticular array. The image data on the pixels of the spatial light modulator 1072 may be adjusted in cooperation with the position of the parallax optic and/or observer location in addition to providing visual correction.

In response to observer position and pupil 1052, 1054 location either the image data, the parallax barrier aperture location or both image and parallax barrier aperture location may be adjusted to provide appropriate images for left and right eyes for given head positions.

The parallax barrier may be a front barrier type, such as between the spatial light modulator and observer, or rear barrier type, such as wherein the spatial light modulator is between the parallax barrier and observer.

Advantageously a two dimensional array of viewing windows that may be directed to left and right eyes of an observer may be provided, achieving improved visual correction.

As may be used herein, the terms "substantially" and "approximately" provide an industry-accepted tolerance for its corresponding term and/or relativity between items. Such an industry-accepted tolerance ranges from zero percent to ten percent and corresponds to, but is not limited to, component values, angles, et cetera. Such relativity between items ranges between approximately zero percent to ten percent.

While various embodiments in accordance with the principles disclosed herein have been described above, it should be understood that they have been presented by way of example only, and not limitation. Thus, the breadth and scope of this disclosure should not be limited by any of the above-described exemplary embodiments, but should be defined only in accordance with any claims and their equivalents issuing from this disclosure. Furthermore, the above advantages and features are provided in described embodiments, but shall not limit the application of such issued claims to processes and structures accomplishing any or all of the above advantages.

Additionally, the section headings herein are provided for consistency with the suggestions under 37 CFR 1.77 or otherwise to provide organizational cues. These headings shall not limit or characterize the embodiment(s) set out in any claims that may issue from this disclosure. Specifically and by way of example, although the headings refer to a "Technical Field," the claims should not be limited by the language chosen under this heading to describe the so-called field. Further, a description of a technology in the "Background" is not to be construed as an admission that certain technology is prior art to any embodiment(s) in this disclosure. Neither is the "Summary" to be considered as a characterization of the embodiment(s) set forth in issued claims. Furthermore, any reference in this disclosure to "invention" in the singular should not be used to argue that there is only a single point of novelty in this disclosure. Multiple embodiments may be set forth according to the limitations of the multiple claims issuing from this disclosure, and such claims accordingly define the embodiment(s), and their equivalents, that are protected thereby. In all instances, the scope of such claims shall be considered on their own merits in light of this disclosure, but should not be constrained by the headings set forth herein.

## Claims

1. A directional display device comprising:
a directional backlight comprising
a waveguide (1) comprising first and second, opposed guide surfaces (6, 8) for guiding input light along the waveguide (1), and
an array of light sources (15) arranged to generate the input light at different input positions in a lateral direction across the waveguide(1),
wherein the second guide surface (8) is arranged to deflect light guided through the waveguide (1) out of the waveguide (1) through the first guide surface (6) as output light, and the waveguide (1) is arranged to direct the output light into optical windows in output directions that are distributed in a lateral direction in dependence on the input position of the input light; and
a transmissive spatial light modulator (48) comprising an array of pixels arranged to receive the output light from the waveguide (1) and to modulate it to display an image
**characterised by** further comprising, in series with the spatial light modulator (48), a parallax element (100) arranged to direct light from pixels of the spatial light modulator (48) into viewing windows.

2. A directional display device according to claim 1, wherein the parallax element (100) is a parallax barrier.

3. A directional display device according to claim 1, wherein the parallax element (100) is a liquid crystal lenticular array.

4. A directional display device according to any one of the preceding claims, wherein the parallax element (100) is controllable to select the position of the viewing windows.

5. A directional display device according to claim 2, wherein the parallax element (100) is a liquid crystal barrier element array comprising an array of barrier elements (150) that are controllable to block or transmit light, and thereby to select the position of the viewing windows.

6. A directional display device according to claim 3, wherein the parallax element (100) is a graded index liquid crystal lenticular array.

7. A directional display device according to claim 3, further comprising a polarization switching element (470) arranged to switch at least part of the liquid crystal lenticular array between transmitting and lensing modes of operation.

8. A directional display device according to any one of the preceding claims, wherein the parallax element (100) and the spatial light modulator (48) cooperate to produce viewing windows having a lateral window luminance distribution that is non-uniform, and the directional backlight is arranged to produce optical windows having a lateral window luminance distribution that is non-uniform and compensates for the non-uniformity of the lateral window luminance distribution of the viewing windows.

9. A directional display device according to any one of the preceding claims, wherein
the first guide surface (6) is arranged to guide light by total internal reflection and the second guide surface (8) has a stepped shape comprising a plurality of facets (12) that are light extraction features oriented to direct light guided through the waveguide (1) in directions allowing exit through the first guide surface (6) as the output light and intermediate regions (10) between the light extraction features (12) that are arranged to guide light through the waveguide (1), and
the waveguide (1) further comprises a reflective end (4) for reflecting input light back through the waveguide (1), the second guide surface (8) being arranged to deflect light as output light through the first guide surface (6) after reflection from the reflective end (4), the reflective end (4) having positive optical power in the lateral direction.

10. A directional display device according to claim 9, wherein the directional backlight further comprises a rear reflector (300) comprising a linear array of reflective facets (310) arranged to reflect light from the light sources (15), that is transmitted through the plurality of facets of the waveguide (1), back through the waveguide (1) to exit through the first guide surface (6) into said optical windows.

11. A directional display apparatus comprising:
a directional display device according to any one of the preceding claims; and
a control system (72) arranged to control the light sources (15) to direct light into optical windows for viewing by an observer.

12. A directional display apparatus according to claim 11, being an autostereoscopic directional display apparatus wherein:
the parallax element (100) is arranged to direct light from first and second sets of spatially multiplexed pixels into left and right eye viewing windows for viewing by left and right eyes of the observer, the parallax element (100) being controllable to select the position of the viewing windows;
the control system (72) is arranged to control the spatial light modulator (48) to display left and right eye images on the first and second sets of spatially multiplexed pixels;
the control system (72) is arranged to control the light sources (15) to direct light into an optical window for viewing by both the left and right eyes of the observer; and
the control system (72) is further arranged to control the parallax element (100) to direct light into the left and right viewing windows.

13. A directional display apparatus according to claim 11, being an autostereoscopic directional display apparatus wherein:
the parallax element (100) is controllable to select the position of the viewing windows;
the control system (72) is arranged to control the parallax element (100) to direct light, in a temporally multiplexed manner, (a) from first and second sets of spatially multiplexed pixels into left and right eye viewing windows for viewing by left and right eyes of the observer, and (b) from the first and second sets of pixels into reversed right and left eye viewing windows for viewing by right and left eyes of the observer,
the control system (72) is arranged to control the spatial light modulator (48) to display, in a temporally multiplexed manner in synchronisation with the control of the parallax element (100), (a) left and right eye images on the first and second sets of spatially multiplexed pixels, respectively, when light therefrom is directed into the left and right eye viewing windows, and (b) right and left eye images on the first and second sets of spatially multiplexed pixels, respectively, when light therefrom is directed into the reversed right and left eye viewing windows; and
the control system (72) is arranged to control the light sources to direct light into an optical window for viewing by both eyes of the observer.

14. A directional display apparatus according to claim 11, being an autostereoscopic directional display apparatus wherein:
the parallax element (100) is arranged to direct light from first and second sets of spatially multiplexed pixels into left and right eye viewing windows for viewing by left and right eyes of the observer;
the control system (72) is arranged to control the light sources (15) to direct light, in a temporally multiplexed manner, into left and right eye optical windows for viewing by the left and right eyes of the observer; and
the control system (72) is arranged to control the spatial light modulator (48) to display, in a temporally multiplexed manner in synchronisation with the control of the light sources (15), (a) a left eye image and a blank image on the first and second sets of pixels, respectively, when the light sources (15) direct light into the left eye optical window, and (b) a blank image and a right eye image on the first and second sets of pixels, respectively, when the light sources (15) direct light into the right eye optical window.

15. A directional display apparatus according to claim 14, wherein
the parallax element (100) is controllable to select the position of the viewing windows, and
the control system (72) is further arranged to control the parallax element (100) to direct light into the left and right viewing windows.

16. A directional display apparatus according to claim 11, being an autostereoscopic directional display apparatus wherein:
the parallax element (100) is controllable to select the position of the viewing windows;
the control system (72) is arranged to control the parallax element (100) to direct light, in a temporally multiplexed manner, (i) from first and second sets of spatially multiplexed pixels into left and right eye viewing windows, respectively, for viewing by left and right eyes of the observer, and (ii) from the first and second sets of spatially multiplexed pixels into right and left eye viewing windows, respectively, for viewing by right and left eyes of the observer;
the control system (72) is arranged to control the light sources (15) (i) while the parallax element (100) directs light from the first set of pixels into the left eye viewing window and from the second set of pixels into the right eye viewing window, to direct light, in a temporally multiplexed manner, into left and right eye optical windows for viewing by the left and right eyes of the observer, and (ii) also while the parallax element (100) directs light from the first set of pixels into the right eye viewing window and from the second set of pixels into the left eye viewing window, to direct light, in a temporally multiplexed manner, into left and right eye optical windows for viewing by the left and right eyes of the observer; and
the control system (72) is arranged to control the spatial light modulator (48) (i) while the parallax element (100) directs light from the first set of pixels into the left eye viewing window and from the second set of pixels into the right eye viewing window, to display, in a temporally multiplexed manner in synchronisation with the control of the light sources (15), (a) a left eye image and a blank image on the first and second sets of pixels, respectively, when the light sources (15) direct light into the left eye optical window, and (b) a blank image and a right eye image on the first and second sets of pixels, respectively, when the light sources (15) direct light into the right eye optical window, and (ii) while the parallax element (100) directs light from the first set of pixels into the right eye viewing window and from the second set of pixels into the left eye viewing window, to display, in a temporally multiplexed manner in synchronisation with the control of the light sources (15), (a) a blank eye image and a left image on the first and second sets of pixels, respectively, when the light sources (15) direct light into the left eye optical window, and (b) a right image and a blank eye image on the first and second sets of pixels, respectively, when the light sources (15) direct light into the right eye optical window.

17. A directional display apparatus according to claim 11, being an autostereoscopic directional display apparatus wherein:
the parallax element (100) is controllable to select the position of the viewing windows;
the control system (72) is arranged to control the parallax element (100) to direct light, in a temporally multiplexed manner, (i) from a first set of pixels, that is spatially multiplexed with a second set of pixels, into a left eye viewing window for viewing by a left eye of an observer, and (ii) from the first set of pixels into a right eye viewing window for viewing by a right eye of the observer;
the control system (72) is arranged to control the light sources (15), in a temporally multiplexed manner in synchronization with the control of the parallax element (100), (i) into a left eye optical window for viewing by the left eye of the observer when the parallax element (100) directs light from the first set of pixels into the left eye viewing window, and (ii) into a right eye optical window for viewing by the right eye of the observer when the parallax element (100) directs light from the first set of pixels into the right eye viewing window; and
the control system (72) is arranged to control the spatial light modulator (48) to display, in a temporally multiplexed manner in synchronization with the control of the parallax element (100), (i) a left eye image and a blank image on the first and second sets of pixels, respectively, when the parallax element (100) directs light from the first set of pixels into the left eye viewing window, and (ii) a right eye image and a blank image on the first and second sets of pixels, respectively, when the parallax element (100) directs light from the first set of pixels into the right eye viewing window.

18. A directional display apparatus according to claim 11, being an autostereoscopic directional display apparatus wherein:
the parallax element (100) is controllable to select the position of the viewing windows,
the control system (72) is arranged to control the parallax element (100) to direct light, in a temporally multiplexed manner, (a) from all the pixels into a left eye viewing window for viewing by the left eye of the observer, and (b) from all the pixels into a right eye viewing window for viewing by the right eye of the observer;
the control system (72) is arranged to control the light sources (15) to direct light, in a temporally multiplexed manner in synchronisation with the control of the parallax element (100), into left and right eye optical windows for viewing by the left and right eyes of the observer; and
the control system (72) is arranged to control the spatial light modulator (48) to display, in a temporally multiplexed manner in synchronisation with the control of the parallax element (100) and the light sources (15), (a) a left eye image on all the pixels when the parallax element (100) directs light into the left eye viewing window, and (b) a right eye image on all the pixels when the parallax element (100) directs light into the right eye optical window.

## Patentansprüche

1. Richtungsanzeigevorrichtung, umfassend:
ein Richtungshintergrundlicht, umfassend:
einen Wellenleiter (1), umfassend erste und zweite, einander gegenüberliegende Führungsoberflächen (6, 8) zum Führen von Eingangslicht entlang des Wellenleiters (1), und
ein Array von Lichtquellen (15), die derart angeordnet sind, dass sie das Eingangslicht an verschiedenen Eingangspositionen in einer seitlichen Richtung über den Wellenleiter (1) erzeugen,
wobei die zweite Führungsoberfläche (8) derart angeordnet ist, dass sie durch den Wellenleiter (1) geführtes Licht durch die erste Führungsoberfläche (6) als Ausgangslicht aus dem Wellenleiter (1) ablenkt, und der Wellenleiter (1) derart angeordnet ist, dass er das Ausgangslicht in optische Fenster in Ausgangsrichtungen lenkt, die in Abhängigkeit von der Eingangsposition des Eingangslichts in einer seitlichen Richtung verteilt sind; und
einen transmissiven räumlichen Lichtmodulator (48), der ein Array von Pixeln umfasst, die derart angeordnet sind, dass sie das Ausgangslicht von dem Wellenleiter (1) empfangen und es modulieren, um ein Bild anzuzeigen
**gekennzeichnet durch** das weitere Umfassen in Reihe mit dem räumlichen Lichtmodulator (48) eines Parallaxenelements (100), das derart angeordnet ist, dass es Licht von Pixeln des räumlichen Lichtmodulators (48) in Sichtfenster leitet.

2. Richtungsanzeigevorrichtung nach Anspruch 1, wobei das Parallaxenelement (100) eine Parallaxenbarriere ist.

3. Richtungsanzeigevorrichtung nach Anspruch 1, wobei das Parallaxenelement (100) ein linsenförmiges Flüssigkristallarray ist.

4. Richtungsanzeigevorrichtung nach einem der vorhergehenden Ansprüche, wobei das Parallaxenelement (100) steuerbar ist, um die Position der Sichtfenster auszuwählen.

5. Richtungsanzeigevorrichtung nach Anspruch 2, wobei das Parallaxenelement (100) ein Flüssigkristallbarriereelementarray ist, das ein Array von Barriereelementen (150) umfasst, die steuerbar sind, um Licht zu blockieren oder zu übertragen und dadurch die Position der Sichtfenster auszuwählen.

6. Richtungsanzeigevorrichtung nach Anspruch 3, wobei das Parallaxenelement (100) ein größensortiertes linsenförmiges Flüssigkristallarray ist.

7. Richtungsanzeigevorrichtung nach Anspruch 3, die ferner ein Polarisationsschaltelement (470) umfasst, das derart angeordnet ist, dass es wenigstens einen Teil des linsenförmigen Flüssigkristallarrays zwischen einem Übertragungs- und einem Ausdünnbetriebmodus umschaltet.

8. Richtungsanzeigevorrichtung nach einem der vorhergehenden Ansprüche, wobei das Parallaxenelement (100) und der räumliche Lichtmodulator (48) zusammenwirken, um Sichtfenster mit einer seitlichen Fensterluminanzverteilung zu erzeugen, die ungleichmäßig ist, und das Richtungshintergrundlicht derart angeordnet ist, dass es optische Fenster mit einer seitlichen Fensterluminanzverteilung erzeugt, die ungleichmäßig ist, und die Ungleichmäßigkeit der seitlichen Fensterluminanzverteilung der Sichtfenster kompensiert.

9. Richtungsanzeigevorrichtung nach einem der vorhergehenden Ansprüche, wobei
die erste Führungsoberfläche (6) derart angeordnet ist, dass sie Licht durch interne Totalreflexion führt und die zweite Führungsoberfläche (8) eine gestufte Form aufweist, die eine Mehrzahl von Facetten (12), die Lichtextraktionsmerkmale sind, die derart ausgerichtet sind, dass sie durch den Wellenleiter (1) geführtes Licht in Richtungen lenken, die den Austritt durch die erste Führungsoberfläche (6) als das Ausgangslicht ermöglichen, und Zwischenbereiche (10) zwischen den Lichtextraktionsmerkmalen (12) umfasst, die derart angeordnet sind, dass sie Licht durch den Wellenleiter (1) führen, und
der Wellenleiter (1) ferner ein reflektierendes Ende (4) zum Reflektieren von Eingangslicht zurück durch den Wellenleiter (1) umfasst, wobei die zweite Führungsoberfläche (8) derart angeordnet ist, dass sie Licht als Ausgangslicht durch die erste Führungsoberfläche (6) nach der Reflexion von dem reflektierenden Ende (4) ablenkt, wobei das reflektierende Ende (4) eine positive optische Leistung in der seitlichen Richtung aufweist.

10. Richtungsanzeigevorrichtung nach Anspruch 9, wobei das Richtungshintergrundlicht ferner einen hinteren Reflektor (300) umfasst, der ein lineares Array von reflektierenden Facetten (310) umfasst, die derart angeordnet sind, dass sie Licht von den Lichtquellen (15), das durch die Mehrzahl von Facetten des Wellenleiters (1) übertragen wird, zurück durch den Wellenleiter (1) reflektieren, um durch die erste Führungsoberfläche (6) in die optischen Fenster auszutreten.

11. Richtungsanzeigevorrichtung, umfassend:
eine Richtungsanzeigevorrichtung nach einem der vorhergehenden Ansprüche; und
ein Steuersystem (72), das derart angeordnet ist, dass es die Lichtquellen (15) steuert, um Licht in optische Fenster für die Betrachtung durch einen Beobachter zu lenken.

12. Richtungsanzeigevorrichtung nach Anspruch 11, die eine autostereoskopische Richtungsanzeigevorrichtung ist, wobei:
das Parallaxenelement (100) derart angeordnet ist, dass es Licht von einem ersten und einem zweiten Satz räumlich gemultiplexter Pixel in Sichtfenster für das linke und das rechte Auge für die Betrachtung durch das linke und das rechte Auge des Betrachters lenkt, wobei das Parallaxenelement (100) steuerbar ist, um die Position der Sichtfenster auszuwählen;
das Steuersystem (72) derart angeordnet ist, dass es den räumlichen Lichtmodulator (48) steuert, um Bilder für das linke und das rechte Auge auf dem ersten und dem zweiten Satz von räumlich gemultiplexten Pixeln anzuzeigen;
das Steuersystem (72) derart angeordnet ist, dass es die Lichtquellen (15) steuert, um Licht in ein optisches Fenster für die Betrachtung durch das linke und das rechte Auge des Betrachters zu lenken; und
das Steuersystem (72) ferner derart angeordnet ist, dass es das Parallaxenelement (100) steuert, um das Licht in das linke und das rechte Sichtfenster zu lenken.

13. Richtungsanzeigevorrichtung nach Anspruch 11, die eine autostereoskopische Richtungsanzeigevorrichtung ist, wobei:
das Parallaxenelement (100) steuerbar ist, um die Position der Sichtfenster auszuwählen;
das Steuersystem (72) derart angeordnet ist, dass es das Parallaxenelement (100) steuert, um Licht auf eine zeitlich gemultiplexte Weise (a) von einem ersten und einem zweiten Satz von räumlich gemultiplexten Pixeln in Sichtfenster für das linke und das rechte Auge für die Betrachtung durch das linke und das rechte Auge des Beobachters und (b) von dem ersten und dem zweiten Satz von Pixeln in umgekehrte Sichtfenster für das rechte und das linke Auge für die Betrachtung durch das rechte und das linke Auge des Beobachters zu lenken,
das Steuersystem (72) derart angeordnet ist, dass es den räumlichen Lichtmodulator (48) steuert, um auf eine zeitlich gemultiplexte Weise in Synchronisation mit der Steuerung des Parallaxenelements (100) (a) Bilder für das linke und das rechte Auge auf dem ersten beziehungsweise dem zweiten Satz von räumlich gemultiplexten Pixeln, wenn Licht davon in das Sichtfenster für das linke und das rechte Auge gelenkt wird, und (b) Bilder für das rechte und das linke Auge auf dem ersten beziehungsweise dem zweiten Satz von räumlich gemultiplexten Pixeln anzuzeigen, wenn das Licht davon in die umgekehrten Sichtfenster für das rechte und das linke Auge gelenkt wird; und
das Steuersystem (72) derart angeordnet ist, dass es die Lichtquellen steuert, um Licht in ein optisches Fenster für die Betrachtung durch beide Augen des Betrachters zu lenken.

14. Richtungsanzeigevorrichtung nach Anspruch 11, die eine autostereoskopische Richtungsanzeigevorrichtung ist, wobei:
das Parallaxenelement (100) derart angeordnet ist, dass es Licht von einem ersten und einem zweiten Satz räumlich gemultiplexter Pixel in Sichtfenster für das linke und das rechte Auge für die Betrachtung durch das linke und das rechte Auge des Betrachters lenkt;
das Steuersystem (72) derart angeordnet ist, dass es die Lichtquellen (15) steuert, um Licht auf eine zeitlich gemultiplexte Weise in optische Fenster für das linke und das rechte Auge für die Betrachtung durch das linke und das rechte Auge des Beobachters zu lenken; und
das Steuersystem (72) derart angeordnet ist, dass es den räumlichen Lichtmodulator (48) steuert, um auf eine zeitlich gemultiplexte Weise in Synchronisation mit der Steuerung der Lichtquellen (15) (a) ein Bild für das linke Auge und ein leeres Bild auf dem ersten beziehungsweise zweiten Satz von Pixeln, wenn die Lichtquellen (15) Licht in das optische Fenster für das linke Auge lenken, und (b) ein leeres Bild und ein Bild für das rechte Auge auf dem ersten beziehungsweise zweiten Satz von Pixeln anzuzeigen, wenn die Lichtquellen (15) Licht in das optische Fenster des rechten Auges lenken.

15. Richtungsanzeigevorrichtung nach Anspruch 14, wobei
das Parallaxenelement (100) steuerbar ist, um die Position der Sichtfenster auszuwählen; und
das Steuersystem (72) ferner derart angeordnet, dass es das Parallaxenelement (100) steuert, um das Licht in das linke und das rechte Sichtfenster zu lenken.

16. Richtungsanzeigevorrichtung nach Anspruch 11, die eine autostereoskopische Richtungsanzeigevorrichtung ist, wobei:
das Parallaxenelement (100) steuerbar ist, um die Position der Sichtfenster auszuwählen;
das Steuersystem (72) derart angeordnet ist, dass es das Parallaxenelement (100) steuert, um Licht auf eine zeitlich gemultiplexte Weise (i) von einem ersten und einem zweiten Satz von räumlich gemultiplexten Pixeln in Sichtfenster für das linke beziehungsweise das rechte Auge für die Betrachtung durch das linke und das rechte Auge des Beobachters und (ii) von dem ersten und dem zweiten Satz von räumlich gemultiplexten Pixeln in Sichtfenster für das rechte beziehungsweise linke Auge für die Betrachtung durch das rechte und das linke Auge des Beobachters zu lenken;
das Steuersystem (72) derart angeordnet ist, dass es die Lichtquellen (15) steuert, (i) während das Parallaxenelement (100) Licht von dem ersten Satz von Pixeln in das Sichtfenster für das linke Auge und von dem zweiten Satz von Pixeln in das Sichtfenster für das rechte Auge lenkt, um Licht auf eine zeitlich gemultiplexte Weise in optische Fenster für das linke und das rechte Auge für die Betrachtung durch das linke und das rechte Auge des Beobachters zu lenken, und (ii) ebenso während das Parallaxenelement (100) Licht von dem ersten Satz von Pixeln in das Sichtfenster für das rechte Auge und von dem zweiten Satz von Pixeln in das Sichtfenster für das linke Auge lenkt, um Licht auf eine zeitlich gemultiplexte Weise in optische Fenster für das linke und das rechte Auge für die Betrachtung durch das linke und das rechte Auge des Beobachters zu lenken; und
das Steuersystem (72) derart angeordnet ist, dass es den räumlichen Lichtmodulator (48) steuert, (i) während das Parallaxenelement (100) Licht von dem ersten Satz von Pixeln in das Sichtfenster für das linke Auge und von dem zweiten Satz von Pixeln in das Sichtfenster für das rechte Auge lenkt, um auf eine zeitlich gemultiplexte Weise in Synchronisation mit der Steuerung der Lichtquellen (15), (a) ein Bild für das linke Auge und ein leeres Bild auf dem ersten beziehungsweise dem zweiten Satz von Pixeln, wenn die Lichtquellen (15) Licht in das optische Fenster für das linke Auge lenken, und (b) ein leeres Bild und ein Bild für das rechte Auge auf dem ersten beziehungsweise dem zweiten Satz von Pixeln anzuzeigen, wenn die Lichtquellen (15) Licht in das optische Fenster für das rechte Auge lenken, und (ii) während das Parallaxenelement (100) Licht von dem ersten Satz von Pixeln in das Sichtfenster für das rechte Auge und von dem zweiten Satz von Pixeln in das Sichtfenster für das linke Auge lenkt, um auf eine zeitlich gemultiplexte Weise in Synchronisation mit der Steuerung der Lichtquellen (15) (a) ein leeres Augenbild und ein linkes Bild auf dem ersten beziehungsweise dem zweiten Satz von Pixeln, wenn die Lichtquellen (15) Licht in das optische Fenster für das linke Auge lenken, und (b) ein rechtes Bild und ein leeres Augenbild auf dem ersten beziehungsweise dem zweiten Satz von Pixeln anzuzeigen, wenn die Lichtquellen (15) Licht in das optische Fenster für das rechten Auge lenken.

17. Richtungsanzeigevorrichtung nach Anspruch 11, die eine autostereoskopische Richtungsanzeigevorrichtung ist, wobei:
das Parallaxenelement (100) steuerbar ist, um die Position der Sichtfenster auszuwählen;
das Steuersystem (72) derart angeordnet ist, dass es das Parallaxenelement (100) steuert, um Licht auf eine zeitlich gemultiplexte Weise (i) von einem ersten Satz von Pixeln, der mit einem zweiten Satz von Pixeln räumlich gemultiplext ist, in ein Sichtfenster für das linke Auge für die Betrachtung durch ein linkes Auge eines Beobachters und (ii) von dem ersten Satz von Pixeln in ein Sichtfenster für das rechte Auge für die Betrachtung durch ein rechtes Auge des Beobachters zu lenken;
das Steuersystem (72) derart angeordnet ist, dass es die Lichtquellen (15) auf eine zeitlich gemultiplexte Weise in Synchronisation mit der Steuerung des Parallaxenelements (100) (i) in ein optisches Fenster für das linke Auge für die Betrachtung durch das linke Auge des Beobachters, wenn das Parallaxenelement (100) Licht von dem ersten Satz von Pixeln in das Sichtfenster für das linke Auge lenkt, und (ii) in ein optisches Fenster für das rechte Auge für die Betrachtung durch das rechte Auge des Beobachters steuert, wenn das Parallaxenelement (100) Licht von der ersten Gruppe von Pixeln in das Sichtfenster für das rechte Auge lenkt; und
das Steuersystem (72) derart angeordnet ist, dass es den räumlichen Lichtmodulator (48) steuert, um auf eine zeitlich gemultiplexte Weise in Synchronisation mit der Steuerung des Parallaxenelements (100) (i) ein Bild für das linke Auge und ein leeres Bild auf dem ersten beziehungsweise zweiten Satz von Pixeln, wenn das Parallaxenelement (100) Licht von dem ersten Satz von Pixeln in das Sichtfenster für das linke Auge lenkt, und (ii) ein Bild für das rechte Auge und ein leeres Bild auf dem ersten beziehungsweise zweiten Satz von Pixeln anzuzeigen, wenn das Parallaxenelement (100) Licht von dem ersten Satz von Pixeln in das Sichtfenster für das rechte Auge lenkt.

18. Richtungsanzeigevorrichtung nach Anspruch 11, die eine autostereoskopische Richtungsanzeigevorrichtung ist, wobei:
das Parallaxenelement (100) steuerbar ist, um die Position der Sichtfenster auszuwählen;
das Steuersystem (72) derart angeordnet ist, dass es das Parallaxenelement (100) steuert, um Licht auf eine zeitlich gemultiplexte Weise (a) von allen Pixeln in ein Sichtfenster für das linke Auge für die Betrachtung durch das linke Auge des Beobachters und (b) von allen Pixeln in ein Sichtfenster für das rechte Auge für die Betrachtung durch das rechte Auge des Beobachters zu lenken;
das Steuersystem (72) derart angeordnet ist, dass es die Lichtquellen (15) steuert, um Licht auf eine zeitlich gemultiplexte Weise in Synchronisation mit der Steuerung des Parallaxenelements (100) in optische Fenster für das linke und das rechte Auge für die Betrachtung durch das linke und das rechte Auge des Beobachters zu lenken; und
das Steuersystem (72) derart angeordnet ist, dass es den räumlichen Lichtmodulator (48) steuert, um auf eine zeitlich gemultiplexte Weise in Synchronisation mit der Steuerung des Parallaxenelements (100) und der Lichtquellen (15) (a) ein Bild für das linke Auge auf allen Pixeln, wenn das Parallaxenelement (100) Licht in das Sichtfenster für das linke Auge lenkt, und (b) ein Bild für das rechte Auge auf allen Pixeln anzuzeigen, wenn das Parallaxenelement (100) Licht in das optische Fenster für das rechte Auge lenkt.

## Revendications

1. Dispositif d'affichage directionnel, comprenant :
un rétro-éclairage directionnel comprenant
un guide d'ondes (1) comprenant des première et seconde surfaces de guide opposées (6, 8) pour guider une lumière d'entrée le long du guide d'ondes (1), et
un réseau de sources de lumière (15) agencées pour générer la lumière d'entrée à différentes positions d'entrée dans une direction latérale à travers le guide d'ondes (1),
dans lequel la seconde surface de guide (8) est agencée pour défléchir de la lumière guidée à travers le guide d'ondes (1) hors du guide d'ondes (1) à travers la première surface de guide (6) en tant que lumière de sortie, et le guide d'ondes (1) est agencé pour diriger la lumière de sortie dans des fenêtres optiques dans des directions de sortie qui sont distribuées dans une direction latérale en fonction de la position d'entrée de la lumière d'entrée ; et
un modulateur spatial de lumière transmissif (48) comprenant un réseau de pixels agencés pour recevoir la lumière de sortie à partir du guide d'ondes (1) et pour la moduler pour afficher une image,
**caractérisé en ce qu'**il comprend en outre, en série avec le modulateur spatial de lumière (48), un élément parallaxe (100) agencé pour diriger de la lumière, provenant de pixels du modulateur spatial de lumière (48), dans des fenêtres de visualisation.

2. Dispositif d'affichage directionnel selon la revendication 1, dans lequel l'élément parallaxe (100) est une barrière parallaxe.

3. Dispositif d'affichage directionnel selon la revendication 1, dans lequel l'élément parallaxe (100) est un réseau lenticulaire à cristaux liquides.

4. Dispositif d'affichage directionnel selon l'une quelconque des revendications précédentes, dans lequel l'élément parallaxe (100) peut être commandé pour sélectionner la position des fenêtres de visualisation.

5. Dispositif d'affichage directionnel selon la revendication 2, dans lequel l'élément parallaxe (100) est un réseau d'éléments barrières à cristaux liquides comprenant un réseau d'éléments barrières (150) qui peuvent être commandés pour bloquer ou transmettre de la lumière, et ainsi pour sélectionner la position des fenêtres de visualisation.

6. Dispositif d'affichage directionnel selon la revendication 3, dans lequel l'élément parallaxe (100) est un réseau lenticulaire à cristaux liquides à gradient d'indice.

7. Dispositif d'affichage directionnel selon la revendication 3, comprenant en outre un élément de commutation de polarisation (470) agencé pour commuter au moins une partie du réseau lenticulaire à cristaux liquides entre des modes de fonctionnement de transmission et d'application de lentille.

8. Dispositif d'affichage directionnel selon l'une quelconque des revendications précédentes, dans lequel l'élément parallaxe (100) et le modulateur spatial de lumière (48) coopèrent pour produire des fenêtres de visualisation ayant une distribution de lumière de fenêtre latérale qui est non uniforme, et le rétro-éclairage directionnel est agencé pour produire des fenêtres optiques ayant une distribution de lumière de fenêtre latérale qui est non uniforme et compense la non-uniformité de la distribution de lumière de fenêtre latérale des fenêtres de visualisation.

9. Dispositif d'affichage directionnel selon l'une quelconque des revendications précédentes, dans lequel
la première surface de guide (6) est agencée pour guider de la lumière par réflexion interne totale et la seconde surface de guide (8) a une forme gradée comprenant une pluralité de facettes (12) qui sont des organes d'extraction de lumière orientés pour diriger de la lumière guidée à travers le guide d'ondes (1) dans des directions permettant la sortie à travers la première surface de guide (6) en tant que lumière de sortie et des régions intermédiaires (10), entre les organes d'extraction de lumière (12), qui sont agencées pour guider de la lumière à travers le guide d'ondes (1), et
le guide d'ondes (1) comprend en outre une extrémité réfléchissante (4) pour réfléchir de la lumière d'entrée en retour à travers le guide d'ondes (1), la seconde surface de guide (8) étant agencée pour défléchir de la lumière en tant que lumière de sortie à travers la première surface de guide (6) après la réflexion depuis l'extrémité réfléchissante (4), l'extrémité réfléchissante (4) ayant une puissance optique positive dans la direction latérale.

10. Dispositif d'affichage directionnel selon la revendication 9, dans lequel le rétro-éclairage directionnel comprend en outre un réflecteur arrière (300) comprenant un réseau linéaire de facettes réfléchissantes (310) agencées pour refléter de la lumière provenant des sources de lumière (15), qui est transmise à travers la pluralité de facettes du guide d'ondes (1), en retour à travers le guide d'ondes (1), pour sortir à travers la première surface de guide (6), dans lesdites fenêtres optiques.

11. Appareil d'affichage directionnel, comprenant :
un dispositif d'affichage directionnel selon l'une quelconque des revendications précédentes ; et
un système de commande (72) agencé pour commander les sources de lumière (15) pour diriger de la lumière dans des fenêtres optiques pour la visualisation par un observateur.

12. Appareil d'affichage directionnel selon la revendication 11, étant un appareil d'affichage directionnel autostéréoscopique, dans lequel :
l'élément parallaxe (100) est agencé pour diriger de la lumière, provenant de premier et second ensembles de pixels spatialement multiplexés, dans des fenêtres de visualisation pour yeux gauche et droit, pour la visualisation par des yeux gauche et droit de l'observateur, l'élément parallaxe (100) pouvant être commandé pour sélectionner la position des fenêtres de visualisation ;
le système de commande (72) est agencé pour commander le modulateur spatial de lumière (48) pour afficher des images pour yeux gauche et droit sur les premier et second ensembles de pixels spatialement multiplexés ;
le système de commande (72) est agencé pour commander les sources de lumière (15) pour diriger de la lumière dans une fenêtre optique pour la visualisation par les deux yeux, gauche et droit, de l'observateur ; et
le système de commande (72) est en outre agencé pour commander l'élément parallaxe (100) pour diriger de la lumière dans les fenêtres de visualisation gauche et droite.

13. Appareil d'affichage directionnel selon la revendication 11, étant un appareil d'affichage directionnel autostéréoscopique, dans lequel :
l'élément parallaxe (100) peut être commandé pour sélectionner la position des fenêtres de visualisation ;
le système de commande (72) est agencé pour commander l'élément parallaxe (100) pour diriger de la lumière, de manière temporellement multiplexée, (a) provenant de premier et second ensembles de pixels spatialement multiplexés, dans des fenêtres de visualisation pour yeux gauche et droit, pour la visualisation par des yeux gauche et droit de l'observateur, et, (b) provenant des premier et second ensembles de pixels, dans des fenêtres de visualisation inversées pour yeux droit et gauche, pour la visualisation par des yeux droit et gauche de l'observateur,
le système de commande (72) est agencé pour commander le modulateur spatial de lumière (48) pour afficher, de manière temporellement multiplexée, en synchronisation avec la commande de l'élément parallaxe (100), (a) des images pour yeux gauche et droit sur les premier et second ensembles de pixels spatialement multiplexés, respectivement, lorsque de la lumière provenant de ceux-ci est dirigée dans les fenêtres de visualisation pour yeux gauche et droit, et (b) des images pour yeux droit et gauche sur les premier et second ensembles de pixels spatialement multiplexés, respectivement, lorsque de la lumière provenant de ceux-ci est dirigée dans les fenêtres de visualisation inversées pour yeux droit et gauche ; et
le système de commande (72) est agencé pour commander les sources de lumière pour diriger de la lumière dans une fenêtre optique, pour la visualisation par les deux yeux de l'observateur.

14. Appareil d'affichage directionnel selon la revendication 11, étant un appareil d'affichage directionnel autostéréoscopique, dans lequel :
l'élément parallaxe (100) est agencé pour diriger de la lumière, provenant de premier et second ensembles de pixels spatialement multiplexés, dans des fenêtres de visualisation pour yeux gauche et droit, pour la visualisation par des yeux gauche et droit de l'observateur ;
le système de commande (72) est agencé pour commander les sources de lumière (15) pour diriger de la lumière, de manière temporellement multiplexée, dans des fenêtres optiques pour yeux gauche et droit, pour la visualisation par les yeux gauche et droit de l'observateur ; et
le système de commande (72) est agencé pour commander le modulateur spatial de lumière (48) pour afficher, de manière temporellement multiplexée, en synchronisation avec la commande des sources de lumière (15), (a) une image pour œil gauche et une image vierge sur les premier et second ensembles de pixels, respectivement, lorsque les sources de lumière (15) dirigent de la lumière dans la fenêtre optique pour œil gauche, et (b) une image vierge et une image pour œil droit sur les premier et second ensembles de pixels, respectivement, lorsque les sources de lumière (15) dirigent de la lumière dans la fenêtre optique pour œil droit.

15. Appareil d'affichage directionnel selon la revendication 14, dans lequel
l'élément parallaxe (100) peut être commandé pour sélectionner la position des fenêtres de visualisation, et
le système de commande (72) est en outre agencé pour commander l'élément parallaxe (100) pour diriger de la lumière dans les fenêtres de visualisation gauche et droite.

16. Appareil d'affichage directionnel selon la revendication 11, étant un appareil d'affichage directionnel autostéréoscopique, dans lequel :
l'élément parallaxe (100) peut être commandé pour sélectionner la position des fenêtres de visualisation ;
le système de commande (72) est agencé pour commander l'élément parallaxe (100) pour diriger de la lumière, de manière temporellement multiplexée, (i) provenant de premier et second ensembles de pixels spatialement multiplexés, dans des fenêtres de visualisation pour yeux gauche et droit, respectivement, pour la visualisation par des yeux gauche et droit de l'observateur, et(ii) provenant des premier et second ensembles de pixels spatialement multiplexés, dans des fenêtres de visualisation pour yeux droit et gauche, respectivement, pour la visualisation par des yeux droit et gauche de l'observateur ;
le système de commande (72) est agencé pour commander les sources de lumière (15) (i) alors que l'élément parallaxe (100) dirige de la lumière, provenant du premier ensemble de pixels, dans la fenêtre de visualisation pour œil gauche, et provenant du second ensemble de pixels, dans la fenêtre de visualisation pour œil droit, pour diriger de la lumière, de manière temporellement multiplexée, dans des fenêtres optiques pour yeux gauche et droit, pour la visualisation par les yeux gauche et droit de l'observateur, et (ii) également alors que l'élément parallaxe (100) dirige de la lumière, provenant du premier ensemble de pixels, dans la fenêtre de visualisation pour œil droit, et provenant du second ensemble de pixels, dans la fenêtre de visualisation pour œil gauche, pour diriger de la lumière, de manière temporellement multiplexée, dans des fenêtres optiques pour yeux gauche et droit, pour la visualisation par les yeux gauche et droit de l'observateur ; et
le système de commande (72) est agencé pour commander le modulateur spatial de lumière (48) (i) alors que l'élément parallaxe (100) dirige de la lumière, provenant du premier ensemble de pixels, dans la fenêtre de visualisation pour œil gauche, et provenant du second ensemble de pixels, dans la fenêtre de visualisation pour œil droit, pour afficher, de manière temporellement multiplexée, en synchronisation avec la commande des sources de lumière (15), (a) une image pour œil gauche et une image vierge sur les premier et second ensembles de pixels, respectivement, lorsque les sources de lumière (15) dirigent de la lumière dans la fenêtre optique pour œil gauche, et (b) une image vierge et une image pour œil droit sur les premier et second ensembles de pixels, respectivement, lorsque les sources de lumière (15) dirigent de la lumière dans la fenêtre optique pour œil droit, et (ii) alors que l'élément parallaxe (100) dirige de la lumière, provenant du premier ensemble de pixels, dans la fenêtre de visualisation pour œil droit, et provenant du second ensemble de pixels, dans la fenêtre de visualisation pour œil gauche, pour afficher, de manière temporellement multiplexée, en synchronisation avec la commande des sources de lumière (15), (a) une image oculaire vierge et une image gauche sur les premier et second ensembles de pixels, respectivement, lorsque les sources de lumière (15) dirigent de la lumière dans la fenêtre optique pour œil gauche, et (b) une image droite et une image oculaire vierge sur les premier et second ensembles de pixels, respectivement, lorsque les sources de lumière (15) dirigent de la lumière dans la fenêtre optique pour œil droit.

17. Appareil d'affichage directionnel selon la revendication 11, étant un appareil d'affichage directionnel autostéréoscopique, dans lequel :
l'élément parallaxe (100) peut être commandé pour sélectionner la position des fenêtres de visualisation ;
le système de commande (72) est agencé pour commander l'élément parallaxe (100) pour diriger de la lumière, de manière temporellement multiplexée, (i) provenant d'un premier ensemble de pixels, qui est spatialement multiplexé avec un second ensemble de pixels, dans une fenêtre de visualisation pour œil gauche, pour la visualisation par un œil gauche d'un observateur, et (ii) provenant du premier ensemble de pixels, dans une fenêtre de visualisation pour œil droit, pour la visualisation par un œil droit de l'observateur ;
le système de commande (72) est agencé pour commander les sources de lumière (15), de manière temporellement multiplexée, en synchronisation avec la commande de l'élément parallaxe (100), (i) dans une fenêtre optique pour œil gauche, pour la visualisation par l'œil gauche de l'observateur, lorsque l'élément parallaxe (100) dirige de la lumière, provenant du premier ensemble de pixels, dans la fenêtre de visualisation pour œil gauche, et (ii) dans une fenêtre optique pour œil droit, pour la visualisation par l'œil droit de l'observateur, lorsque l'élément parallaxe (100) dirige de la lumière, provenant du premier ensemble de pixels, dans la fenêtre de visualisation pour œil droit ; et
le système de commande (72) est agencé pour commander le modulateur spatial de lumière (48) pour afficher, de manière temporellement multiplexée, en synchronisation avec la commande de l'élément parallaxe (100), (i) une image pour œil gauche et une image vierge sur les premier et second ensembles de pixels, respectivement, lorsque l'élément parallaxe (100) dirige de la lumière, provenant du premier ensemble de pixels, dans la fenêtre de visualisation pour œil gauche, et (ii) une image pour œil droit et un image vierge sur les premier et second ensembles de pixels, respectivement, lorsque l'élément parallaxe (100) dirige de la lumière, provenant du premier ensemble de pixels, dans la fenêtre de visualisation pour œil droit.

18. Appareil d'affichage directionnel selon la revendication 11, étant un appareil d'affichage directionnel autostéréoscopique, dans lequel :
l'élément parallaxe (100) peut être commandé pour sélectionner la position des fenêtres de visualisation,
le système de commande (72) est agencé pour commander l'élément parallaxe (100) pour diriger de la lumière, de manière temporellement multiplexée, (a) provenant de tous les pixels, dans une fenêtre de visualisation pour œil gauche, pour la visualisation par l'œil gauche de l'observateur, et (b) provenant de tous les pixels, dans une fenêtre de visualisation pour œil droit, pour la visualisation par l'œil droit de l'observateur ;
le système de commande (72) est agencé pour commander les sources de lumière (15) pour diriger de la lumière, de manière temporellement multiplexée, en synchronisation avec la commande de l'élément parallaxe (100), dans des fenêtres optiques pour yeux gauche et droit, pour la visualisation par les yeux gauche et droit de l'observateur ; et
le système de commande (72) est agencé pour commander le modulateur spatial de lumière (48) pour afficher, de manière temporellement multiplexée, en synchronisation avec la commande de l'élément parallaxe (100) et des sources de lumière (15), (a) une image pour œil gauche sur tous les pixels lorsque l'élément parallaxe (100) dirige de la lumière dans la fenêtre de visualisation pour œil gauche, et (b) une image pour œil droit sur tous les pixels lorsque l'élément parallaxe (100) dirige de la lumière dans la fenêtre optique pour œil droit.
